# FASCICULE DE BREVET EUROPEEN

(11) **EP 3 568 794 B1**
(45) Date de publication et mention de la délivrance du brevet: **13.03.2024**
(21) Numéro de dépôt: 18705491.1
(22) Date de dépôt: 16.01.2018
(51) Int. Cl.: G06F 21/51, H04L 9/40, H04L 9/32, H04L 9/00, G06Q 20/06, G06Q 20/36, G06Q 20/38, G09C 1/00

(54) **PROCÉDÉS ET SYSTÈMES POUR L'EXÉCUTION DE CONTRATS INTELLIGENTS DANS DES ENVIRONNEMENTS SÉCURISÉS**
VERFAHREN UND SYSTEME ZUR DURCHFÜHRUNG VON PROGRAMMEN IN SICHEREN UMGEBUNGEN
METHODS AND SYSTEMS FOR EXECUTING PROGRAMS IN SECURE ENVIRONMENTS

(30) Priorité: 16.01.2017 WO PCT/IB2017/050228; 03.02.2017 US 201762454370 P; 23.02.2017 US 201762462390 P
(43) Date de publication de la demande: 20.11.2019
(73) Titulaire: Maim, Enrico, 8835 Feusisberg (CH)
(72) Inventeur: Maim, Enrico, 8835 Feusisberg (CH)
(86) Numéro de dépôt international: PCT/IB2018/050247
(87) Numéro de publication internationale: WO 2018/131004

(56) Documents cités:
- WO-A2-2016/120826
- FR-A1- 3 035 248
- US-A1- 2016 275 461
- JOSHUA LIND ET AL: "Teechan: Payment Channels Using Trusted Execution Environments", ARXIV.ORG, CORNELL UNIVERSITY LIBRARY, 201 OLIN LIBRARY CORNELL UNIVERSITY ITHACA, NY 14853, 22 décembre 2016 (2016-12-22), XP080742528,
- Koi Luu: "Using Secure Hardware to Harden Casper for Greater Defense In Depth", , 14 janvier 2017 (2017-01-14), XP055469269, Extrait de l'Internet: URL:https://medium.com/@loiluu/casper-sgx- 8475e56244b [extrait le 2018-04-20]
- RAMI KHALIL ET AL: "Revive: Rebalancing Off-Blockchain Payment Networks", IACR, INTERNATIONAL ASSOCIATION FOR CRYPTOLOGIC RESEARCH , vol. 20170831:183812 29 août 2017 (2017-08-29), pages 1-15, XP061023902, Extrait de l'Internet: URL:http://eprint.iacr.org/2017/823.pdf [extrait le 2017-08-29]
- Andrew Miller ET AL: "Sprites and State Channels: Payment Networks that Go Faster than Lightning", , 30 novembre 2017 (2017-11-30), XP055489680, Extrait de l'Internet: URL:https://arxiv.org/pdf/1702.05812.pdf [extrait le 2018-07-03]
- Na: "NEM Technical Reference Version 1.0", , 15 mai 2015 (2015-05-15), XP055491061, Extrait de l'Internet: URL:https://web.archive.org/web/2017091404 2746/https://nem.io/wp-content/themes/nem/ files/NEM_techRef.pdf [extrait le 2018-07-09]
- MIRAJE GENTILAL ET AL: "TrustZone-backed bitcoin wallet", CRYPTOGRAPHY AND SECURITY IN COMPUTING SYSTEMS, ACM, 2 PENN PLAZA, SUITE 701 NEW YORK NY 10121-0701 USA, 24 janvier 2017 (2017-01-24), pages 25-28, XP058317237, DOI: 10.1145/3031836.3031841 ISBN: 978-1-4503-4869-0
- N Asokan ET AL: "Mobile Platform Security Trusted Execution Environments Summer School, 2014", , 7 septembre 2014 (2014-09-07), XP055202881, Extrait de l'Internet: URL:http://asokan.org/asokan/Padova2014/tu torial-mobileplatsec.pdf [extrait le 2015-07-16]
- ELEFTHERIOS KOKORIS-KOGIAS ET AL: "OmniLedger: A Secure, Scale-Out, Decentralized Ledger via Sharding", IACR, INTERNATIONAL ASSOCIATION FOR CRYPTOLOGIC RESEARCH , vol. 20171010:135000 11 mai 2017 (2017-05-11), pages 1-17, XP061023391, Extrait de l'Internet: URL:http://eprint.iacr.org/2017/406.pdf [extrait le 2017-05-11]
- Jan Johan Karst ET AL: "CONNECTING MULTIPLE DEVICES WITH BLOCKCHAIN IN THE INTERNET OF THINGS", , 5 janvier 2017 (2017-01-05), XP055489909, Extrait de l'Internet: URL:https://courses.cs.ut.ee/MTAT.03.323/2 016_fall/uploads/Main/002.pdf [extrait le 2018-07-03]
- Na: "Filament Security Overview Networking Devices at the Edge of Risk", , 1 avril 2017 (2017-04-01), XP055491328, Extrait de l'Internet: URL:https://filament.com/assets/downloads/ Filament%20Security.pdf [extrait le 2018-07-10]
- Joseph Poon ET AL: "Plasma: Scalable Autonomous Smart Contracts", , 11 août 2017 (2017-08-11), XP055491638, Extrait de l'Internet: URL:https://plasma.io/plasma.pdf
- Ming-Wei Shih ET AL: "T-SGX: Eradicating Controlled-Channel Attacks Against Enclave Programs", NDSS Symposium 2017, 1 January 2017 (2017-01-01), XP055689287, Reston, VA DOI: 10.14722/ndss.2017.23193 ISBN: 978-1-891562-46-4

## Description

### Domaine de l'invention

La présente invention concerne des procédés et systèmes utiles dans une architecture de noeuds en réseau, en général décentralisée, susceptible de réaliser des transactions entre eux sur la base de messages.

### Arrière-plan de l'invention et résumé

On notera ici que certaines parties de la description qui suit sont en langue anglaise, leur traduction fidèle en français étant à considérer comme faisant partie également de la description.

Par ailleurs, on se référera à la demande WO2016120826A2 au nom du demandeur.

On connaît déjà le modèle de confiance décentralisé de PGP (Web-of-Trust, 1992) permettant à des pairs d'agir en tant qu'introducteurs et validateurs de clés publiques et proposant une métrique de validation décentralisée d'une identité numérique, qui se focalisa sur les adresses emails des pairs en question. Depuis, d'autres approches ont été proposées pour établir l'identité sans l'autorité de certification (telles que par Carl Ellison en 1996). Par ailleurs, on connaît des procédés utilisant une approche « out-of-band channel » et nécessitant d'utiliser un terminal fiable pour réaliser un échange de clés publiques de manière sûre en présence du risque de « Man-in-the-Middle (MitM) attack », notamment le procédé SafeSlinger [http://www.netsec.ethz.ch/publications/papers/farb_safeslinger_mobicom2013.pdf] conçu pour optimiser le cas où chacun des utilisateurs d'un groupe, tel que dans un « key signing party », réalise un échange de clés avec tous les autres.

On vise tout d'abord à permettre une identification décentralisée à la fois plus simples et d'un usage plus large, et répondant directement aux besoins de mise en oeuvre d'engagements exécutables, de type « smart contracts » [https://en.wikipedia.org/wiki/Smart contract], aujourd'hui mis en oeuvre sur des protocoles de consensus, notamment dans un environnement sans permission (« permissionless ») où n'importe qui peut se joindre et quitter dynamiquement, et où il n'y a aucune connaissance a priori des noeuds de consensus, en s'appuyant en général sur des puzzles informatiques [Dwork & Naor, 1992 : http://www.hashcash.org/papers/pvp.pdf ; Back, 2002 : http://www.hashcash.org/papers/hashcash.pdf] pour contrer les « sybil attacks » et avec l'hypothèse qu'une majorité de la puissance de calcul est détenue par des participants honnêtes [Nakamoto, 2008: https://bitcoin.org/bitcoin.pdf]. L'état de la technique en matière de smart contracts est principalement représenté par le système Ethereum [https://github.com/ethereum/wiki/wiki/White-Paper].

On ne connaît pas de mise en oeuvre de « smart contracts » (sans tiers de confiance) dont la sécurité soit basée sur du matériel (« hardware ») de fabricants de confiance.

Les nouvelles architectures de processeurs tels que les processeurs ARM ou les processeurs les plus récents de la société Intel permettent d'utiliser des « trusted exécution environments » (TEE), tels que les enclaves SGX des processeurs Intel. Toutefois ces enclaves sont actuellement proposées seulement pour des protocoles plus légers basés sur la Blockchain. Par exemple, le protocole PoET proposé par Intel continue à se fonder sur une Blockchain.

Un aspect de la présente invention est de permettre d'utiliser des tels environnements sécurisés pour s'affranchir de la Blockchain ou la rendre facultative. Cet aspect vise plus précisément une mise en oeuvre sur du hardware qui soit à la portée d'un grand nombre de fabricants, afin d'atteindre une décentralisation même au niveau des fabricants eux-mêmes, et vise en outre à proposer des mécanismes d'identification décentralisée qui permettent de mitiger les sybil attacks (lorsqu'un adversaire engendre un nombre quelconque de nouveaux noeuds qu'il contrôle dans le réseau).

Un autre aspect est de pouvoir faire coopérer ensemble des entités de type wallet node et des entités de type unité sécurisée (TEE), notamment des enclaves de types SGX de processeurs Intel (dans la suite, le terme « enclave » désignera une telle enclave ou largement tout environnement TEE).

Grâce au hardware, on vise non seulement des avantages de rapidité (le consensus par blockchain est lent) et de coût (transaction fees), mais même des avantages qualitatifs qui sont exposés plus loin. L'approche blockchain implique par nature une structure de données centralisée mais répliquée à grande échelle. La décentralisation réelle que l'on propose élimine le besoin de « scaling » qui constitue le challenge le plus prioritaire de Bitcoin et Ethereum aujourd'hui.

On propose selon un premier aspect de la présente invention un procédé pour l'exécution sécurisée de programmes (smart contract) mis en oeuvre entre un premier WN (WN1) et un second WN (WN2), au moins le second WN étant mis en oeuvre dans une enclave d'un processeur, et les WN étant aptes à exécuter des programmes désignés dans des messages qui leur parviennent, le procédé comprenant les étapes suivantes :
a) envoi par WN1 à WN2 d'un pré-message,
b1) en réponse à ce pré-message, exécution dans l'enclave d'un premier programme (WNRoT),
b2) génération par l'enclave d'une attestation de l'authenticité dudit premier programme et de l'intégrité de son exécution,
b3) envoi de ladite attestation à WN1,
c) vérification par WN1 de ladite attestation,
d) en cas de vérification réussie, envoi par WN1 à WN2 d'un message destiné à provoquer l'exécution d'un programme donné dans WN2, et
e) exécution dudit programme dans WN2.

Des aspects préférés mais facultatifs sont les suivants :
* l'étape b2) comprend également la génération d'un nonce, l'étape b3) comprend également l'envoi dudit nonce à WN1, et le procédé comprend en outre avant l'étape d) une étape mise en oeuvre au niveau de WN1 de chiffrement du message à envoyer avec le nonce, et avant l'étape e), une étape mise en oeuvre au niveau de WN2 de décryptage dudit message chiffré.
* la désignation d'un programme à exécuter dans un WN s'effectue par un haché du contenu dudit programme.
* ledit pré-message contient une désignation dudit programme donné, en vue du pré-chargement dudit programme par WN2 dans une mémoire de travail.
* WN1 est également une enclave d'un processeur, et dans lequel à chaque réception d'un pré-message ou d'un message par WN2 en provenance de WN1, WN2 vérifie la présence dans ce pré-message ou message d'une attestation de l'authenticité et de l'intégrité d'exécution d'un programme exécuté dans WN1 et ayant provoqué l'envoi de ce pré-message ou message.
* le procédé comprend également :
   - entre les étapes a) et c), une étape de génération par WN2 d'une paire de clés publique/privée dérivées à partir d'une clé secrète de WN2 et de la désignation dudit programme donné,
   - avant l'étape d), une étape d'envoi de la clé dérivée publique à WN1,
   - avant l'étape d), une étape de chiffrement d'une partie data dudit message avec ladite clé dérivée publique dans WN1, et
   - après l'étape d), une étape de décryptage dans WN2 de ladite partie data avec la clé privée dérivée.
* ladite paire de clés dérivées est générée également à partir d'information de désignation contenue dans le pré-message.
* l'étape d'envoi de la clé dérivée publique à WN1 est mise en oeuvre lors de l'étape b3).

Selon un deuxième aspect de la présente invention on propose un procédé pour l'exécution sécurisée de programmes transactionnels mis en oeuvre entre un premier WN (WN1) et un second WN (WN2), WN1 et WN2 étant chacun soit une enclave d'un processeur, soit un SoC dédié, dans lequel les WN sont aptes à communiquer par messages transactionnels contenant une désignation du programme à exécuter dans le WN destinataire, et une paire de WN s'échangeant des messages transactionnels en exécutant tous deux un même programme dans des conditions sécurisées.

Selon un troisième aspect de la présente invention on propose un procédé pour sécuriser le fonctionnement d'un réseau de noeuds (WN) aptes à exécuter des programmes (WP) en réponse à la réception de messages (WM), les noeuds étant mis en oeuvre par une enclave d'un processeur ou par un SoC et les noeuds étant susceptibles d'être liés entre eux sur la base des valeurs de poids de connexion, comprenant les étapes suivantes :
- affecter à chaque noeud au moins un noeud contresignataire ayant vis-à-vis de lui un poids de connexion,
- au niveau de chaque noeud, maintenir une liste de noeuds contresignataires de noeuds susceptibles de recevoir des messages à partir du noeud en question, chaque noeud et ses noeuds contresignataires formant un ensemble de noeuds miroirs,
- valider ou autoriser un message entre un noeud émetteur et un noeud récepteur en fonction de contraintes de cohérence au niveau des noeuds miroirs auxquels appartiennent le noeud émetteur et/ou le noeud récepteur.

Dans un autre domaine (sujet *Lightning Network avec poids* dans la suite), on propose selon un quatrième aspect de la présente invention un système transactionnel à architecture répartie en peer-to-peer, mettant en oeuvre des transactions de transfert d'unités de compte entre noeuds émetteurs d'unités et noeuds receveurs d'unités, chaque transaction ayant en entrée un input se référant à un output d'une transaction précédente (ou plusieurs inputs se référant chacun à un output d'une transaction précédente) et ayant elle-même au moins un nouvel output spécifiant un nombre d'unités de compte et un noeud receveur, chaque transaction pouvant être validée en réponse à un broadcast, par insertion, dans une chaîne de blocs mémorisée de façon répartie entre au moins certains noeuds, d'au moins une signature de la transaction, au moins certains noeuds étant également aptes à s'échanger des unités de comptes par des transactions sans broadcast obligatoire via des canaux de paiement entre noeuds, chaque noeud disposant d'un canal (Ch(i,j)) avec un autre noeud possédant un *plafond* (C(i,j)) d'unités de compte transférables par ce canal sans nécessiter de broadcast, et un transfert d'unités de compte entre deux noeuds étant susceptible d'être effectué via une chaîne de noeuds ayant deux à deux un canal de paiement, caractérisé en ce que les noeuds possèdent des poids de connexion (W(i,j)) vis-à-vis d'autres noeuds, représentatifs d'un degré de confiance ou de proximité entre les noeuds ou des utilisateurs associés aux noeuds, et en ce qu'il comprend des moyens d'ajustement du plafond d'unités de compte d'un noeud donné sur un canal donné en fonction d'un poids de connexion dudit noeud vis-à-vis du noeud avec lequel il possède ledit canal donné.

Des aspects préférés mais facultatifs sont les suivants :
* l'ajustement comprend une augmentation du plafond en relation avec le poids.
* le poids d'un noeud vis-à-vis d'un autre est déterminé en fonction de l'existence de connexions réelles (IRL Connections) ou quasi-réelles dans les entourages des deux noeuds.

Selon un cinquième aspect de la présente invention (sujet *Poids de fabricant* dans la suite), on propose un système transactionnel à architecture répartie en peer-to-peer, pour exécuter des transactions sécurisées mettant en jeu des noeuds hardware (SoC ; enclave) susceptibles d'être fabriqués par des fabricants de façon décentralisée, chaque noeud ayant vis-à-vis d'un autre noeud un degré de confiance ou de proximité matérialisé notamment par un poids de connexion ou par un nombre de noeuds miroirs en commun entre les deux noeuds,
caractérisé en ce qu'il comprend des moyens pour affecter à chaque fabricant un poids de fabricant, et pour ajuster le degré de confiance d'un noeud hardware vis-à-vis d'un autre noeud (pas nécessairement hardware) en fonction du poids de fabricant du fabricant de ce noeud hardware.

Des aspects préférés mais facultatifs sont les suivants :
* le poids de fabricant est lié au nombre de noeuds hardware fabriqués par le fabricant en question.
* le poids de fabricant est lié au nombre de noeuds hardware actifs dans le système et fabriqués par le fabricant en question.
* le système comprend des moyens pour déterminer l'activité d'un noeud hardware en fonction de l'existence de transactions mettant en jeu ledit noeud.
* le système comprend des moyens pour déterminer l'activité d'un noeud hardware en fonction de l'existence d'interactions avec d'autres noeuds et de valeurs de poids de connexion des noeuds intervenant dans ces interactions.

On connaît par le document FR 3 035 248 A1 un processeur sécurisé ("SoC" in figure 1), apte à exécuter différents programmes ("Wallet Programs") et comprenant une unité de gestion cryptographique de mémoire (CMMU) avec chiffrement apte à assurer une exécution sécurisée de programmes. Dans l'unité CMMU est mémorisée ou dynamiquement régénérée de façon inaccessible autrement que par l'unité CMMU une clé secrète de chiffrement de programmes. L'unité CMMU est apte à mémoriser au moins un programme à exécuter, chiffré par l'unité CMMU à l'aide de ladite clé secrète et à générer un haché du ou de chaque programme permettant de retrouver le programme chiffré. Le processeur n'est apte à exécuter des programmes que sur commande de l'unité CMMU. Toujours selon cette antériorité, les interactions entre noeuds du réseau s'effectuent exclusivement par messages et les messages sont reçus/émis par l'unité CMMU exclusivement. Chaque message contient l'identification d'un certain programme WP à exécuter par le WN destinataire, identifié par son haché. En réponse à la réception d'un message, l'unité CMMU (i) accède au programme chiffré à exécuter par ce WN à partir du haché du programme reçu dans le message, (ii) déchiffre les instructions du programme, et (iii) transmet au processeur pour exécuter les instructions déchiffrées sur données reçues. Enfin, préalablement à l'émission d'un message, l'unité CMMU insère dans celui-ci le haché du programme.

On connaît également par XP055689287 : « T-SGX : Eradicating Controlled-Channel Attacks Against Enclave Programs », janvier 2017, une approche de sécurisation des programmes exécutés dans une enclave, par partitionnement.

La présente invention vise à améliorer la sécurité d'une architecture basée sur une unité CMMU telle que mentionnée ci-dessus, en particulier dans un environnement où une même entité numérique peut constituer plusieurs « wallet Nodes » WN.

Selon la présente invention, on propose un processeur sécurisé tel que défini dans la revendication 1.

Des aspects préférés mais facultatifs sont définis dans les revendications dépendantes.

Selon un septième aspect de la présente invention (sujet *Guard WN* ci-après), on propose un système transactionnel à architecture répartie en peer-to-peer, mettant en oeuvre des transactions avec sécurité cryptographique de transfert d'unités de compte entre noeuds émetteurs d'unités et noeuds receveurs d'unités, chaque transaction ayant en entrée un input se référant à un output d'une transaction précédente (ou plusieurs inputs se référant chacun à un output d'une transaction précédente) et ayant elle-même au moins un nouvel output spécifiant un nombre d'unités de compte et un noeud receveur, chaque transaction pouvant être validée en réponse à un broadcast par insertion, dans une chaîne de blocs mémorisée de façon répartie entre au moins certains noeuds, d'au moins une signature de la transaction, au moins certains noeuds étant également aptes à s'échanger des unités de comptes par des transactions sans broadcast obligatoire, à chaque noeud pouvant être associée une information de degré de confiance ou proximité vis-à-vis d'un autre noeud, le système comprenant des moyens aptes, au sein d'une chaîne arborescente (uptree) de transactions n'ayant pas fait l'objet d'un broadcast, à déterminer si l'information de degré de confiance ou de proximité d'au moins un noeud, parmi les noeuds (GuardWN) ayant généré les transactions les plus amont dans ladite chaîne, vis-à-vis du noeud ayant reçu la transaction la plus aval dans la chaîne, satisfait un critère déterminé et, dans l'affirmative, accepter ladite transaction la plus aval.

Des aspects préférés mais facultatifs sont les suivants :
* l'information de degré de confiance ou de proximité comprend un nombre de noeuds miroirs en commun entre au moins un noeud, parmi les noeuds ayant généré les transactions les plus amont dans ladite chaîne, et le noeud ayant reçu la transaction la plus aval dans la chaîne.
* chaque noeud est prévu pour signer une transaction en tant que GuardWN seulement si les outputs de ladite transaction requièrent sa signature dans les transactions que ladite transaction alimentera, de telle sorte qu'un noeud GuardWN ayant généré une transaction la plus amont contrôle les transactions (évite le double spend) qui seront alimentées par la transaction la plus aval.
* chaque noeud est prévu pour signer une transaction en tant que GuardWN seulement si les outputs de ladite transaction requièrent sa signature dans les transactions que ladite transaction alimentera, de telle sorte qu'un noeud GuardWN ayant généré une transaction la plus amont contrôle (évite le double spend sur) toute la chaîne arborescente (dtree) des transactions aval à partir d'elle-même.
* la requête de signature par un noeud GuardWN est étendue à chaque noeud collatéral d'un autre noeud (ces deux noeuds étant des GuardWN signataires respectifs requis sur les outputs de deux transactions alimentant en commun une même transaction aval) dont la signature est requise.

On propose selon un autre aspect de la présente invention un système-sur-Puce susceptible de recevoir des messages pour exécuter des programmes dans des conditions d'exécution sécurisées, dans lequel est mémorisée une clé secrète (SK) constituant la clé privée d'une paire de clés publique/privée, comprenant :
- des moyens capables, lors de la réception d'un message à partir d'un autre système sur puce (WN ou unité sécurisée (enclave) d'un processeur), de dériver une nouvelle paire de clés dites clés dérivées à partir de ladite clé secrète SK et d'une information contenue dans le message reçu, et d'envoyer la clé publique dérivée vers ledit autre WN ou enclave, et
- des moyens capables, lors de la réception, depuis ledit autre WN ou enclave, d'un message contenant la même information, de décrypter une autre partie dudit message avec ladite clé privée dérivée.

On propose selon un autre aspect de la présente invention un procédé exécuté dans une unité sécurisée (enclave) d'un processeur, comprenant, lors de la réception d'un message provenant soit d'un système-sur-puce, soit d'une unité sécurisée d'un autre processeur (autre enclave), les étapes d'exécution suivantes mises en oeuvre sans quitter l'enclave :
- dériver une paire de clés dérivées à partir de la clé secrète SK de l'enclave et d'une information contenue dans ledit message,
- envoyer la clé publique dérivée audit WN ou autre enclave, et
- attendre la réception depuis ledit WN ou autre enclave d'un message complémentaire contenant la même information, et
- lors de la réception dudit message complémentaire, décrypter une autre partie dudit message avec la clé privée dérivée.

Des aspects préférés mais facultatifs sont les suivants :
* l'étape d'envoi comprend également l'envoi d'une attestation d'authenticité et d'intégrité d'exécution du programme couramment exécuté.
* le procédé comprend une étape additionnelle précédant l'étape d'envoi et consistant à générer une clé aléatoire, l'étape d'envoi comprenant l'envoi de cette clé aléatoire vers ledit WN ou autre enclave, et dans lequel l'étape de décryptage utilise ladite clé aléatoire.

On propose selon un autre aspect un procédé exécuté dans une unité sécurisée (enclave) d'un processeur, comprenant, lors de la réception d'un message provenant soit d'un système-sur-puce, soit d'une unité sécurisée d'un autre processeur (autre enclave), les étapes d'exécution suivantes mises en oeuvre sans quitter l'enclave :
- générer une clé aléatoire,
- envoyer ladite clé aléatoire audit WN ou autre enclave, et
- attendre la réception depuis ledit WN ou autre enclave d'un message complémentaire contenant la même information, et
- lors de la réception dudit message complémentaire, décrypter une autre partie dudit message avec ladite clé aléatoire.

Des aspects préférés mais facultatifs sont les suivants :
* le procédé comprend, à la suite de la réception du message complémentaire et sans quitter l'enclave, une étape de chargement et d'exécution d'un programme correspondant à ladite information contenue dans le message et prenant comme entrée ladite autre partie décryptée.
* le procédé comprend en outre, lors de l'exécution du programme, la génération d'un message à destination d'un WN ou autre enclave, comprenant ladite information ainsi qu'une attestation de l'exécution dudit programme correspondant à ladite information.

On propose selon un autre aspect de la présente invention un processeur comprenant une unité sécurisée (enclave), ladite enclave comprenant :
- une clé secrète,
- des moyens pour générer une clé secrète dérivée d'une combinaison de ladite clé secrète et d'une autre information,
- des moyens pour charger via une table de correspondance un programme correspondant à une information donnée et pour exécuter ledit programme,
caractérisé en ce que ladite enclave comprend en outre des moyens aptes :
- lors de la réception d'un message dont une partie est chiffrée et ne peut être décryptée qu'au moyen d'une telle clé dérivée,
- à activer lesdits moyens pour générer cette clé dérivée sur la base d'une dite autre information contenue dans le message reçu,
- à charger, sans quitter l'enclave, un programme correspondant à ladite autre information et à exécuter ledit programme sur des données d'entrée comprenant le message reçu, dont ladite partie chiffrée a été décryptée au moyen de la clé secrète dérivée.

On propose selon un autre aspect de la présente invention un processeur comprenant une unité sécurisée (enclave), ladite enclave comprenant :
- une clé secrète,
- des moyens pour charger via une table de correspondance un programme correspondant à une information donnée et pour exécuter ledit programme,
caractérisé en ce que ladite enclave comprend des moyens aptes, lors de la réception à partir d'un WN ou d'une autre enclave d'un message comprenant une information donnée, à charger un premier programme et à l'exécuter de manière sécurisée, cette exécution comprenant les étapes suivantes :
a) envoi à ce WN ou autre enclave d'une requête comprenant:
   - une attestation signée par l'enclave avec sa clé secrète et attestant l'exécution en cours de ce premier programme,
   - une clé aléatoire,
b) chargement via une table de correspondance d'un programme correspondant à ladite information, et attente de la réponse à la requête envoyée à l'étape a),
c) à réception de cette réponse, celle-ci comprenant au moins une partie (payload) chiffrée au moyen de ladite clé aléatoire, décrypter ladite partie chiffrée (payload), et
d) provoquer l'exécution du programme sur des données d'entrée comprenant la réponse reçue, après décryptage.

Des aspects préférés mais facultatifs sont les suivants :
* la requête envoyée à l'étape a) comprend en outre un identifiant dudit message reçu.
* la requête envoyée à l'étape a) est chiffrée avec la clé publique du WN ou autre enclave.
* l'exécution du programme comprend la génération d'un message à destination d'un WN ou autre enclave comprenant ladite information ainsi qu'une attestation de l'exécution dudit programme correspondant à ladite information.
* le message reçu à partir d'un WN ou d'une autre enclave comprend en outre une attestation de l'exécution par ce WN ou autre enclave dudit programme correspondant à ladite information.
* le message reçu à partir du WN ou autre enclave est reçu à l'état chiffré avec la clé publique de l'enclave du processeur et est décrypté avec sa clé secrète.
* l'enclave comprend en outre des moyens capables, lors de la réception de la part d'une autre enclave d'une requête comprenant une attestation attestant l'exécution en cours dudit premier programme (WNRoT) et d'une clé aléatoire, de générer et retourner un message comprenant au moins une partie chiffrée (payload) au moyen de ladite clé aléatoire.

On propose selon un autre aspect de la présente invention encore un processeur comprenant une unité sécurisée (enclave), ladite enclave comprenant :
- la clé secrète d'une paire de clés privée/publique principale,
- des moyens pour générer une paire de clés privée/publique dérivées à partir d'une combinaison de la clé secrète principale et d'une information, et
- des moyens pour charger, via une table de correspondance, un programme correspondant à une information donnée et pour l'exécuter,
caractérisé en ce que ladite enclave comprend des moyens aptes, lors de la réception à partir d'un WN ou d'une autre enclave d'un message comprenant une information donnée, à charger un premier programme et l'exécuter de manière sécurisée, cette exécution comprenant les étapes suivantes :
a) utilisation (générer ou retrouver en mémoire) d'une paire de clés dérivées à partir de la clé secrète principale et ladite information donnée reçue,
b) envoi à ce WN ou autre enclave d'une requête comprenant :
   - une attestation signée par l'enclave avec sa clé secrète et attestant l'exécution en cours de ce premier programme,
   - la clé publique de la paire de clés dérivées,
c) charger via une table de correspondance un programme correspondant à ladite information et attendre la réponse à la requête envoyée à l'étape b), et
d) lors de la réception de cette réponse, celle-ci comprenant au moins une partie (payload) chiffrée au moyen de la clé publique dérivée, décrypter cette partie chiffrée (payload) avec la clé secrète dérivée, et provoquer l'exécution du programme sur des données d'entrée comprenant la réponse reçue après décryptage.

Avantageusement mais facultativement, la requête envoyée à l'étape b) comprend en outre un identifiant dudit message reçu.

On propose selon un autre aspect de la présente invention un processeur comprenant une unité sécurisée (enclave), ladite enclave comprenant :
- la clé secrète d'une paire de clés privée/publique principale,
- des moyens pour générer une clé aléatoire,
- des moyens pour charger, via une table de correspondance, un programme correspondant à une information donnée et pour l'exécuter,
caractérisé en ce que ladite enclave comprend des moyens aptes, lors de la réception à partir d'un WN ou d'une autre enclave d'un message comprenant une information donnée, à charger un premier programme et l'exécuter de manière sécurisée, cette exécution comprenant les étapes suivantes :
a) envoi à ce WN ou autre enclave d'une requête comprenant :
   - une attestation signée par l'enclave avec sa clé secrète et attestant l'exécution en cours de ce premier programme,
   - la clé aléatoire,
b) charger via une table de correspondance un programme correspondant à ladite information et attendre la réponse à la requête envoyée à l'étape a), et
c) lors de la réception de cette réponse (WM2), celle-ci comprenant au moins une partie (payload) chiffrée au moyen de la clé aléatoire, décrypter cette partie chiffrée (payload) avec la clé aléatoire et provoquer l'exécution du programme (WP) sur des données d'entrée comprenant la réponse reçue après décryptage.

Des aspects préférés mais facultatifs sont les suivants :
* la requête envoyée à l'étape d'envoi est chiffrée avec la clé publique du WN ou autre enclave.
* le message reçu à partir du WN ou autre enclave comprend en outre la clé publique d'une paire de clés privée/publique dérivées à partir de la même information donnée, et la requête envoyée à l'étape d'envoi au WN ou à l'autre enclave est chiffrée avec ladite clé publique dérivée du WN ou autre enclave.
* l'exécution du programme comprend en outre la génération d'un message à destination d'un WN ou autre enclave comprenant ladite information ainsi qu'une attestation de l'exécution dudit programme correspondant à ladite information.
* le message reçu à partir du WN ou autre enclave comprend en outre une attestation de l'exécution par ledit WN ou autre enclave dudit programme correspondant à ladite information.
* le message reçu à partir du WN ou autre enclave est reçu à l'état chiffré avec la clé publique de l'enclave et est décrypté avec sa clé secrète.
* l'enclave comprend en outre des moyens aptes, lors de la réception de la part d'une autre enclave d'une requête comprenant une attestation attestant l'exécution en cours dudit premier programme et ladite clé publique de la paire de clés dérivée, à générer et retourner un message comprenant au moins une partie chiffrée (payload) au moyen de ladite clé publique.
* ladite requête reçue comprend en outre une clé aléatoire, et les moyens de chiffrement pour retourner un message comprennent cette clé.

Par ailleurs, les processus sécurisés de mise en oeuvre de Smart Contracts sont en général complètement déconnectés du monde physique. A cet égard, faire communiquer une unité de traitement mise en oeuvre dans un processus avec le monde extérieur ouvre par principe une porte aux possibilités de fraude.

Un aspect de la présente invention vise à permettre de connecter l'exécution de Smart Contracts avec le monde réel, comme on va le voir dans la suite, tout en préservant la sécurité de cette exécution.

On propose à cet effet un système-sur-puce (SoC) sécurisé dans lequel est mémorisé de façon inaccessible autrement que par le SoC une clé privée de SoC, ou le SoC est apte à dynamiquement régénérer cette clé privée, le Soc étant apte à communiquer avec un autre équipement par des messages et étant apte à exécuter des Smart Contracts (WP) en réponse à la réception de messages, et à mémoriser au moins un Smart Contract à exécuter dans des conditions de traitement sécurisé, le SoC comprenant en outre des moyens de communication entre le système et un module externe comprenant au moins un capteur et/ou un actionneur, ces moyens comprenant au moins côté système une unité de gestion de la communication, et des moyens de sécurisation de ladite communication aptes à empêcher au moins le remplacement d'un module par un autre module, l'exécution d'au moins un Smart Contract étant apte à recevoir en entrée à partir de ladite unité de gestion une donnée de capteur en provenance dudit module et/ou à émettre en sortie une donnée d'actionnement vers ledit module.

Des aspects préférés mais non limitatifs sont les suivants :
* le système comprend des moyens pour signer à l'aide de ladite clé privée une donnée de capteur reçue du module dans le cadre de l'exécution d'un Smart Contract, et à transmettre ladite donnée signée vers une autre équipement sécurisé constituant une partie au Smart Contract.
* le système comprend des moyens recevoir une instruction d'actionnement signée à partir d'un autre équipement sécurisé constituant une partie à un Smart Contract, pour vérifier ladite signature et pour appliquer ladite instruction audit module.
* les moyens de sécurisation comprennent un moyen d'apprentissage d'au moins une propriété permanente de la liaison entre le SoC et le module.
* le moyen d'apprentissage est apte à mémoriser ladite propriété à ladite connexion, et les moyens de sécurisation sont aptes à comparer périodiquement la propriété courante avec la propriété mémorisée.
* la liaison est filaire, et ladite propriété est une propriété d'impédance.
* la liaison est sans fil, et ladite propriété comprend au moins une caractéristique du domaine temporel et/ou fréquentiel de ladite liaison.
* ladite propriété comprend une combinaison de caractéristiques du domaine temporel et/ou fréquentiel de ladite liaison.
* le module comprend une partie formant tag RFID.
* le module comprend un tag de communication sans fil standard fixé de façon inviolable à un capteur et/ou actionneur du commerce.
* le tag est une étiquette RFID.
* les moyens de sécurisation comprennent des moyens d'appariement logique entre le système et le module.
* les moyens de sécurisation comprennent des moyens de vérification de la persistance de l'appariement.
* les moyens de vérification de la persistance de l'appariement et/ou les moyens de communication comprennent l'envoi d'un nonce vers le module et l'analyse d'une réponse du module prenant an compte ledit nonce.
* le système comprend une mémoire spécifique pour des données de capteur et/ou d'actionneur en provenance/à destination dudit module et une unité de gestion de ladite mémoire apte lire et/ou écrire des données dans ladite mémoire lors de l'exécution d'un Smart Contract parmi les Smart Contracts autorisés à accéder à ces données.
* ladite unité de gestion de mémoire fait partie d'une unité de gestion de mémoire générale comprenant en outre une unité de gestion de l'accès à une mémoire de Smart Contracts et une mémoire de données respectivement associées aux différents Smart Contracts.
* ladite unité de gestion de mémoire générale comprend également une unité de gestion d'une mémoire pour des unités de compte (Tags) reçues par des transactions incluses dans des messages, apte lire et/ou écrire des données dans ladite mémoire d'unités de compte lors de l'exécution d'un Smart Contract parmi les Smart Contracts autorisés à accéder à ces unités de compte.
* l'unité de gestion de mémoire générale est apte à charger un Smart Contract pour exécution à partir d'une désignation de Smart Contract contenue dans un message arrivant dans le système.
* des données de capteur et/ou d'actionneur en provenance/à destination dudit module sont transmises à la volée entre un moyen d'exécution d'un Smart Contract et l'unité de gestion de la communication.

### Autres aspects

A propos des avantages qualitatifs susmentionnés, l'article "Why Many Smart Contract Use Cases Are Simply Impossible" [http://www.coindesk.com/three-smart-contract-misconceptions/] présente des limitations d'Ethereum par rapport aux interactions avec le monde extérieur (voir en particulier sous « Contacting External Services »:
*"Often, thefirst use case proposed is a smart contract that changes its behavior in response to some external event. For example, an agricultural insurance policy which pays out conditionally based on the quantity of rainfall in a given month.*

*The imagined process goes something like this: The smart contract waits until the predetermined time, retrieves the weather report from an external service and behaves appropriately based on the data received.*

*This all sounds simple enough, but it's also impossible. Why? Because a blockchain is a consensus-based system, meaning that it only works if every node reaches an identical state after processing every transaction and block.*

*Everything that takes place on a blockchain must be completely deterministic, with no possible way for différences to creep in. The moment that two honest nodes disagree about the chain's state, the entire system becomes worthless.*

*Now, recall that smart contracts are executed independently by every node on a chain. Therefore, if a smart contract retrieves some information from an external source, this retrieval is performed repeatedly and separately by each node. But because this source is outside of the blockchain, there is no guarantee that every node will receive the same answer.*

*Perhaps the source will change its response in the time between requestsfrom different nodes, or perhaps it will become temporarily unavailable. Either way, consensus is broken and the entire blockchain dies.*

*So, what's the workaround? Actually, it's rather simple. Instead of a smart contract initiating the retrieval of external data, one or more trusted parties ("oracles') créâtes a transaction which embeds that data in the chain. Every node will have an identical copy of this data, so it can be safely used in a smart contract computation." (sic)*

On pallie ce manque tout d'abord en permettant l'accès par un « Wallet Node » WN (voir WO2016120826A2), de manière sécurisée, à un site Web HTTPS quelconque directement (éliminant ainsi le besoin d'un smart contract "oracle"), en exploitant le protocole TLS de bout en bout. Cet accès peut être mis en oeuvre sur une pluralité de noeuds "WN clones" (qui sont une mise en oeuvre particulière de noeuds miroirs, cf. section « WN Miroirs ») aptes à accéder en redondance à une source de données. Concernant le risque de modification de la réponse par la source entre deux requêtes, les WN clones sont aptes à se coordonner pour traiter, selon des règles préconvenues (selon des paramètres de configuration), des cas de réponses différentes à de mêmes requêtes (selon des approches telles que prendre la majorité, la moyenne, etc.) - l'avantage essentiel apporté comparé aux noeuds d'Ethereum étant l'accès au réseau, évitant ainsi l'intermédiation par un tiers de confiance.

L'article précité évoque ensuite le besoin d'émettre un message au monde extérieur :
*"When it comes to smart contracts causing events in the outside world, a similar problem appears. For example, many like the idea of a smart contract which calls a bank's API in order to transfer money. But if every node is independently executing the code in the chain, who is responsible for calling this API?*
*If the answer is just one node, what happens if that particular node malfunctions, deliberately or not?"* On pallie ce manque en permettant de mettre en oeuvre un protocole fiable selon lequel exactement l'un des noeuds miroirs du noeud censé émettre un message au monde extérieur, émet ce message (voir plus loin section « *WN émettant un message au monde extérieur »). (sic)*

Dans les deux cas d'utilisation susmentionnés, la limitation intrinsèque des noeuds d'Ethereum par rapport au réseau va à l'encontre de son but de décentralisation ; cf. article précité :
*"they both require a trusted entity to manage the interactions between the blockchain and the outside world. While this is technically possible, it undermines the goal of a decentralised system." (sic)*
L'autre limitation importante d'Ethereum décrite par l'article précité est sa non-confidentialité intrinsèque :
   *"if one smart contract can't access another's data, have we solved the problem of blockchain confidentiality? Does it make sense to talk of hiding information in a smart contract? Unfortunately, the answer is no.*
   *Because even if one smart contract can't read another's data, that data is still stored on every single node in the chain. For each blockchain participant, it's in the memory or disk of a system which that participant completely controls. And there's nothing to stop them reading the information from their own system, if and when they choose to do so." (sic)*
   Cette limitation forte d'Ethereum est palliée par la propriété de blindness (signifiant "confidentialité étendue au hardware") des WN, obtenue par l'architecture hardware proposée par l'invention.

Les smart contracts d'Ethereum sont compris comme *"cryptographie "boxes" that contain value and only unlock it if certain conditions are met"* [phrase extraite du Ethereum White Paper déjà cité], alors que selon le système de l'invention, les smart contracts sont mis en oeuvre comme des contrats exécutables "Wallet Program" (WP) entre noeuds (WN) du réseau de Wallet Nodes, et ayant les caractéristiques suivantes :
- les WN interagissent par messages "Wallet Message" (WM);
- chaque WM spécifiant le WP que le WN récepteur doit exécuter pour le traiter;
- un WM étant susceptible de comporter une ou plusieurs transactions de transfert de "valeurs" du WN émetteur vers le WN récepteur;
- valeurs qui appartiendront au WN récepteur (ou à tout le moins seront gérées par le WN récepteur) et qui pourra à son tour les transférer en générant d'autres transactions (dans le cadre de l'exécution d'un WP qui en général pourra être différent du WP spécifié dans le WM qui les lui a transférées),
- le système des WN comportant des moyens dans chaque WN pour empêcher un double-spend de ces valeurs, et
- un WN comprenant avantageusement des moyens pour réserver la consommation de ces valeurs à un ou plusieurs programmes WP habilités.

Néanmoins, lesdites *"cryptographic boxes"* peuvent aisément être construites sur des WN. Le système de l'invention marie ainsi la conception classique des contrats (*"something that should be "fulfilled" or "complied with""*) avec celle d'Ethereum *("rather, they are more like "autonomous agents" that live inside of the Ethereum execution environment, always executing a spécifie piece of code when "poked" by a message or transaction, and having direct control over their own ether balance and their own key*/*value store to keep track of persistent variables"*) [phrases aussi tirées du Ethereum White Paper déjà cité].

Les noeuds WN sont comparables aux noeuds d'Ethereum : l'adresse d'un noeud Ethereum, déterminée à partir de la clé publique d'une paire de clés, est analogue à l'adresse d'un WN qui est déterminée à partir de la clé publique du WN en question. Dans un WN, un smart contrat est un code exécutable "Wallet Program" (identifié par son haché "#WP"), code compilable à partir d'un langage comme Solidity [http://solidity.readthedocs.io/en/develop/introduction-to-smart-contracts.html] mais avec adaptations permettant que les WN aient accès au réseau, que les transactions générées par un WN puissent transférer des valeurs en n'importe quelles unités (et pas seulement des ethers), etc.

Alors que dans Ethereum une exécution de contrat est effectuée sur un grand nombre de noeuds (les mineurs) qui la valident, dans le cas des WN, lorsqu'un contrat (WP) est exécuté, le noeud sur lequel cette exécution a été provoquée est le seul qui l'exécute et a ses propres variables persistantes d'état. Les WN représentent un modèle plus général en ce sens que les variables persistantes d'un noeud sont d'un usage général, elles ne représentent pas uniquement un solde en Ether et elles ne sont pas nécessairement des variables associées au contrat pour tous les noeuds qui l'exécutent (elles ne sont pas nécessairement les variables partagées constituant le key/value store d'un contrat Ethereum [voir la Ethereum White Paper déjà cité]).

Les WN garantissent l'intégrité d'exécution par des contraintes hardware et, avantageusement, par de la *redondance* (pour encore plus de sécurité), ledit noeud étant alors un noeud virtuel matérialisé par une pluralité de noeuds miroirs mémorisant, manipulant et maintenant de manière synchronisée les variables spécifiques audit noeud virtuel.

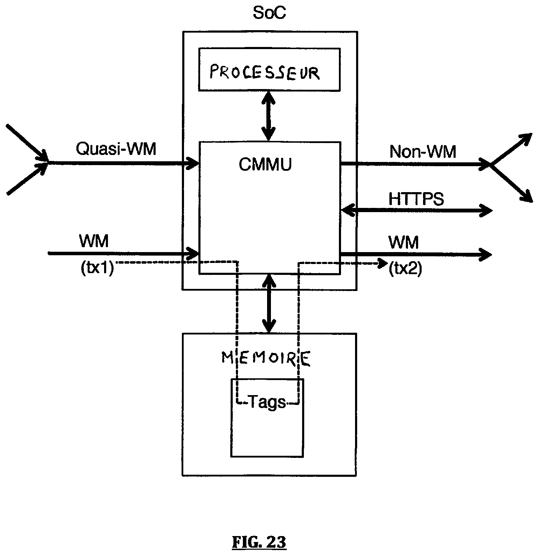

Il est utile de se référer à la description de la Figure 23 au début de la section « description détaillée de formes de réalisation préférées ».

On vise par ailleurs à permettre d'exécuter des smarts contracts (WP) sur des WN en utilisant la blockchain Bitcoin (ou autre blockchain), en ne générant et n'insérant dans la blockchain que certaines des transactions, sur instruction des WN concernés, ce qui offre le triple avantage d'avoir la puissance des smart contracts sur Bitcoin, d'éviter la lenteur de son protocole de consensus et de ne pas payer de transaction fees (pour les transactions qui ne sont pas insérées dans la blockchain). La section « Transactions Bitcoin off-chain » décrit un procédé permettant de faire consommer des unités de valeurs (telles que des bitcoins ou des ethers) par différents types de programmes WP, procédé qui confère ainsi à un système basé sur Bitcoin la puissance des smart contracts d'un système tel que Ethereum.

Le protocole Bitcoin nécessite d'attendre des confirmations de transactions bloc par bloc qui, selon l'approche adoptée, prennent aujourd'hui de l'ordre de quelques secondes à la dizaine de minutes chacune et impliquent des volumes de transactions limités. Ethereum, ainsi que le procédé tel que décrit dans FR 3 018 377 A1 au nom du demandeur, permettent l'exécution décentralisée de contrats exécutables. La technologie Sidechains a été conçue pour essentiellement permettre de gérer des engagements et transactions de manière autre que celle prévue dans Bitcoin et pouvoir revenir au protocole Bitcoin d'origine à souhait [https://blockstream.com/sidechains.pdf] (ce que permet en substance l'invention). Plus récemment ont été proposés en complément de ces systèmes, des « state-channel networks » tels que « Lightning Network » [https://lightning.network/lightning-network-paper.pdf], et « Payment-Channel Network » [http://raiden.network/] pour Ethereum, pour éviter de nécessairement utiliser la blockchain pour chaque transaction. Cette approche implique que les noeuds surveillent la blockchain pour réagir en cas d'insertion de transactions qui ne reflètent pas l'état courant, pour rectifier, ce qui nécessite de mettre en oeuvre des verrous sécurisant une fenêtre temporelle d'observation, engendrant une certaine lenteur. L'invention pallie cette difficulté du fait de la garantie d'intégrité d'exécution des WP qu'elle offre d'emblée : les transactions insérées générées par WN ne nécessitent pas de surveillance.

On notera par ailleurs que le hardware proposé selon l'invention permet d'assurer un traitement sans divulgation, propriété (appelée « confidentialité ») offerte notamment par les environnements sécurités tels que les nouveaux processeurs Intel pour leurs environnements (enclaves) sécurisés « SGX », et l'on connaît des recherches sur le chiffrement homomorphique pour le traitement sur le Cloud offrant des garanties d'intégrité d'exécution et de non-divulgation des données traitées ni-même du code exécuté. Toutefois la technologie de chiffrement homomorphique est en phase de recherche et pas encore opérationnelle sauf dans des cas restreints ou particuliers.

Rappelons que la demande WO2016/120826 A2 décrit un système-sur-puce (SoC, appelé « Wallet Node », ou « WN », ou encore « entité ») intégré à - ou couplé avec - un dispositif connecté tel qu'un smartphone, un objet connecté de l'Internet des Objets (IoT) ou encore un ordinateur, offrant des garanties d'intégrité d'exécution dans la mesure où les restrictions d'accès entre ses différentes parties ne peuvent pas être altérées ou contournées. Essentiellement, la seule exécution possible d'un WN est de réagir à un message entrant, en en vérifiant son intégrité et en exécutant ensuite le code exécutable "Wallet Program" correspondant au haché spécifié dans ce message. En référence à cette demande PCT, dans le présent texte, par "message" on entend "Wallet Message" sauf lorsqu'il est explicite que ce n'est pas le cas.

*Définition d'autres aspects avec lesquels les aspects ci-dessus peuvent éventuellement être combinés, selon des combinaisons que l'homme du métier appréhendera comme étant compatibles.*

On propose selon un autre aspect encore un procédé d'établissement de poids de connexion entre noeuds d'un réseau mis en oeuvre par des unités de traitement informatiques communicantes, à chaque noeud étant associées une clé publique et une clé privée, un noeud donné étant susceptible de communiquer sa clé publique à un autre nœud, formant ainsi une connexion dite réelle (« IRL-connecté ») entre les deux noeuds, et chaque noeud étant également susceptible de communiquer à un autre noeud une clé publique reçue d'un autre noeud encore, formant ainsi une connexion dite indirecte entre l'autre noeud et l'autre noeud encore, un noeud étant susceptible d'avoir un poids de connexion spécifique vis-à-vis d'un autre noeud avec lequel il a une connexion réelle ou indirecte, le procédé comprenant, pour déterminer le poids de connexion d'un deuxième noeud vis-à-vis d'un premier nœud, le calcul d'une combinaison déterminée de facteurs de pondération (influence, proximité) de troisièmes noeuds qui sont IRL-connectés au deuxième noeud.

Avantageusement mais facultativement :
* le poids de connexion du deuxième nœud influence les facteurs de pondération des troisièmes noeuds, et comprenant en outre une mise à jour des valeurs des facteurs de pondération des troisièmes noeuds après calcul du poids de connexion du deuxième noeud.
* le procédé est mis en oeuvre de façon itérative jusqu'à convergence.
* l'établissement d'une connexion dite réelle (IRL-connexion) entre un premier noeud et un autre noeud comprend les étapes suivantes :
   au niveau d'une première unité de traitement implémentant le premier noeud, rendre accessible par lecture de proximité un code lisible par machine codant une donnée aléatoire (nonce) ;
   au niveau d'une autre unité de traitement implémentant l'autre noeud, lire le code lisible par machine, extraire ladite donnée aléatoire et calculer un haché de ladite donnée aléatoire,
   transmettre de ladite autre unité de traitement vers la première unité de traitement via un canal de communication la clé publique associée audit autre noeud et une signature (du haché) de la donnée aléatoire effectuée avec sa clé privée,
   au niveau de la première unité de traitement, vérifier ladite signature à l'aide de la clé publique reçue et de la donnée aléatoire utilisée pour générer le code lisible par machine, et enregistrer ladite clé publique si la vérification aboutit.
* l'établissement d'une connexion dite réelle (IRL-connexion) entre un premier noeud et un autre noeud comprend les étapes suivantes :
   au niveau d'une première unité de traitement implémentant le premier noeud, générer un passphrase et le rendre accessible à l'utilisateur de ladite première unité de traitement,
   au niveau d'une autre unité de traitement implémentant l'autre noeud, introduire en entrée ledit passphrase, communiqué par l'utilisateur de la première unité de traitement à l'utilisateur de l'autre unité de traitement par une voie de communication mettant en jeu une action humaine entre les deux utilisateurs,
   transmettre de ladite autre unité de traitement vers le première unité de traitement via un canal de communication la clé publique associée audit autre noeud et une signature (du haché) du passphrase introduit, effectuée avec sa clé privée,
   au niveau de la première unité de traitement, vérifier ladite signature à l'aide de la clé publique reçue et du passphrase initialement rendu accessible à l'utilisateur de la première unité de traitement, et enregistrer ladite clé publique si la vérification aboutit.
* une pluralité de deuxièmes noeuds ont des poids de connexion avec le premier noeud, et dans lequel la détermination du poids de connexion d'un deuxième noeud donné vis-à-vis du premier noeud est également basée sur les poids de connexions desdits autres deuxièmes noeuds vis-à-vis du premier nœud

On propose selon un autre aspect un procédé de détermination de l'influence d'un premier noeud dans un réseau de noeuds mis en oeuvre par des unités de traitement informatiques communicantes, à chaque noeud étant associées une clé publique et une clé privée, un noeud étant susceptible de communiquer sa clé publique à un autre noeud, formant ainsi une connexion dite réelle (IRL-connexion) entre les deux nœuds, et chaque nœud étant également susceptible de communiquer à un autre noeud une clé publique reçue d'un autre noeud encore, formant ainsi une connexion dite indirecte entre l'autre noeud et l'autre noeud encore, le procédé comprenant la détermination d'un facteur influence d'un noeud donné sur la base du nombre de deuxièmes noeuds ayant une connexion réelle avec ledit noeud donné et des valeurs de poids de connexion déterminées par le procédé de la dans lequel une pluralité de deuxièmes noeuds ont des poids de connexion avec un premier noeud, et dans lequel la détermination du poids de connexion d'un deuxième noeud donné vis-à-vis du premier noeud est également basée sur les poids de connexions desdits autres deuxièmes noeuds vis-à-vis du premier noeud, pour les différents deuxièmes noeuds.

Avantageusement mais facultativement :
* le poids de connexion d'un deuxième noeud vis-à-vis du premier noeud est déterminé aussi sur la base de valeurs des facteurs influence respectifs des troisièmes noeuds ayant une connexion réelle avec ledit deuxième noeud.
* les valeurs de poids de connexion et de facteur influence sont déterminées itérativement jusqu'à leur convergence en des valeurs qui ne varient plus de manière significative.

On propose selon un autre aspect un procédé pour établir des connexions dites quasi-réelles entre noeuds d'un réseau mis en oeuvre par des unités de traitement informatiques communicantes, à chaque nœud étant associées une clé publique et une clé privée, un nœud donné étant susceptible de communiquer sa clé publique à un autre noeud, formant ainsi une connexion dite réelle (« IRL-connecté ») entre les deux noeuds, et chaque noeud étant également susceptible de communiquer à un autre noeud une clé publique reçue d'un autre noeud encore, formant ainsi une connexion dite indirecte entre l'autre noeud et l'autre noeud encore, chaque noeud étant susceptible d'avoir un poids de connexion spécifique vis-à-vis d'un autre noeud avec lequel il a une connexion réelle ou indirecte, le comprenant les étapes suivantes :
à partir d'un premier noeud et d'un deuxième noeud entre lesquels une connexion doit être établie, sélectionner une pluralité de noeuds intermédiaires entre le premier noeud et le deuxième noeud, parmi ceux présentant les plus grands poids de connexion vis-à-vis du premier noeud,
communiquer à partir du premier noeud vers les noeuds intermédiaires sélectionnés une donnée aléatoire (nonce) destinée à être communiquée au deuxième noeud,
via un ou plusieurs canaux de communication distincts du canal de communication entre noeuds, communiquer de façon redondante à partir des noeuds intermédiaires vers le deuxième noeud ledit code aléatoire ainsi que les clés publiques desdits noeuds intermédiaires,
au niveau du deuxième nœud, en réponse à la réception du code aléatoire en redondance, générer une signature du code aléatoire à l'aide de la clé privée du deuxième noeud et retourner vers les noeuds intermédiaire ladite signature ainsi que la clé publique du deuxième noeud, chiffrée à l'aide des clés publiques des noeuds intermédiaires, respectivement,
au niveau de chacun des noeuds intermédiaires, vérification de la signature du code aléatoire reçue du deuxième nœud et, en cas de succès, communication au premier nœud de la clé publique du deuxième noeud, chiffrée à l'aide de la clé publique du premier nœud, et
au niveau du premier noeud, déchiffrement et mémorisation de la clé publique du deuxième noeud,
les premier et deuxième noeuds pouvant alors s'échanger des informations chiffrées avec une sécurité liée aux poids de connexion des noeuds intermédiaires.

Avantageusement mais facultativement :
* la sélection des noeuds intermédiaire s'effectue également parmi ceux présentant les plus grands poids de connexion vis-à-vis du deuxième noeud.
* le code aléatoire est généré conjointement par un ensemble de nœuds formés par le premier nœud et par les noeuds intermédiaires, par la mise en oeuvre des étapes suivantes :
   génération d'un code aléatoire au niveau de chaque noeud de l'ensemble,
   échange entre les noeuds de l'ensemble, avec chiffrement à l'aide des clés respectives des noeuds, de hachés desdits codes aléatoires,
   échange entre lesdits noeuds de l'ensemble, avec chiffrement à l'aide des clés respectives des noeuds, des codes aléatoires tels quels,
   vérification au niveau de chaque noeud de l'ensemble que le code aléatoires tels quels correspondent bien à leurs hachés respectifs reçus à l'étape précédente, et
   génération d'un code aléatoire final destiné à être communiqué au deuxième noeud par combinaison prédéterminée des codes aléatoires générés au niveau de chaque noeud de l'ensemble.
* ledit canal de communication distinct est basé sur un réseau social, et comprenant une étape de publication par le deuxième noeud sur ledit réseau social d'une signature dudit code aléatoire et sa clé publique.
* le procédé comprend en outre, en réponse au succès de l'étape de vérification de la signature du code aléatoire reçue du deuxième noeud, une étape d'attribution d'un poids de connexion du deuxième noeud vis-à-vis du premier noeud.
* le procédé selon le premier aspect est mis en oeuvre dans un réseau comprenant des noeuds à connexions quasi-réelles établies selon le troisième aspect, et les connexions quasi-réelles sont considérés comme des connexions réelles au sens du procédé, avec un poids tenant compte du caractère quasi-réel de la connexion.

Selon un autre aspect encore, on propose un procédé pour sécuriser le fonctionnement d'un réseau de noeuds aptes à exécuter des programmes (WP) en réponse à la réception de messages (WM), les noeuds étant susceptibles d'être liés entre eux selon des poids de connexion différents déterminés par le procédé selon le premier aspect ou par le procédé selon le troisième aspect, le procédé comprenant, lors de la réception d'un message (WM) au niveau d'un noeud récepteur, la comparaison du poids de connexion du noeud ayant émis ce message avec les poids de connexion d'autres noeuds avec lesquels le noeud récepteur possède des connexions réelles, et l'acceptation dudit message seulement si le poids de connexion du nœud émetteur est égal ou supérieur au plus petit desdits poids de connexion.

Selon un autre aspect, on propose un procédé pour sécuriser le fonctionnement d'un réseau de noeuds aptes à exécuter des programmes (WP) en réponse à la réception de messages (WM), les noeuds étant susceptibles d'être liés entre eux selon des poids de connexion différents obtenus notamment par le procédé selon le premier aspect ou par le procédé selon le troisième aspect où, en réponse au succès de l'étape de vérification de la signature du code aléatoire reçue du deuxième noeud, on prévoit une étape d'attribution d'un poids de connexion du deuxième noeud vis-à-vis du premier nœud, comprenant les étapes suivantes :
sur la base des valeurs de poids de connexion, affecter à chaque noeud au moins un noeud contresignataire ayant vis-à-vis de lui un poids de connexion supérieur à un seuil,
au niveau de chaque noeud, maintenir une liste de noeuds contresignataires de noeuds susceptibles de recevoir des messages (WM) à partir du noeud en question, chaque noeud et ses noeuds contresignataires formant un ensemble de noeuds miroirs,
lorsqu'un message doit être envoyé par un noeud émetteur à un noeud destinataire, provoquer l'envoi de ce message par au moins certains des noeuds miroirs du noeud émetteur vers au moins certains des noeuds miroirs du noeud destinataire,
valider le message seulement si une fraction donnée des messages émis a été reçue.

Avantageusement mais facultativement :
* les messages sont émis vers tous les nœuds miroirs du nœud destinataire.
* les messages sont émis par le noeud émetteur ainsi que par les seuls noeuds contresignataires du noeud émetteur qui sont également contresignataires du noeud destinataire.
* un message envoyé d'un premier noeud à un second noeud n'est validé par le second noeud que si
   les ensembles respectifs de noeuds miroirs des premiers et deuxième noeuds ont une intersection dont le nombre d'éléments est supérieur à un certain seuil et si
   le second noeud a reçu ce même message (en redondance) de la part d'au moins une fraction donnée desdits noeuds miroirs appartenant à cette intersection.
* dans un procédé selon le premier aspect mise en oeuvre dans un réseau comprenant des noeuds miroirs selon le cinquième aspect, un noeud est considéré comme contresignataire d'un noeud donné seulement si le poids de connexion du nœud en question est au moins égal au plus petit des poids de connexion des noeuds ayant des connexions réelles avec le noeud donné.

On propose selon un autre aspect un système pour sécuriser le fonctionnement d'un réseau de noeuds aptes à exécuter des programmes (WP) en réponse à la réception de messages (WM), les noeuds étant susceptibles d'être liés entre eux selon des poids de connexion différents, apte à :
sur la base des valeurs de poids de connexion, affecter à chaque noeud au moins un noeud contresignataire ayant vis-à-vis de lui un poids de connexion supérieur à un seuil,
au niveau de chaque nœud, maintenir une liste de nœuds contresignataires de nœuds susceptibles de recevoir des messages à partir du noeud en question, chaque noeud et ses noeuds contresignataires formant un ensemble de noeuds miroirs,
lorsqu'un message doit être envoyé par un noeud émetteur à un noeud destinataire, provoquer l'envoi de ce message par au moins certains des noeuds miroirs du noeud émetteur vers au moins certains des noeuds miroirs du noeud destinataire.

Avantageusement mais facultativement :
* un noeud destinataire d'un message (WM) ne le valide que seulement si les ensembles respectifs de noeuds miroirs des noeuds émetteur et destinataire ont une intersection dont le nombre d'éléments est supérieur à un seuil donné et si le nœud destinataire a reçu ce même message (en redondance) de la part d'au moins une fraction donnée desdits noeuds miroirs appartenant à cette intersection.

On propose selon un autre aspect un système pour sécuriser le fonctionnement d'un réseau de noeuds constitués par des systèmes sur puce aptes à exécuter des programmes (WP) en réponse à la réception de messages (WM), caractérisé en ce qu'il comprend en combinaison les deux architectures suivantes :
- au niveau de chaque noeud, une architecture d'accès à des programmes chiffrés sur la base de hachés de ces programmes, contenus dans les messages entrants,
- au niveau de chaque nœud, une architecture de détermination de noeuds contresignataires, de duplication des messages de/vers les noeuds contresignataires, et de détermination du caractère identique des messages reçus.

On propose selon un autre aspect un système pour l'exécution sécurisée de programmes dans une architecture comprenant un ensemble d'équipements reliés en réseau, caractérisé en ce qu'il comprend dans au moins un équipement, un système-sur-puce (SoC) sécurisé dans lequel est mémorisé de façon inaccessible autrement que par le SoC une clé privée de SoC, ou le SoC est apte à dynamiquement régénérer cette clé privée (technologie PUF),
un SoC pouvant communiquer avec un autre équipement uniquement par des messages et étant apte à exécuter des programmes seulement en réponse à la réception de messages,
un SoC étant apte à mémoriser au moins un programme à exécuter après chiffrement par le SoC et à générer un haché du ou de chaque programme permettant de retrouver le programme chiffré,
l'équipement étant apte en outre à adresser au SoC un message contenant des données d'entrée (data) pour un certain programme à exécuter, ainsi que le haché dudit programme (#P2),
le SoC étant apte, en réponse à un tel message, de façon sécurisée, (i) accéder au programme chiffré à exécuter à partir du haché (#P2) du programme reçu dans le message, (ii) déchiffrer à la volée les instructions du programme, et (iii) exécuter à la volée les instructions déchiffrées.

Avantageusement mais facultativement :
* avant émission d'un message par le SoC, le SoC insère le haché (#P1) du programme en cours d'exécution dans le message à émettre, ainsi que la signature de ce haché au moyen de ladite clé privée secrète du SoC.
* avant émission d'un message par le SoC, le SoC insère le haché (#P1) du programme en cours d'exécution dans le corps du message à émettre que le SoC signe au moyen de la clé privée secrète du SoC.
* le SoC comprend une unité de gestion cryptographique de mémoire (CMMU, Crypto Memory Management Unit) dans lequel est mémorisé - ou apte à dynamiquement régénérer (technologie PUF) - la clé secrète du SoC qui n'est accessible que par l'unité CMMU qui ne la dévoile jamais, et c'est par cette unité CMMU que sont effectués :
   - ledit chiffrement du programme avant mémorisation,
   - une allocation d'adresse mémoire (addr1..addr2 range) pour le programme ainsi chiffré,
   - ladite génération du haché du programme et
   - ledit décryptage pour exécution à la volée par au moins une unité processeur comprise dans le SoC.
* l'unité CMMU effectue chiffrement et mise en mémoire bloc d'instructions par bloc d'instructions et fournit audit processeur un seul bloc d'instructions déchiffré à la fois, pour leur exécution à la volée.
* avant émission d'un message par le SoC, l'unité CMMU insère le haché (#P1) du programme en cours d'exécution dans le message à émettre, ainsi que la signature de ce haché par le CMMU au moyen de ladite clé privée secrète du SoC.
* avant émission d'un message par le SoC, l'unité CMMU insère le haché (#P1) du programme en cours d'exécution dans le corps du message à émettre qu'elle signe au moyen de la clé privée secrète du SoC.
* un SoC est apte à émettre un message ayant un même haché pour le programme en cours d'exécution (#P1) et pour le programme à exécuter par le destinataire (#P1 = #P2), ce programme (P1 = P2) étant un engagement exécutable (smart contract) dans le cas où le destinataire dudit message est un SoC.

On propose selon un autre aspect un système-sur-puce SoC destiné à former un noeud Wallet Node (WN) d'un réseau, comprenant une unité de gestion cryptographique de mémoire avec chiffrement (CMMU) apte à assurer une exécution en aveugle (blind) de programmes par au moins un processeur du SoC, dans lequel :
- dans l'unité CMMU est mémorisée (ou dynamiquement régénérée) de façon inaccessible autrement que par l'unité CMMU une clé privée (clé secrète),
- l'unité CMMU est apte à mémoriser au moins un programme à exécuter après chiffrement par l'unité CMMU et à générer un haché du ou de chaque programme permettant de retrouver le programme chiffré,
- ledit processeur n'est apte à exécuter des programmes que sur commande de l'unité CMMU,
- les interactions entre le système-sur-puce et d'autres noeuds du réseau s'effectuent exclusivement par messages et les messages sont reçus/émis par l'unité CMMU exclusivement,
- les messages comprennent l'identification d'un certain programme à exécuter, identifié par son haché,
- en réponse à la réception d'un message, l'unité CMMU (i) accède au programme chiffré à exécuter à partir du haché du programme reçu dans le message (notamment via une table PHT), (ii) déchiffre les instructions du programme, et (iii) transmet au processeur pour exécuter les instructions déchiffrées sur lesdites données reçues.

Avantageusement mais facultativement :
* le ou au moins un processeur est apte à accéder à, et à manipuler (création, mise-à-jour, suppression), via l'unité CMMU, des variables persistantes d'état (PSV) associées à un programme donné, lesquelles sont également chiffrées et stockées en mémoire par l'unité CMMU et déchiffrées à la volée.
* ledit programme à exécuter et ses variables persistantes d'état (PSV) sont mémorisés dans un espace d'adressage spécifique assurant leur isolement par rapport aux autres programmes.
* un message est susceptible de contenir une ou plusieurs transactions de transfert d'unités de compte (UA) d'un noeud émetteur vers un noeud récepteur, les unités de compte reçues par un noeud récepteur étant susceptibles d'être à nouveau transférées par une transaction contenue dans un message émis par ledit noeud récepteur.
* le procédé comprend un espace de mémoire pour des unités de compte (tags) reçues par des transactions.
* le procédé est apte à combiner des unités de compte de différents tags dans une même transaction à émettre.
* l'unité CMMU comprend des moyens neutralisation d'un tag qui alimente une transaction émise, de telle sorte que les UA ainsi consommées ne puissent être consommées par une autre transaction.
* l'unité CMMU comprend des moyens de contrôle de l'utilisation des tags par les différents programmes, de telle sorte que seul un programme habilité puisse alimenter une transaction à générer à partir d'un tag donné.
* ladite mémoire est dans le SoC.
* ladite mémoire est séparée du SoC.
* un programme peut alternativement être déclenché sur écoulement d'un timeout pour un programme donné et l'unité CMMU est également apte, sur survenance d'un timeout associé au haché d'un programme (i) à accéder en mémoire au programme chiffré à partir de ce haché, (ii) déchiffrer les instructions du programme, et (iii) transmettre au processeur pour exécution les instructions déchiffrées.
*l'unité CMMU effectue lesdits chiffrement et mise en mémoire bloc d'instructions par bloc d'instructions et fournit audit processeur un seul bloc déchiffré à la fois, pour exécution à la volée.
* avant émission d'un message, l'unité CMMU insère le haché (#P1) du programme en cours d'exécution dans le message à émettre, ainsi que la signature de ce haché par le CMMU au moyen de ladite clé privée secrète.
* avant émission d'un message, l'unité CMMU insère le haché (#P1) du programme en cours d'exécution dans le corps du message à émettre qu'elle signe au moyen de ladite clé privée secrète.
* l'unité CMMU est apte à émettre un message ayant un même haché pour le programme en cours d'exécution (#P1) et pour le programme (#P2) à exécuter par le destinataire (#P1 = #P2), ce programme (P1 = P2) étant ainsi un engagement exécutable (smart contract) dans le cas où le destinataire dudit message est aussi un SoC où, avant émission d'un message par le SoC, le SoC insère le haché (#P1) du programme en cours d'exécution dans le message à émettre, ainsi que la signature de ce haché au moyen de ladite clé privée secrète du SoC.
* certains messages (WM) constituent des messages de transfert de tags mémorisés dans des systèmes avec un espace de mémoire pour des unités de compte (tags) reçues par des transactions, et la validation d'un message de transfert de tag au niveau d'un noeud destinataire est réalisée seulement s'il existe en intersection entre l'ensemble des noeuds miroirs du noeud destinataire et l'ensemble des noeuds miroirs de chacun des noeuds amonts à partir desquels un tel tag a été initialement transféré un nombre de nœuds supérieur à un seuil donné.

On propose selon un autre aspect un système transactionnel à architecture répartie en peer-to-peer, mettant en oeuvre des transactions permettant de transférer des unités de compte entre noeuds émetteurs d'unités et noeuds receveurs d'unités, chaque transaction ayant en entrée un input se référant à un output d'une transaction précédente (ou plusieurs inputs se référant chacun à un output d'une transaction précédente) et ayant elle-même au moins un nouvel output spécifiant un nombre d'unités de compte et un noeud receveur, chaque transaction pouvant être validée par insertion, dans une chaîne de blocs mémorisée de façon répartie entre les noeuds, d'une signature de la transaction,, caractérisé en ce qu'au moins certaines des transactions sont réalisées par des noeuds aptes à assurer une condition de blindness desdites transactions, en ce qu'il comprend des moyens pour traiter un ensemble de transactions satisfaisant à la condition de blindness de manière à simplifier cet ensemble en fonction des quantités d'unités de compte et des adresses des noeuds émetteurs et des noeuds récepteurs impliqués dans ces transaction, pour générer un ensemble de transactions réduit, et pour ne générer et mémoriser dans la chaîne de blocs que les signatures de transactions de l'ensemble de transactions réduit.

On propose selon un autre aspect un système transactionnel à architecture répartie en peer-to-peer, mettant en oeuvre des transactions permettant de transférer des unités de compte entre noeuds émetteurs d'unités et nœuds receveurs d'unités, chaque transaction ayant en entrée un input se référant à un output d'une transaction précédente (ou plusieurs inputs se référant chacun à un output d'une transaction précédente) et ayant elle-même au moins un nouvel output spécifiant un nombre d'unités de compte et un noeud receveur, chaque transaction pouvant être validée par insertion, dans une chaîne de blocs mémorisée de façon répartie entre les noeuds, d'une signature de la transaction,, caractérisé en ce qu'au moins certaines des transactions sont réalisées par des noeuds aptes à assurer une condition de blindness desdites transactions, en ce qu'il comprend des moyens pour traiter un ensemble de transactions satisfaisant à la condition de blindness de manière à simplifier cet ensemble en fonction des quantités d'unités de compte et des adresses des noeuds émetteurs et des noeuds récepteurs impliqués dans ces transaction, pour générer un ensemble de transactions réduit, et pour ne générer et mémoriser dans la chaîne de blocs que certaines des signatures dudit ensemble réduit et que sur instruction des noeuds concernés.

On propose selon un autre aspect un procédé pour réaliser une transaction entre noeuds d'un réseau associés à des utilisateurs et susceptibles de transférer entre eux des unités de comptes et capables de communiquer entre eux par messages, chaque message désignant un programme WP à exécuter dans le noeud récepteur de ce message, et les utilisateurs étant capables de diffuser des éléments d'offres comprenant un ou plusieurs critères d'offres et susceptibles de donner lieu à des transactions sur le réseau, le procédé comprenant les étapes suivantes :
- envoi par un noeud offreur à un noeud demandeur d'un utilisateur ayant émis des éléments d'offre correspondants, d'un message d'offre de fourniture répondant au(x) critère(s) et engageant ledit noeud, et identifiant un programme WP donné,
- envoi par le noeud demandeur au noeud offreur d'un message d'acceptation de l'offre de fourniture, identifiant le même programme WP donné,
- génération d'une attestation de réalisation, d'existence ou mise à disposition de la fourniture accessible par le noeud offreur, susceptible d'être vérifiée par ledit programme WP donné,
- vérification de l'attestation par le programme WP donné au niveau de l'un des deux noeuds au moins, et
- si la vérification réussit, génération au niveau du noeud demandeur d'un message de transfert d'unités de compte constituant la contrepartie de la fourniture et envoi de ce message au noeud offreur.

Selon un autre aspect avantageux, dans un procédé selon le second aspect mis en oeuvre dans un réseau comprenant des noeuds à connexions quasi-réelles établies selon le procédé selon le troisième aspect, les connexions quasi-réelles sont considérés comme des connexions réelles au sens du procédé, avec un poids tenant compte du caractère quasi-réel de la connexion.

### Brève description des dessins

D'autres aspects, buts et avantages des systèmes et procédés décrits ici apparaîtront clairement à la lumière de la description détaillée qui suit, donnée à titre d'exemple et faite en référence aux dessins annexés, sur lesquels :
Les Figures 1a, 1b et 2a, 2b présentent des procédés de calcul de poids de connexion des noeuds de l'entourage de l'utilisateur.
Les Figures 3a à 3d présentent schématiquement des envois de messages entre noeuds miroirs.
La Figure 4 illustre une utilisation d'une variable persistante d'état (tag) par deux programmes WP sur un Wallet Node.
Les Figures 5a et 5b présentent schématiquement des transactions de transfert de tags.
La Figure 6 présente schématiquement le comportement des noeuds miroirs dans le cas d'une chaine de messages transmettant des transactions de transfert de tags.
La Figure 7 illustre un message comportant une spécification de l'ensemble des hash des codes exécutables valides.
La Figure 8 illustre la propagation d'accusés de réception entre Wallet Nodes.
La Figure 9 présente schématiquement un exemple de paiements effectués entre Wallet Nodes par transactions Bitcoin abstraites.
Les Figures 10 à 15 présentent schématiquement les transactions Bitcoin réelles correspondant aux transactions abstraites de la Figure 9.
La Figure 16 présente schématiquement un autre exemple de paiements effectués entre Wallet Nodes par transactions Bitcoin abstraites.
Les Figures 17 à 19 présentent schématiquement les transactions Bitcoin réelles correspondant aux transactions abstraites de la Figure 16.

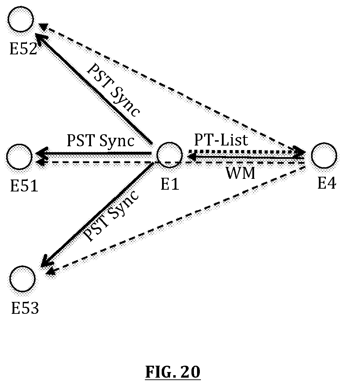

La Figure 20 présente schématiquement le procédé pour garantir les engagements d'un Wallet Node qui deviendrait non-responsive.
La Figure 21 présente schématiquement un SoC comprenant une unité CMMU recevant un programme exécutable.
La Figure 22 présente schématiquement un SoC comprenant une unité CMMU recevant un message comprenant des données d'entrée pour un programme à exécuter.
La Figure 23 présente l'architecture générale d'un Wallet Node.
La Figure 24 présente sous forme de schéma-bloc l'architecture générale d'un Body-SoC et d'un module de capteur ou d'actionneur associé.
La Figure 25 présente sous forme de schéma-bloc fonctionnel la façon dont le Body-SoC implémente potentiellement différents WN, et les différents types de mémoires.
La Figure 26 illustre une fonctionnalité de sécurisation de transactions en chaîne arborescente.
Les Figures 27 à 29 présentent schématiquement des transactions en chaîne arborescente non obligatoirement broadcastées et un processus de sécurisation associé.

### Description détaillée de formes de réalisation préférées

Dans la suite, le terme "utilisateur" pourra désigner, selon le contexte, un noeud particulier d'un réseau, chaque noeud possédant une paire de clés cryptographiques. Par ailleurs, le terme "utilisateur", sauf lorsque l'on parle explicitement d'un utilisateur humain, peut désigner un dispositif ou un programme qui lui est associé. Par exemple, une indication du type « l'utilisateur A envoie à l'utilisateur B telle donnée » signifiera que « le dispositif ou programme associé à l'utilisateur A envoie telle donnée au dispositif ou programme associé à l'utilisateur B ». Enfin, vis-à-vis d'un dispositif ou programme donné, le terme « utilisateur » peut dans certains cas désigner un autre dispositif ou programme.

On va maintenant décrire un certain nombre d'aspects d'un tel réseau où les noeuds sont des « Wallet Nodes » WN associés respectivement à des utilisateurs U et capables de communiquer entre eux par des « Wallet Messages » WM en vue de matérialiser différents types de transactions ou d'engagements (typiquement de type smart contracts) touchant les utilisateurs U auxquels sont associés les WN.

Ces WN constituent les noeuds d'un graphe avec des liaisons entre les WN constituant les arêtes du graphe.

Les WN peuvent être de différents types (soft ou système-sur-puce ou enclave) et les liaisons entre WN peuvent être notées ou pondérées. Un message WM ne peut être envoyé par un WN d'origine à un WN de destination que si la liaison entre les deux WN considérés satisfait à une certaine notation et/ou pondération.

Un exemple d'un tel réseau est décrit dans la demande PCT WO2016120826A2 au nom du demandeur.

On utilise les termes « entité », « Wallet Node », « WN » ou simplement « noeud » pour désigner un noeud d'un tel réseau, et un tel noeud est identifié par sa clé publique ou une adresse qui en est dérivée, ces termes « clé », « adresse » pouvant être utilisé pour signifier identifiant d'un noeud, et réciproquement.

La Figure 23 présente l'architecture d'un WN. En référence à cette figure, les messages "Quasi-WM" sont des messages (en réception) qui ne sont pas émis par un WN mais dont le format est le même, en ce sens que, comme les WM, ils contiennent le haché du WP à exécuter sur réception du message. Ainsi, par exemple, lorsque l'utilisateur initie une transaction (via son terminal auquel est couplé le WN), son message "Quasi-WM" comporte le haché du WP de génération de cette transaction (cette information étant automatiquement ajoutée par le terminal). Autre exemple, lorsqu'un WP sous-traite un traitement "non léger" (voir ci-dessous) à un ordinateur distant, le résultat lui est retourné sous la forme d'un message "Quasi-WM" comportant le haché du WP qui le lui a sous-traité.

Avantageusement, cette architecture prévoit que les traitements du processeur (PROCESSOR) sont légers et que les émissions de messages WM et Non-WM sont non-bloquants :
- Non-bloquant: Une réponse d'un WN par rapport à un *WM* est un autre WM qui fait référence au premier. N'est pas bloquante non plus l'exécution d'un WP en attente de la réponse de "User" ou "Network" à un message *"Non-WM"* émis - "User" étant le terminal de l'utilisateur (tel qu'un ordinateur) et "Network" représentant un dispositif distant (tel qu'un ordinateur) - ces messages étant des appels asynchrones dont le retour (callback) est transformé en un message "Quasi-WM".
- Léger: Lorsqu'un WP doit effectuer un traitement qui n'est pas léger (par exemple, multiplier deux matrices d'une centaine de lignes fois une centaine de colonnes), il le sous-traite (par un message *"Non-WM*") à un ordinateur apte à exécuter des traitements dans un environnement sécurisé (tel que l'enclave SGX des nouveaux microprocesseurs Intel) et apte à retourner une attestation d'authenticité et d'intégrité de l'exécution [https://software.intel.com/en-us/articles/intel-software-guard-extensions-remote-attestation-end-to-end-example].

Le but des messages "HTTPS" émis par un WN est de lui permettre d'accéder à une source de données (dans un site Web "de confiance") en protocole HTTPS *de bout en bout.* Pour ce faire, le WN prend en charge les handshakes TLS (pouvant être mis en oeuvre en utilisant une librairie telle que "mbed TLS" [https://tls.mbed.org/] dont les modules sont faiblement couplés et qui permette d'en utiliser des parties sans avoir à inclure la bibliothèque totale) et performe toutes les opérations cryptographiques, en laissant au terminal auquel il est couplé le rôle d'interface d'entrée/sortie prenant en charge les couches basses (TCP), pour assurer l'intégrité desdites données de bout en bout.

Avantageusement, comme pour les traitements "non légers" (qui sont sous-traités par messages Non-WM), les messages en HTTPS considérés "bloquants" sont sous-traités à un ordinateur apte à retourner une attestation d'authenticité et d'intégrité d'exécution (enclave SGX). En pratique, les messages HTTPS émis qui s'avèrent être bloquants (après une durée égal à un seuil donné) sont annulés et sous-traités d'office.

Le fait que les messages soient légers et non-bloquants permet une mise en oeuvre des WN ne nécessitant pas la technologie la plus récente de fabrication de chips et la met à la portée d'un plus grand nombre de fabricants de WN (et en baisse le cout), tendant ainsi à favoriser la décentralisation même au niveau des fabricants, ce qui est un des buts visés par l'invention. On décrit plus loin des classes d'applications (à la section "marché de connaissances sans tiers de confiance").

Enfin, la figure 23 montre que les WM sont susceptibles de transférer des valeurs (tags), sous forme de transactions (tx) ce qui est décrit plus loin aux sections « Tags », « CMMU - Crypto Memory Management Unit » et « Perfectionnements aux CCC ».

On va maintenant décrire en détail un certain nombre d'aspects et caractéristiques de systèmes basés sur de tels WN.

### Identité décentralisée

On va tout d'abord décrire un procédé pour attribuer à un WN un poids de connexion, basé sur des identifications entre utilisateurs de WN en parcourant différents chemins du graphe, puis différents procédés utilisant de tels poids de connexion.

### Communication sur Out-of-Band-Channel

Pour s'identifier de manière décentralisée, des individus peuvent, via des terminaux intelligents respectifs, s'échanger leurs clés publiques respectives directement et se confirmer les uns les autres les attributs qui y sont associés. Il est essentiel à cette étape de se protéger d'une attaque de personne interposée dite MitM (« Man in the Middle attack» en terminologie anglo-saxonne). Un exemple de méthode pour que deux individus s'échangent leurs clés sans risque de MitM (méthode adaptable pour n individus) est le suivant :
1. Un premier utilisateur (et son terminal, par exemple un téléphone mobile) s'approche d'un autre utilisateur et lui montre un Nonce (un nombre aléatoire servant une seule fois), présenté sous forme d'un QR code généré dans son terminal à partir de ce Nonce.
2. Ledit autre utilisateur (qui se trouve à proximité, au moyen de son terminal) photographie ce QR code, l'interprète pour reconstituer ce Nonce, calcule son haché (par haché on entend le résultat de l'application d'une fonction de hachage cryptographique prédéterminée commune), et retourne au premier utilisateur sa propre clé publique en clair et sa signature (du haché) dudit nonce. (A noter que, au lieu - ou en plus - du QR code, un « passphrase » secret peut être communiqué par oral, ceci peut se faire par téléphone si l'autre utilisateur n'est pas à proximité, et l'autre utilisateur calcule dans son terminal le haché de ce « passphrase » au lieu du haché du Nonce, puis en retourne sa signature avec sa clé.)
3. Le terminal du premier utilisateur vérifie la signature par rapport à la clé reçue et au Nonce (et/ou passphrase) et enregistre la clé (publique) de l'autre utilisateur.
4. Dans la mesure où leurs terminaux sont fiables (voir la description des Wallet Nodes dans WO2016120826A2), les deux utilisateurs peuvent maintenant se communiquer des informations chiffrées (optionnellement en générant/utilisant une clé symétrique commune par Diffie-Hellman) - à commencer bien sûr par la communication par le premier utilisateur de sa clé publique (chiffrée au moyen de la clé publique de l'autre utilisateur). Ces communications incluent aussi des clés d'autres utilisateurs que chaque utilisateur a pu auparavant recevoir en utilisant la même méthode ou des clés communiquées par encore d'autres utilisateurs à ces autres utilisateurs par la même méthode, et ainsi de suite.

On dit que le noeud dudit premier utilisateur est "IRL-connecté" (IRL pour "In Real Life") au noeud de chacun desdits autres utilisateurs lui ayant communiqué sa clé par la méthode décrite ci-dessus, chaque noeud étant identifié par sa clé publique (ou une adresse qui en est dérivée).

Dans la mesure où (comme mentionné ci-dessus) les noeuds se communiquent aussi entre eux des clés de noeuds qui ne sont pas IRL-connectés mais indirectement connectés via un ou plusieurs noeuds intermédiaires, chaque noeud peut reconstituer une partie du réseau, constituant son "entourage", et associer à chaque noeud de l'entourage un "poids de connexion".

On va maintenant décrire plusieurs formes de réalisation d'un procédé de détermination, par un premier nœud (N1, l'utilisateur), des poids respectifs de connexion (vis-à-vis du premier nœud) des noeuds (appelés tous « deuxième noeud ») constituant son entourage.

Les procédés sont illustrés par un exemple de 8 IRL-connections (ou "connections réelles") dans l'entourage d'un noeud N1, composé de six noeuds (en incluant N1) dont il s'agit donc de déterminer le poids de connexion. Les connexions sont bidirectionnelles et les traits pleins représentent des IRL-connections.

Ces procédés sont mis en oeuvre selon des paramètres de configuration (tels que des seuils ou des coefficients de pondération), qui avantageusement peuvent être affinés par apprentissage.

A noter que la demande WO2016120826A2 décrit comment compléter un tel processus d'identification décentralisée, sur la base notamment d'attributs d'utilisateurs reconnus par d'autres utilisateurs et s'appuyant sur le graphe de WN.

De telles méthodes peuvent être combinées entre elles.

### Poids de connexion par distillation

Le procédé est mis en oeuvre par le premier noeud (N1), qui associe à chaque noeud de son entourage un *poids de connexion* et un *facteur d'influence* (qui sont implicitement égaux à zéro par défaut). Initialement, le premier noeud a un facteur d'influence égal à 1 (et tous les autres noeuds ont implicitement un facteur d'influence nul). Le procédé comprend les étapes suivantes :
Etape 1 : Le poids de connexion de chaque deuxième noeud est la somme normalisée des facteurs d'influence des nœuds (dits « troisièmes nœuds ») qui lui sont IRL-connectés (ou auxquels il est IRL-connecté), ajoutée à son poids de connexion précédent. Les poids de connexion sont ensuite normalisés à nouveau (c'est-à-dire divisés par 2).
Etape 2 : Le facteur d'influence de chaque troisième noeud est la somme normalisée des poids de connexion des (deuxièmes) noeuds qui lui sont IRL-connectés.
Etape 3 : le processus est répété à partir de l'étape 1 jusqu'à convergence (c'est-à-dire tant que la différence entre les derniers poids de connexion déterminés à l'étape 2 et les poids de connexion précédents reste supérieure à un seuil).

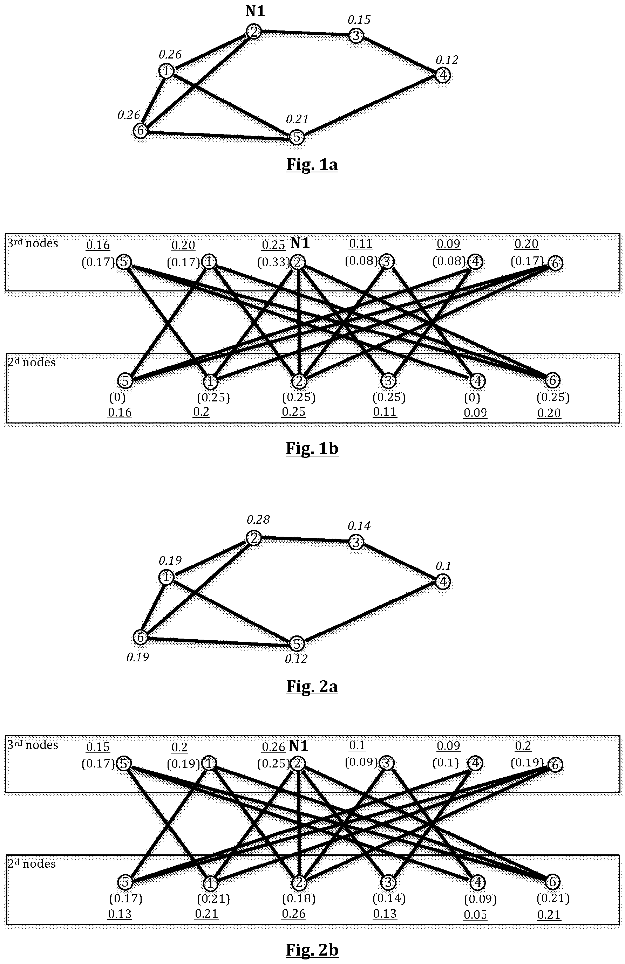

La **Figure 1a** présente un exemple d'IRL-connexions entre noeuds. Les poids de connexion résultant du procédé, associés par le premier noeud aux noeuds de son entourage sont indiqués sur chaque noeud. On remarque que le nœud 3 qui est IRL-connecté a un poids de connexion (égal à 0,15) inférieur à celui du noeud 5 (0,21) qui ne l'est pas, ceci étant dû au fait que ce dernier est indirectement connecté via le cluster des noeuds 1 et 6.

Avantageusement, le premier noeud (l'utilisateur) ne va accepter des messages (WM) que de la part de noeuds dont le poids de connexion est supérieur ou égal au plus petit poids de connexion parmi les poids de connexion des noeuds avec lesquels il est IRL-connecté. Autrement dit, pour l'utilisateur, les messages (WM) de la part de noeuds dont le poids de connexion est inférieur aux poids de connexion de tous les noeuds IRL-connectés au premier noeud ne sont pas valides. Ainsi, dans l'exemple de la **Figure 1a****,** N1 accepte les messages (WM) qui arriveraient de n'importe quel noeud de son entourage sauf du noeud 4 (dont le poids de connexion, qui est de 0,12, est inférieur aux poids de connexion de tous les nœuds IRL-connectés au premier nœud, à savoir les nœuds 1, 3 et 6).

A noter que la validation de WM pourra être mise en oeuvre avec un coefficient appliqué aux poids de connexion (déterminé selon les paramètres de configuration, comme déjà dit). Ainsi, ne sont pas valides les messages (WM) de la part de noeuds dont le poids de connexion multiplié par un coefficient donné est inférieur aux poids de connexion de tous les noeuds IRL-connectés au premier noeud.

La **Figure 1b** présente ces mêmes noeuds placés dans un ensemble de deuxièmes noeuds ("2^{d} nodes") et troisièmes noeuds "3^{rd} nodes"). Les facteurs influence respectifs des troisièmes noeuds et les poids de connexion respectifs des deuxièmes noeud sont indiqués entre parenthèses en ce qui concerne leurs valeurs à la première itération, et en souligné lorsqu'ils ont convergé.

Enfin, à l'étape 1 de ce procédé, un coefficient (déterminé selon les paramètres de configuration, notamment selon la taille de l'entourage) pourra avantageusement être appliqué auxdits poids de connexion précédents avant ajout.

### Poids de connexion comme proximité

Selon cette variante, un premier noeud (l'utilisateur) attribue un "poids de connexion" à un deuxième noeud sur la base du nombre de noeuds intermédiaires menant à lui (et de paramètres de configuration).

Par exemple, au premier noeud lui-même est associé un poids 1, aux noeuds IRL-connectés au premier noeud sont associés un poids de 0.5, aux noeuds IRL-connectés à ces derniers un poids de 0.25, et ainsi de suite en les divisant par deux (si tel est le paramètre) à chaque ajout d'un nœud intermédiaire supplémentaire.

Chaque chemin supplémentaire menant à un même noeud augmente davantage le poids de connexion associé à ce noeud. Par exemple, si à un noeud auquel est associé un poids de connexion courant de 0.25, un autre chemin apporte 0.12, le facteur associé à ce noeud est augmenté de la moitié de cet apport supplémentaire (si tel est le paramètre), i.e. 0.25+0.12/2=0.31 (à l'apport le plus fort est ajouté la moitié de l'apport supplémentaire).

Le poids de connexion est normalisé. La **Figure 2a** montre un exemple de poids de connexion "proximité" à un noeud N1, associés par ce noeud aux noeuds de son entourage.

### Procédé mixte

Un *premier nœud* (l'utilisateur) attribue un "poids de connexion" à un *deuxième nœud* comme suit : Parmi les noeuds de l'entourage du premier noeud,
- plus il y a de *troisièmes nœuds* qui sont IRL-connectés au deuxième noeud
- et plus ils sont proches du premier noeud,
   plus grand est le poids de connexion du premier noeud au deuxième,
- *l'influence* les troisièmes noeuds étant aussi fonction des poids de connexion des deuxièmes noeuds qui leurs sont IRL-connectés.

Comme pour le procédé *"Poids de connexion par distillation",* cette définition circulaire nécessite un procédé itératif, par affinages successifs jusqu'à convergence (ou quasi-convergence, c'est-à-dire jusqu'à que le gain d'une itération supplémentaire devienne négligeable), procédé où un même noeud peut tour à tour jouer le rôle de deuxième et troisième noeud.

Une mise en oeuvre du procédé peut comprendre les étapes suivantes :
Etape 1 : A chaque noeud de l'entourage de l'utilisateur est associé un facteur *proximité* (proximité au premier noeud) sur la base de paramètres de configuration, comme décrit à la section précédente *"Poids de connexion comme proximité".*
Etape 2 : A chaque (deuxième) noeud de l'entourage de l'utilisateur est associé un *poids de connexion* égal à la somme (normalisée) des proximités respectives des (troisièmes) noeuds qui y sont IRL-connectés.
Etape 3 : A chaque (troisième) noeud de l'entourage de l'utilisateur est (re-)associé un facteur *influence* égal à la somme des poids de connexion des (deuxièmes) nœuds de l'entourage de l'utilisateur. Ce facteur est normalisé.
Etape 4 : A chaque (deuxième) noeud de l'entourage de l'utilisateur est associé un nouveau *poids de connexion* égal à la somme normalisée (sur noeuds IRL-connectés au deuxième noeud) des produits "influence*proximité",
   le produit "influence*proximité" étant normalisé, c'est-à-dire égal à la somme normalisée des influences respectives des (troisièmes) noeuds de l'entourage de l'utilisateur qui sont IRL-connectés au deuxième noeud pondérées par leurs proximités respectives au premier noeud (ou autre combinaison de ces facteurs, telle que celle décrite plus bas).
Etape 5 : Répéter à partir de l'Etape 3 tant que la différence entre les derniers poids de connexion déterminés à l'étape 4 et les poids de connexion précédents reste supérieure à un seuil (basé sur des paramètres de configuration).

Ce procédé est illustré aux **Figures 2a et 2b** sur le même exemple d'un entourage de 6 noeuds dont il s'agit de déterminer le poids de connexion.

La **Figure 2a** représente les noeuds de l'entourage de l'utilisateur avec leurs facteurs proximité respectifs (calculés à l'Etape 1) par rapport au premier noeud (identifié par « 2 »), facteurs indiqués en italiques.

La **Figure 2b** représente ces mêmes noeuds dans deux ensembles: l'ensemble des troisièmes noeuds ("3^{rd} nodes") et l'ensemble des deuxième noeuds ("2^{nd} nodes"). Cette figure indique (entre parenthèses) un poids de connexion initial (calculé à l'Etape 2, par rapport au premier nœud) pour chaque deuxième nœud (comme étant la somme des proximités respectives des troisièmes nœuds qui y sont IRL-connectés). Le facteur influence initial (calculé à la première exécution de l'étape 3) est indiqué entre parenthèses à gauche de chaque troisième noeud (ce facteur est égal à la somme des poids de connexion des noeuds auxquels le troisième noeud est IRL-connecté). Le poids de connexion (par rapport au premier noeud) calculé à l'Etape 4 après convergence est indiqué en souligné (dans 2^{d} nodes).

Dans cet exemple, le poids de connexion initial de valeur 0,09 pour le noeud « 4 » (qui est indiqué entre parenthèses à la **Figure 2b** dans les deuxièmes noeuds) est obtenu en additionnant les facteurs proximité des noeuds « 3 » et « 5 » (indiqués à la **Figure 1a****)** puis en divisant le résultat de cette addition par le total des poids de connexion afin de les normaliser (0,14+0,12)/2,76=0,09). Le facteur influence initial de valeur 0,09 associé au noeud « 3 » (qui est indiqué entre parenthèses à la Figure 2b dans les troisièmes noeuds) est obtenu en additionnant les poids de connexion initiaux des noeuds « 2 » et « 4 » (qui sont indiqués entre parenthèses à la **Figure 2a** dans les deuxièmes noeuds) puis en divisant le résultat de cette addition par le total des facteurs influence afin de les normaliser (0,18+0,09)/2,96=0,09). Dans les étapes ultérieures le poids de connexion est obtenu en sommant (et en normalisant) les produits "influence*proximité". Le procédé converge ici en trois étapes pour fournir la valeur 0,1 pour le facteur influence final associé au noeud « 3 » (indiquée en souligné à la **Figure 2b** dans les troisièmes noeuds) et la valeur 0,05 pour le poids de connexion final du noeud « 4 » (indiqué en souligné à la **Figure 2b** dans les deuxièmes noeuds). Quant au poids de connexion final du noeud 5, le procédé converge en la valeur 0,13, égale à celle pour le noeud 3.

Enfin, en dernière variante, à l'étape 4 du procédé mixte, le terme "influence*proximité" de l'expression de calcul du poids de connexion peut être remplacé par une expression de type "lambda*influence + (1-lambda)*proximité", le coefficient lambda pouvant typiquement prendre la valeur 0,5. Avantageusement, à chaque itération à l'étape 5, ce coefficient est augmenté, le facteur proximité (proximité au premier noeud) de chaque troisième noeud laissant ainsi la place progressivement aux poids de connexion au premier noeud des deuxièmes noeuds qui lui sont IRL-connectés.

Différentes formes de réalisations d'un procédé de détermination des poids de connexion, telles que celles présentées ci-avant ou dans la demande WO2016120826A2, peuvent être combinées. Avantageusement, leurs résultats peuvent être pondérés selon des coefficients affinés par apprentissage. Ces résultats permettent au premier nœud (l'utilisateur) de valider d'autres nœuds dans le cadre des différents procédés présentés dans ce texte.

### Communication de clé en redondance

Les poids de connexion permettent d'utiliser une méthode de connexion analogue à celle décrite plus haut à la section *"Communication sur Out-of-Band-Channel",* mais *de manière automatique,* si l'on utilise une pluralité de noeuds en redondance.

Un procédé mettant en oeuvre cette méthode est décrite ci-dessous sur un exemple d'échange de clé entre un premier noeud (Alice) et un deuxième noeud (Bob) via des noeuds intermédiaires ayant un fort poids de connexion vis-à-vis du premier noeud. Pour cette mise en oeuvre, les WN correspondant à ces noeuds sont aptes à recevoir ou émettre des messages sur une pluralité de canaux (tels que SMS, email, etc.). Ce procédé comprend les étapes suivantes :
1. Le WN de Alice sélectionne N noeuds intermédiaires parmi ceux ayant les plus grands poids de connexion au noeud d'Alice et de préférence ayant, le cas échéant, les plus grands poids de connexion au noeud de Bob (ici trois noeuds intermédiaires sont sélectionnés (N=3), ce nombre étant déterminé selon des paramètres de configuration, en fonction notamment de la valeur de ces poids de connexion), et leur communique de manière chiffrée un Nonce à communiquer au noeud de Bob;
2. Les WN desdits nœuds intermédiaires utilisent un canal séparé et aisément automatisable, tel que des SMS, pour communiquer (en redondance) ce même Nonce au noeud de Bob, ainsi que leurs clés publiques respectives (c'est d'autant mieux s'ils utilisent des canaux différents entre eux);
3. Le WN du noeud de Bob détecte l'arrivée de ces Nonces et retourne, auxdits noeuds intermédiaires, sa signature de ce Nonce et sa clé publique chiffrée au moyen des clés publiques de ces derniers;
4. Les WN desdits noeuds intermédiaires vérifient la signature par le noeud de Bob de ce Nonce (en la décryptant avec sa clé publique et en en vérifiant le hash) et, en cas de succès, communiquent au WN d'Alice la clé du noeud de Bob signée par eux-mêmes et chiffrée avec la clé publique d'Alice;
5. Le WN d'Alice enregistre alors la clé du noeud de Bob et peut alors échanger avec ce noeud des informations chiffrées.

Les clés ainsi échangées peuvent alors représenter des connexions d'autant plus sûres que lesdits poids de connexion desdits noeuds intermédiaires sont forts et que leur nombre est significatif. Les connexions avec les noeuds pour lesquels lesdits noeuds intermédiaires ont des poids de connexion forts et sont en nombre suffisant sont marqués « quasi-réelles » et le procédé de détermination de poids de connexion (tels que ceux décrits plus haut : « Poids de connexion par distillation », « Poids de connexion comme proximité » et « Procédé mixte ») les assimilent à des IRL-connexions, à un coefficient près.

Avantageusement, à l'étape 1 du procédé ci-dessus, au lieu que ce soit le WN d'Alice qui génère ledit Nonce individuellement, ce Nonce est généré *conjointement* avec les WN desdits noeuds intermédiaires sélectionnés. Ce procédé complémentaire est aussi automatique et comprend les étapes suivantes :
1. génération d'un nonce par chacun desdits WN des N noeuds sélectionnés ainsi que par le WN d'Alice (chacun génère un nonce séparément et le garde secret jusqu'à l'étape 3);
2. échange (de manière chiffrée) entre ces WN, de hachés desdits nonces respectifs qu'ils ont générés (sans encore dévoiler les nonces eux-mêmes);
3. échange (de manière chiffrée) entre ces WN, des nonces en clair et chaque noeud récepteur vérifie que les nonces reçus correspondent bien aux hachés respectifs reçus à l'étape 2;
4. génération du Nonce final (celui à communiquer à Bob) par combinaison, selon une règle commune préconvenue (telle que de simples opérations arithmétiques), desdits nonces respectifs qu'ils ont générés.

Par ailleurs, à l'étape 2 du procédé de "Communication de clé en redondance », les nœuds intermédiaires ne communiquent pas simplement un même Nonce final au noeud de Bob, mais communiquent aussi lesdits nonces respectifs qu'ils ont chacun générés séparément (comme décrit ci-dessus); à l'étape 3 Bob signe l'ensemble de ces nonces reçu ; ce qui permet aux N noeuds intermédiaires de s'assurer à l'étape 4 que Bob a bien reçu les N nonces qu'ils lui ont communiqués au total.

Avantageusement, dans le cas où, de part et d'autre, les poids de connexion d'un nombre suffisant de noeuds intermédiaires sont forts (vis-à-vis d'Alice et vis-à-vis de Bob), le WN du premier noeud (Alice) obtient la clé du deuxième noeud (Bob) directement à partir de ces noeuds intermédiaires.

### Exploiter un réseau Social existant

On va maintenant décrire une application « app WN » sur un réseau social. L'utilisateur "Alice" de cette app en constitue l'un des noeuds. Cette app est apte à recevoir et émettre des messages sur une pluralité de canaux (tels que SMS, email, etc.).

A l'installation, l'app WN :
- génère sa paire de clés privée/publique (à moins que l'app WN soit couplée avec un hard WN (système-sur-puce ou enclave, décrits plus loin, auquel cas cette paire de clés existe déjà),
- mémorise une liste de noeuds "amis" ("Friends") directement connectés, fournie par le réseau social :
   *Friends(Alice)*
- et détermine (par requêtes aux amis) quels sont les amis qui ont l'app WN installée (et les amis qui ne l'ont pas sont invités à l'installer) :
   *FriendsWN(Alice)*

Dans la mesure ou certains noeuds sont IRL-connectés et servent d'intermédiaires, le poids de connexion d'un ami peut être déterminé selon le procédé décrit plus haut, être ajouté comme attribut dans ladite liste des noeuds amis et être rendu accessible à partir de cette liste. Ainsi, les amis ayant un poids de connexion supérieur à un seuil donné (ce seuil étant déterminé selon des paramètres de configuration) peuvent être retrouvés par un appel de fonction tel que le suivant :
*FriendsWNConnected(Alice)*

Pour être IRL-connecté à un nœud ami "Bob" faisant partie de FriendsWN(Alice), Alice peut lui communiquer via un Out-of-Band-Channel un Nonce que Bob doit lui retourner signé, comme décrit plus haut.

Cependant, le réseau social peut être exploité pour communiquer la clé de l'app WN du noeud Bob selon un procédé *automatique* (simplement en étendant le procédé décrit à la section "Communication de clé en redondance") :
1. L'app WN du noeud Alice sélectionne N amis, parmi les éléments de l'intersection entre *FriendsWNConnected(Alice)* et *FriendsWN(Bob),* ayant les plus grands poids de connexion au noeud d'Alice et de préférence ayant aussi les plus grands poids de connexion au noeud de Bob (ici N=3, ce nombre N étant déterminé selon des paramètres de configuration, en fonction notamment de la valeur de ces poids de connexion), et leur communique de manière chiffrée un Nonce à communiquer à l'app WN du noeud Bob;
2. Les app WN respectifs de ces amis utilisent un canal séparé et aisément automatisable, tel que des SMS, pour communiquer (en redondance) ce même Nonce à l'app WN de Bob, ainsi que leurs clés publiques respectives (c'est d'autant mieux si ces amis utilisent des canaux différents entre eux);
3. L'app WN de Bob détecte l'arrivée de ces Nonces et publie dans le réseau social (sur son mur) sa clé publique et sa signature de ce Nonce - de plus, facultativement, l'app WN de Bob retourne directement, aux app WN desdits trois amis d'Alice, sa signature de ce Nonce et sa clé publique chiffrées au moyen des clés publiques de ces derniers;
4. Les app WN respectifs desdits trois amis d'Alice vérifient la signature par l'app WN de Bob de ce Nonce (en la décryptant avec sa clé et en en vérifiant le hash) et, en cas de succès, communiquent à l'app WN d'Alice la clé du noeud de Bob signée par eux-mêmes et chiffrée avec la clé publique d'Alice (avantageusement en plus il certifient cette clé en en publiant leur propre signature sur le mur de Bob);
5. L'app WN d'Alice vérifie alors (double-check) la clé du noeud de Bob en décryptant sa signature publiée sur son mur avec cette clé et en en vérifiant le hash du Nonce, enregistre la clé du noeud de Bob et peut maintenant, en cas de succès, échanger avec le noeud de Bob des informations chiffrées.

Ici encore, les connexions avec les noeuds pour lesquels lesdits amis ont des poids de connexion forts et sont en nombre suffisant sont marqués « quasi-réelles » et le procédé de détermination de poids de connexion les assimilent à des IRL-connexions, à un coefficient près.

Avantageusement, la clé publique de Bob publiée par Bob dans le réseau social est en permanence accessible par au moins tous les noeuds connectés à Bob en tant qu'amis.

Et ici encore, avantageusement, à l'étape 1 du procédé ci-dessus, au lieu que ce soit l'app WN d'Alice qui génère ledit Nonce individuellement, ce Nonce est généré *conjointement* avec les app WN desdits noeuds amis sélectionnés. Ce procédé complémentaire est le même que celui présenté plus haut, à ceci près que les WN sont ici des app WN.

Puis comme aussi décrit plus haut, lesdits N amis vont aussi communiquer à Bob les nonces différents (respectivement) à partir desquels le nonce final a été généré, ce qui leur permettra de vérifier que Bob a bien reçu les N nonces qu'ils lui ont communiqués au total.

Enfin, dans le cas où, de part et d'autre, les poids de connexion d'un nombre suffisant de nœuds intermédiaires sont forts (vis-à-vis d'Alice *et* vis-à-vis de Bob), le WN du premier noeud (Alice) obtient la clé du deuxième noeud (Bob) directement à partir de ces noeuds intermédiaires. Ainsi, pour se connecter à l'app WN d'un noeud "Bob", un noeud "Alice" peut lui demander (par message WM) ses amis ayant un fort poids de connexion :
*FriendsWNConnected(Bob),*
   en prendre l'intersection avec ses propres amis fortement connectés :
*FriendsWNConnected(Alice),*
   et si cette intersection n'est pas nulle, demander la clé de Bob à un sous-ensemble de cette intersection composé des amis sélectionnés parmi ceux ayant les plus grands poids de connexion.

### WN Miroirs

Avantageusement, on crée une redondance pour chaque noeud avec des "noeuds miroirs" dans lesquels les données sont tenues synchronisés et dont certains effectuent les traitements en miroir, pour en même temps :
- pallier la « *non-responsiveness* » et
- mitiger le risque de violation (« *tampering* »)*.*

### Définition:

Un "noeud" (Wallet Node) est maintenant un noeud virtuel (noté VWNₓ pour « virtual wallet node » de l'utilisateur x), matérialisé par une pluralité de noeuds miroirs comprenant:
- un noeud réel RWN (correspondant audit noeud virtuel) et
- un ensemble de noeuds contresignataires CWN.

Dans cet aspect de l'invention, deux noeuds (WN) ne peuvent être liés par des *« smart contracts »* (cf. les smart contracts "Wallet Program" (WP) décrits dans la demande PCT WO2016120826A2) s'exécutant sur leurs noeuds respectifs, que seulement :
- s'ils sont associés chacun à un nombre supérieur à un premier seuil donné de noeuds miroirs communs ayant des poids de connexion (vis-à-vis de chacun de ces deux noeuds) qui soient supérieurs à un deuxième seuil (seuils déterminés selon des paramètres de configuration) et
- lorsque deux noeuds interagissent par exécution d'un smart contract (WP), un message (WM) envoyé de l'un à l'autre n'est valide que si au moins 10% (ou autre pourcentage aussi déterminé selon des paramètres de configuration, ou un nombre donné aussi déterminé selon des paramètres de configuration) de noeuds miroirs communs ont exécuté ce contrat à l'identique ("en miroir") et ont émis un message (WM) identique à destination de l'autre noeud.

En d'autres termes, un noeud destinataire d'un message (WM) ne valide ce message que *si* les ensembles respectifs de noeuds miroirs des noeuds émetteur et destinataire ont une intersection dont le nombre d'éléments est supérieur à un premier seuil donné *et si* le noeud destinataire a reçu ce même message (en redondance) de la part d'au moins un nombre donné ou une fraction donnée (correspondant à un second seuil, toujours en fonction des paramètres de configuration) desdits noeuds miroirs appartenant à cette intersection.

Par exemple, l'app WN réel du noeud Bob ne va considérer comme valide un message WM envoyé par l'app WN réel du noeud Alice que s'il reçoit aussi ce message émis (au nom du noeud Alice) de la part d'au moins 10% de leurs noeuds miroirs en commun (qui sont par exemple aussi des app WN). Chaque noeud exécutant des Wallet Programs synchronise ses données, à savoir: les variables PSV - Program State Variables - et NSV - Node State Variables, ainsi que ses "Tags" (décrits plus loin) sur l'ensemble de ses noeuds miroirs, cet ensemble incluant *l'union* de tous les ensembles respectifs de noeuds miroirs qui sont en commun avec les noeuds avec lesquels ledit chaque noeud a un Wallet Program actif.

Lesdites *synchronisations de données* s'effectuent :
- en partie par envoi (par Wallet Program) de message WM qui déclenchent la mise à jour des données (PSV, NSV et tags) par des (mêmes) Wallet Programs qui s'exécutent sur les noeuds receveurs et,
- pour les noeuds qui ne les reçoivent pas, les données sont synchronisées directement par des WM de notification de mise-à-jour de données.

Chaque noeud synchronise *la liste de ses nœuds miroirs* avec les noeuds avec lesquels il a un poids de connexion supérieur à un seuil, et lesdites synchronisations de données s'y effectuent par rapport à ces listes de noeuds miroirs. La synchronisation des listes s'effectue par des WM correspondants.

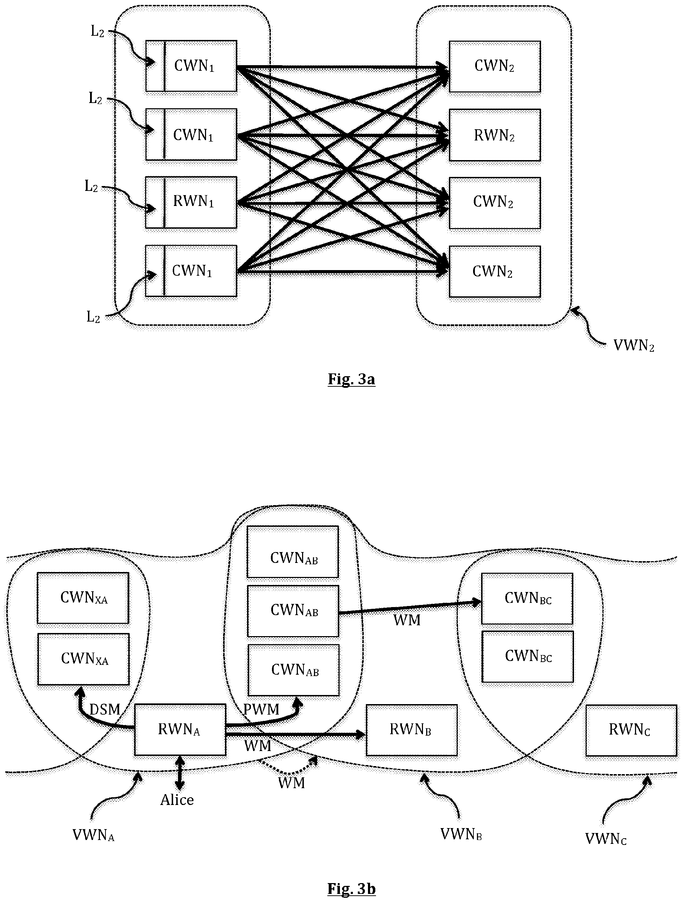

La **Figure 3a** illustre la propagation d'un WM à partir d'un VWN1 donné vers un VWN2 destinataire. Les noeuds miroirs RWN1, CWN1 mémorisent chacun la liste L2 des nœuds miroirs de VWN2 afin de pouvoir aiguiller le WM de contenu identique pour tous les noeuds miroir d'émission et les noeuds miroir de destination.

La **Figure 3b** décrit de manière plus fine les envois de messages entre noeuds miroirs. Elle montre, parmi les ensembles de noeuds contresignataires *en commun,* CWN_{AB} entre les noeuds d'Alice et Bob d'une part, et CWN_{BC} entre les noeuds de Bob et Carl d'autre part, l*'union* de ces deux ensembles (+ le noeud réel de Bob RWN_{B}) étant l'ensemble des noeuds miroirs du noeud de Bob qui sont synchronisés suite à n'importe quel message WM envoyé au noeud de Bob.

Ainsi, les noeuds d'Alice et Carl connaissent chacun non seulement leurs noeuds miroirs respectifs en commun avec le noeud de Bob, mais l'ensemble entier de noeuds miroirs du noeud Bob (grâce à la synchronisation de liste de nœuds miroirs évoqué plus haut).

La **Figure 3b** montre aussi un message WM généré par le noeud d'Alice suite à une interaction avec l'utilisateur (Alice), message WM qui doit être envoyé au noeud de Bob. En premier, un message d'annonce (noté PWM pour « pre-wallet-message ») du message WM est envoyé par le noeud réel d'Alice RWN_{A} aux noeuds miroirs d'Alice CWN_{AB} qui sont en commun avec le noeud de Bob (un seul PWM étant illustré pour ne pas alourdir la figure), et les autres noeuds CWN_{XA} d'Alice reçoivent un message de synchronisation de données (noté DSM pour « data sync message »). Ensuite, le noeud réel d'Alice RWN_{A}, ainsi que chacun desdits noeuds contresignataires CWN_{AB} en commun avec le noeud de Bob, envoient le message WM en question au noeud de Bob, c'est-à-dire au noeud réel de Bob RWN_{B} et aux noeuds contresignataires du noeud de Bob (seule une partie de ces messages WM étant illustré pour ne pas alourdir la figure).

On notera ici que lorsqu'un tel WN doit être envoyé par un CWN à lui même, il n'est pas émis (ici CWN_{AB} n'envoie pas le WN à lui-même).

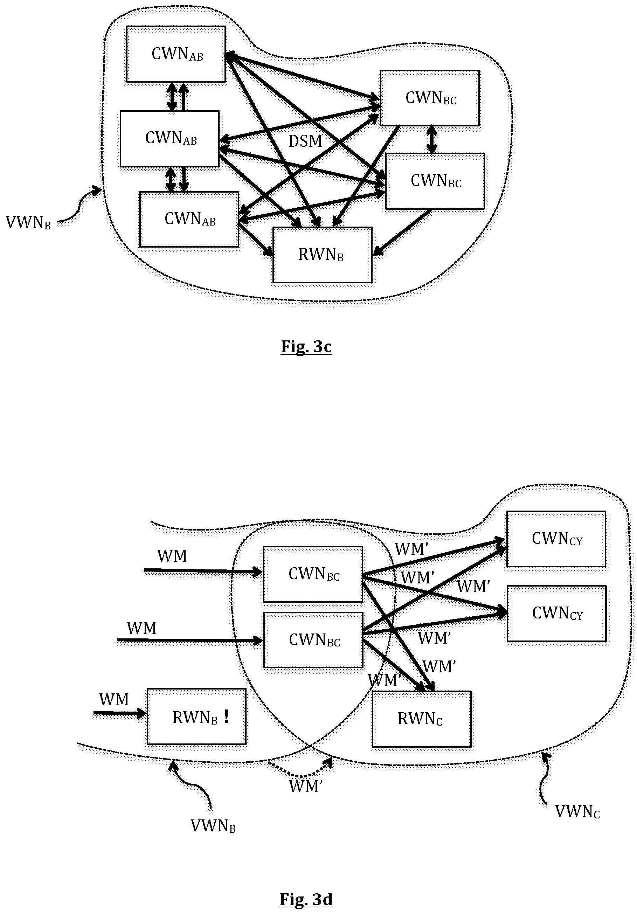

La **Figure 3c** montre une phase de tentative de synchronisation de l'ensemble des noeuds miroirs (RWN_{B}, CWN_{AB}, CWN_{BC}) de Bob via des messages de type DSM, dans une situation où le noeud réel RWN_{B} est non responsif pour une raison ou une autre.

La **Figure 3d** montre enfin un message WM' envoyé par le noeud VWN_{B} au noeud de Carl VWN_{C}, message généré non pas suite à une interaction du noeud réel de Bob avec son utilisateur (Bob), mais suite audit message WM reçu du noeud d'Alice (généré par les instructions du WP exécuté). Dans ce cas, les noeuds miroirs qui ont effectivement reçu ce message du noeud d'Alice sont aptes à générer ledit message au nœud de Carl (par l'exécution de ce WP). La **Figure 3d** montre toutefois que le nœud réel de Bob est non-responsif et n'émet donc pas le message WM' (ce qui est représenté par un « ! » sur la figure), et que malgré cela, les autres noeuds miroirs du noeud de Bob envoient ce message au noeud de Carl VWNc (ce qui résout le problème de non-responsiveness).

Enfin, de nouveau, comme le message WM' est émis (par le noeud de Bob) non pas suite à une interaction avec l'utilisateur mais par l'exécution d'un smart contrat WP (sur ce noeud de Bob) en réaction à un message WM (reçu du noeud d'Alice), chacun des noeuds miroirs de VWNc qui reçoivent WM' va requérir la réception d'un message identique de la part de 10 % (ou autre pourcentage déterminé selon des paramètres de configuration) de noeuds miroirs CWN_{BC} en commun avec ce noeud (de Bob). Carl peut ainsi compter sur le fait que ledit message a bien été généré, et bien été généré par le smart contract WP en question qui n'a pas été altéré (on résout ainsi le problème de garantie d'engagements).

On va maintenant décrire un processus de sélection de noeuds miroirs.

Pour chaque noeud, les poids de connexion des noeuds miroirs sont chacun supérieurs ou égal au plus petit poids de connexion des noeuds IRL-connectés (ou en connexion quasi-réelle) de son entourage. Avantageusement, un coefficient pourra y être appliqué : le poids de connexion de chaque noeud miroir doit être supérieur ou égal au plus petit poids de connexion multiplié par un coefficient (déterminé selon les paramètres de configuration), parmi les poids de connexion des noeuds avec lesquels il est IRL-connecté (et par un autre coefficient pour les noeuds en connexion quasi-réelle). Parmi lesdits noeuds miroirs communs entre un noeud émetteur et un noeud récepteur d'un WM, au moins un (ou un certain nombre, selon les paramètres de configuration) en est un hard WN (un hard WN est un SoC tel que décrit dans la demande PCT WO2016120826A2 et plus loin à la section "CMMU", ou une enclave telle que décrite aux sections « Réseau mixte SoCs WN et Enclaves WN », « Réseau mixte SoCs WN et Body Enclaves » ou un Body SoC tel que décrit à la section « Réseau mixte Body SoC et Body Enclaves »), la clé publique (correspondant à la privée secrète) de chaque hard WN étant certifiée par son fabricant, et ces hard Wallet pouvant être de fabricants différents - toutefois, les messages échangés entre noeuds ne sont valides que si les noeuds de leurs fabricants sont eux-mêmes liés par des noeuds miroirs de fabricants en commun (voir la description ci-après).

En cas d'un conflit détecté pour des noeuds miroir d'un noeud donné (conflit détecté lors des synchronisations entre les noeuds miroirs associés à un noeud, ou suite à la réception de WM non-compatibles de la part de nœuds miroirs dudit noeud donné, etc.), le noeud qui détecte ce conflit notifie l'information des clés des nœuds miroirs qui sont en conflit à leurs fabricants respectifs et ces clés sont alors révoquées chez ces fabricants. Ensuite, suite à leur recyclage, elles sont remplacées. Ceci est mis en oeuvre selon les étapes suivantes :
à chaque fabricant est associé un hard WN le représentant et dont il est lui-même le fabricant (certifiant sa propre clé publique);
chaque noeud de fabricant est IRL-connecté au noeud de chaque autre fabricant lui ayant communiqué sa clé par la méthode décrite à la section "Communication sur Out-of-Band-Channel", dont certains lui communiquant aussi des clés d'autres noeuds de fabricants qui sont ainsi indirectement connectés, chacun constituant ainsi son entourage, à chaque noeud de l'entourage étant associé un poids de connexion comme décrit plus haut;
pour qu'un WM quelconque soit validé par son noeud destinataire, les ensembles respectifs de noeuds miroirs du noeud fabricant du noeud émetteur d'une part et du noeud fabricant du noeud destinataire d'autre part doivent avoir une intersection dont le nombre d'éléments est supérieur à un seuil donné (ceci en plus des deux conditions spécifiées plus haut concernant les noeuds miroirs des noeuds émetteur et destinataire) - le nombre de noeuds miroir de ladite intersection étant avantageusement pondéré par le nombre de hard WN actifs fabriqués par les fabricants respectifs de ces noeuds miroirs de fabricant (Cf. « Poids de fabricants » plus bas) ;
en cas de conflit (lors d'une synchronisation (par message DSM), ou lors d'une réception de WM non-compatibles de la part de noeuds miroirs d'un même noeud émetteur, etc.), l'information des clés des noeuds miroirs qui sont en conflit est communiquée par envoi de messages (WM) aux nœuds de leurs fabricants respectifs (et s'ils sont différents, à leurs noeuds miroirs respectifs);
les noeuds de fabricant (c'est-à-dire leurs miroirs) enregistrent dans une liste de révocation les clés de noeuds miroirs en conflit;
les noeuds miroirs en conflit qui sont hard WN sont remplacés par leurs fabricants respectifs;
dans le cas où le conflit est résolu, ladite synchronisation (DSM) et/ou le message WM qui, le cas échéant, était suspendu car en conflit, est reprise/renvoyé, respectivement;
dans le cas où le conflit persiste, la majorité des hard WN est considérée comme faisant foi et les noeuds miroirs qui en diffèrent sont invalidés et blacklistés.

L'information des nœuds blacklistés est immédiatement communiquée aux nœuds de l'entourage de l'utilisateur et de ceux-ci aux noeuds de leurs propres entourages, et ainsi de suite (et le procédé peut être sophistiqué, selon l'état de l'art et les progrès dans le domaine des protocoles de consensus byzantins).

*Poids de fabricant* : Comme déjà évoqué, les noeuds de fabricants sont avantageusement pondérés en fonction du nombre de WN actifs du fabricant en question. Dans ce cadre, un hard WN d'un fabricant dont le noeud de fabricant présente un poids de fabricant en dessous d'un certain seuil (selon des paramètres de configuration) est assimilé à un soft WN.

En outre, les règles à suivre pour des fabricants des hard WN enclaves (voir section « Réseau mixte SoCs WN et Enclaves WN » et suivantes) peuvent être configurées différemment des règles pour fabricants de SoCs.

Une approche possible pour déterminer le nombre de WN actifs d'un fabricant donné peut consister à parcourir la blockchain et effectuer un comptage des noeuds ayant été impliqués dans des transactions en recourant directement ou indirectement au certificat de fabricant (signature par le fabricant, cf. par ailleurs). On peut tenir compte plus généralement de l'existence d'interactions avec d'autres noeuds et de valeurs de poids de connexion des noeuds intervenant dans ces interactions.

A noter qu'un jeton de coût, analogue au "gas" de Ethereum (cf. *Ethereum: A secure decentralized generalised transaction ledger,* EIP-150 revision, Dr. Gavin Wood - Appendix G. Fee Schedule - http://paper.gavwood.com/), permettant d'identifier le coût relatif entre les opérations (calculs, stockage, accès à la mémoire, etc.) d'une exécution de contrat, peut être utilisé pour contrôler les traitements par les miroirs.

### WN émettant un message au monde extérieur

Pour l'envoi d'un message au monde extérieur (c'est-à-dire à une entité qui n'est pas un WN) chaque WN miroir qui est hard WN propose, aux autres hard WN miroirs le cas échéant, d'émettre lui-même le message en question et le premier gagne. Le procédé comprend les étapes suivantes:
- un premier hard WN miroir propose aux autres hard WN miroirs (le cas échéant) d'émettre le message en question, proposition qui expire après une durée pré-convenue (selon un paramètre de configuration);
- lorsqu'une telle proposition est reçue par un hard WN miroir, si cette proposition vient avant une autre proposition reçue ou émise (pour ledit message en question), alors elle est approuvée, sinon elle est rejetée;
- lorsque le nombre d'approbations est supérieur à la moitié du nombre de hard WN miroirs qui ont répondus, cette proposition est attribuée, le message en question est alors effectivement émis et les autres hard WN miroirs sont notifiés que le message en question a bien été émis.

Selon les cas, le besoin d'émission du message en question peut être clos directement ou lorsqu'un retour arrive de la part du destinataire. L'homme du métier saura en outre tirer parti de l'état de l'art en matière de protocole de consensus byzantins.

### Tags

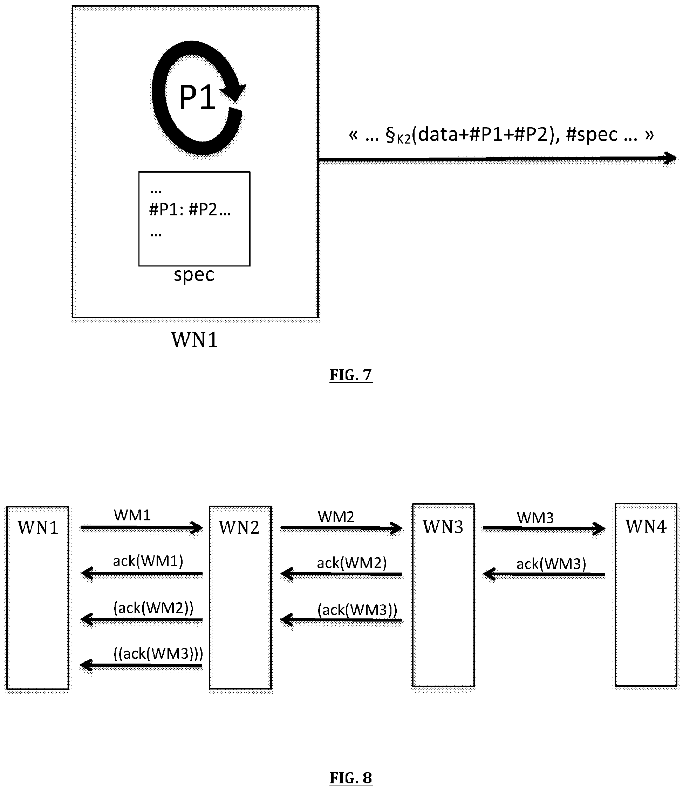

On se référera ici à nouveau à la notion de « Wallet Node » WN décrite en détail dans le document WO2016120826A2 au nom du demandeur. La Figure 7 de WO2016120826A2 présente un paiement de 10 unités de compte (UA) d'un noeud "WN 1" à un noeud "WN 2". Ces 10 UA sont retranchées du solde (« balance ») de WN1 et ajoutées au solde WN 2, ces soldes étant des variables persistantes d'état (PSV pour « *Persistent State Variables* ») sur ces WN.

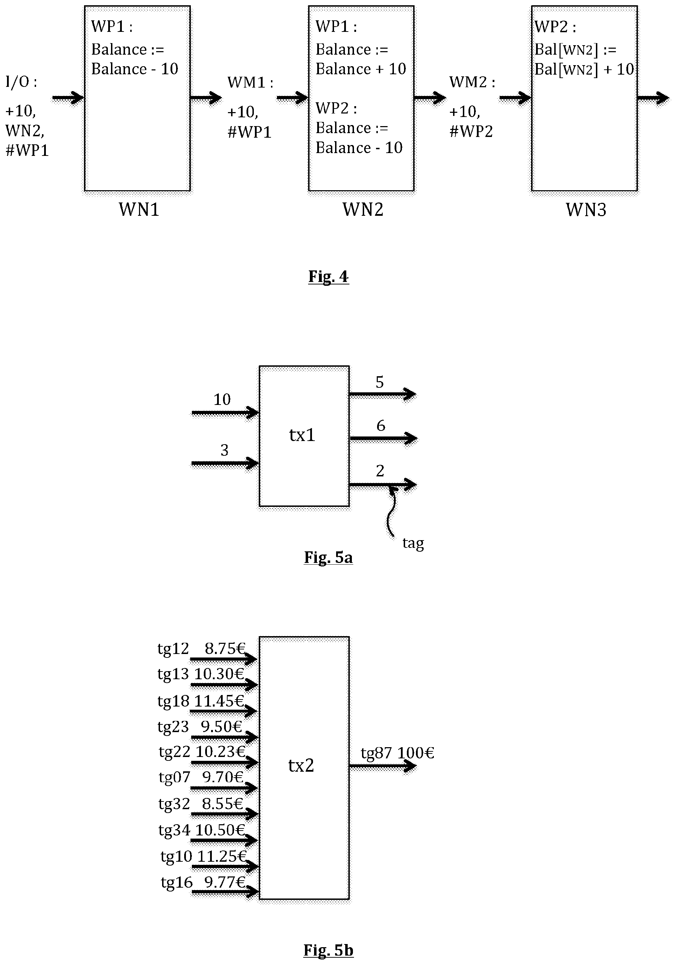

On va maintenant considérer, en référence à la **Figure 4****,** que de tels soldes d'UA ne sont pas des PSV d'un certain WP particulier exécuté dans un WN, mais des données, appelées "tags" (ou "value tags"), utilisables par le WN quel que soit le WP qu'il exécute. Des UA amenés sous la forme d'un tag par un WP appartiennent ainsi au WN, et peuvent être utilisées par un autre WP sur le même WN - ce sont des variables persistantes d'état pour le WN pris globalement.

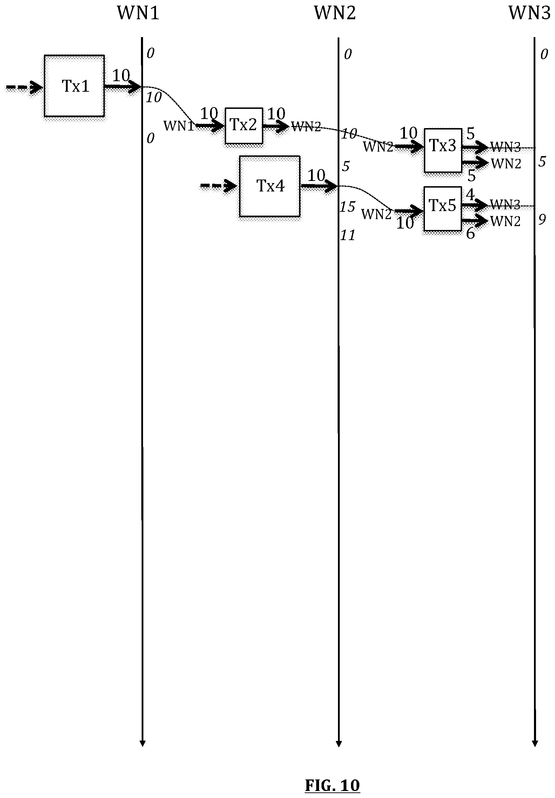

Pour prendre un exemple, l'utilisateur WN2 qui reçoit un message WM1 de paiement, depuis un noeud WN1, suite à une vente qu'il a effectué à ce dernier, exécute un Wallet Program de paiement WP1, et paye ensuite une prime d'assurance en exécutant un Wallet Program d'assurance WP2. Ainsi, dans l'exemple présenté à la **Figure 4****,** 10 UA sont transférées de WN1 à WN2, au moyen d'un message WM1 émis en exécutant WP1 (ce message comportant le haché #WP1) et ces 10 UA sont payés par WN2 pour régler une prime d'assurance, en exécutant WP2 envoyant un message WM2 (comportant le haché #WP2) à un noeud WN3.

Dans la suite, pour être concret on va considérer, comme UA de tag, des BTC (unités Bitcoin) provenant à l'origine d'une transaction Bitcoin insérée et confirmée n fois dans la blockchain Bitcoin (comme expliqué plus loin, la clé privée secrète du WN bénéficiaire est dans ce cas une clé privée correspondant à une adresse Bitcoin), sans que ce soit limitatif, les mêmes mécanismes pouvant être utilisés pour n'importe quels types d'UA, notamment des UA créées ex-nihilo par des WN, comme par exemple dans des bons d'achat (Gift Cards). En particulier, la demande WO2016120826A2 décrit certaines utilisations de tags qui sont créés par un noeud propriétaire "OWN" ("Owner Wallet Node"), ont des attributs certifiés par des noeuds "VWN" ("Viewer Wallet Node") dans le cadre d'une chaîne de transformation, ou chaîne logistique (Supply Chain) (ou encore chaîne commerciale), et transférés d'un OWN à un autre, reflétant le fait que les instances de produit (les produits, physiques ou immatériels) qu'ils représentent sont dans le monde réel transférés entre les utilisateurs de ces Wallet Nodes OWN.

De tels tags peuvent être recomposés (c'est-à-dire fusionnés ou décomposés) dans une transaction pour donner d'autre tags. Par exemple, en référence à la **Figure 5a****,** dans une transaction donnée (tx1), un tag de 10 UA et un tag de 3 UA, constituant les entrées de la transaction, peuvent être recomposés en trois tags, constituant les sorties de la transaction, ici un tag de 5 UA, un tag de 6 UA et tag de 2 UA, le total des UA étant conservé (l'unité UA en question n'a pas été indiquée dans la figure, il peut par exemple s'agir de BTC - Une transaction Bitcoin est un cas particulier de transaction de transfert de tags). On appellera "transaction de transfert de tags" de telles transactions. Un autre exemple de transaction de transfert de tags est illustré à la **Figure 5b****,** qui montre le cas de 10 poissons (10 tags différents), ayant chacun une valeur en Euros différente, transformés (par exemple découpés) en une caisse à poissons (la caisse ayant un tag propre ayant le libellé "tg87") d'une valeur de 100 Euros, cette transaction tx2 ayant été générée par propriétaire OWN des 10 poissons.

On notera que le cas particulier d'un transfert d'un tag d'un OWN à un autre, même sans qu'il y ait fusion ou décomposition, sera ici toujours représenté par une telle transaction de recomposition, ceci dans un but de simplicité de mise en oeuvre. (La mise en oeuvre du traitement des transactions de transfert de tags sera décrite plus bas dans la section "CMMU").

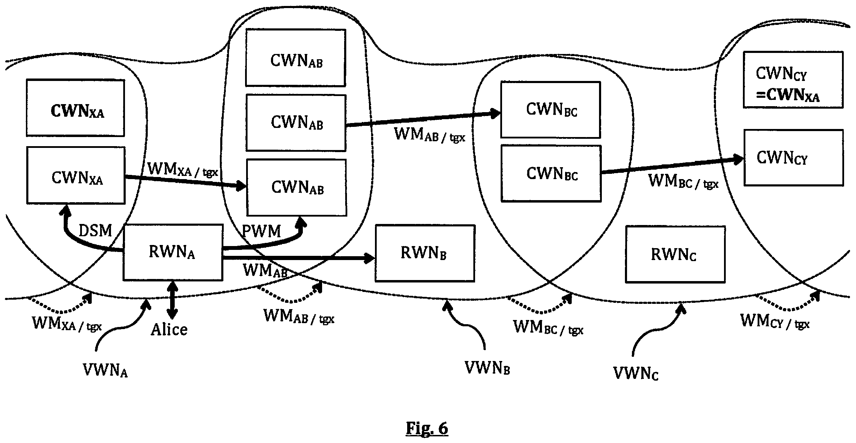

On va maintenant décrire, en référence à la **Figure 6****,** un procédé d'utilisation des noeuds miroirs (décrits plus haut) pour mitiger le risque de *double-spending* dans une succession de WM de transfert de tags, ce procédé permettant de mettre en oeuvre des transactions Bitcoin off-chain (l'utilisation de la blockchain devenant facultative). Cette Figure montre un message noté "WM_{CY/tgx}" envoyé par le noeud de Carl à un nœud Y (dont seuls des nœuds contresignataires "CWN_{CY}" en commun avec le nœud de Carl sont dans la figure). Ce message WM_{CY/tgx} transmet une transaction dont des transactions prédécesseurs (dans la chaîne "tgx" de successions de tags) étaient auparavant transmis par les messages WM_{XA/tgx} , WM_{AB/tgx} et WM_{BC/tgx}. Le but de la figure est de montrer que le noeud de Carl s'assure d'avoir un ou un certain nombre de noeuds miroirs en commun dont un est (ou certains sont) hard WN, avec tous les noeuds à l'amont, dont ici avec le noeud d'Alice (ceci est indiqué dans la figure ainsi :"CWN_{CY} = CWN_{XA}").

Rappelons qu'une transaction Bitcoin revient à transférer des BTC, en signant (avec une clé privée) au moins un output d'une transaction précédente qui les alloue, à au moins un nouveau propriétaire dont l'adresse Bitcoin est dérivée de sa clé publique. On considère ici le cas où la clé privée secrète d'une WN est une clé privée correspondant à une adresse Bitcoin (c'est-à-dire que le WN génère une adresse Bitcoin à partir de sa clé privée secrète). Un WN est ainsi apte à générer une transaction Bitcoin dont l'input (ou un des ses inputs) est connecté à un output (qui lui est destiné) d'une transaction amont (auquel, par exemple, l'utilisateur dudit WN a pu accéder du fait qu'elle est publiée dans la blockchain et qui l'a entrée audit WN en input dans son terminal), et (facultativement) à l'annoncer (broadcast) pour qu'elle soit insérée dans la blockchain. On comprends par là qu'il s'agit d'une transaction Bitcoin réelle et bien formée qui est générée par ledit WN, néanmoins dans ce qui suit (à la section "Transactions Bitcoin off-chain") on explique justement les avantages de ne pas l'y insérer. Des BTC dépensés par un WN peuvent provenir d'une succession de transactions off-chain (formant un arbre) transférant des BTC d'un ou plusieurs noeuds à un ou plusieurs autres nœuds, et l'on veut mitiger le risque d'un double-spend sur l'un quelconque de ces noeuds générant ces transactions. Ceci est obtenu par la condition supplémentaire suivante (qui s'ajoute aux conditions spécifiées plus haut concernant les noeuds miroirs des noeuds émetteur et destinataire d'un WM) : Pour qu'un WM transférant un tag donné (par exemple 0.5 BTC) soit validé par son noeud destinataire, l'ensemble des noeuds miroirs du noeud destinataire doit avoir une intersection, dont le nombre d'éléments est supérieur à un seuil donné, avec l'ensemble des noeuds miroirs de chacun des noeuds de l'arbre amont (de transactions de transfert de tags) d'où provient ce tag, et au moins l'un d'entre eux doit être hard WN (ou certain nombre d'entre eux doivent être hard WN). La mise en oeuvre de l'exécution du procédé par un WN inclut ainsi la traversée, en parcourant de l'aval vers l'amont, de l'arbre amont des WM véhiculant des transactions de transfert de tags et de vérifier ladite condition d'intersection de noeuds miroirs (voir aussi la section « *GuardWN, GuardTx et GuardedTx* » plus loin, qui décrit un procédé permettant de ne devoir avoir des miroirs qu'avec les transactions les plus à l'amont). Avantageusement, chaque tag inclut l'information de l'arbre des transactions de transfert de tags à l'amont, chaque transaction indiquant l'adresse du WN l'ayant généré (ces WN sont appelées "WN amont"), ce qui permet, à un WN destinataire d'un WM de transfert de tag, de vérifier directement si au moins un miroir (ou un certains nombre) de tous les noeuds amont figurent dans son entourage, fait partie de ses propres noeuds miroirs et est un hard WN, et pour chaque WN amont qui n'est pas dans ce cas si le poids de connexion d'un de ses miroirs qui est un hard WN lui permettrait d'en faire partie (après échanges éventuels de nouvelles connexions avec des noeuds de son entourage). Ainsi, plus précisément, à chaque tag sont associés tous les tags amont (c'est-à-dire figurant dans l'arbre amont, dans toutes les chaines de successions de transactions de transfert de tags menant au tag en question), avec l'adresse du noeud propriétaire qui l'a généré et avec, le cas échéant, l'adresse de chacun de ses propriétaires ultérieurs (OWN), ainsi que les adresses de leurs noeuds miroirs, ce qui permet à chaque noeud destinataire d'un WM transmettant une transaction de transfert de tags de vérifier directement l'intersection requise entre ses propres noeuds miroirs et lesdites adresses de noeuds miroirs de chacun de ces propriétaires, ainsi que le fait qu'au moins un (ou certains, selon les paramètres de configuration) sont des hard WN, et une recherche de noeuds ayant de forts poids de connexion est si besoin lancé afin de s'associer de nouveaux noeuds miroirs.

### Marché de connaissances

La capacité des WN à sous-traiter des traitements à des trusted computers (aptes à retourner une attestation d'authenticité et d'intégrité d'exécution, tels que des ordinateurs munis de microprocesseur(s) Intel à enclaves SGX), permet de mettre en oeuvre directement un *marché de connaissances sans tiers de confiance* et de manière plus simple que dans l'état de l'art des smart contracts :
Supposons par exemple que l'utilisateur U1 (ayant un Wallet Node WN1 de clé publique K1) cherche un autre utilisateur U2 (WN2, K2) qui lui vende un secret (S1) que U2 connaît et que U1 ne connaît pas, mais dont U1 connaît le haché H(S1) pour une raison ou une autre, et que U1 soit prêt à payer pour ce service rendu un montant $R1 (R comme Reward) qui se trouve actuellement disponible dans le solde (de tags) de WN1 de U1.

Plus précisément, une telle offre d'achat de la part d'un WN de clé K comprend un ensemble d'éléments {H(S);$R;$P;T[;params]} annoncé sur ce marché avec signature SigK({H(S);$R;$P;T[;params]}) de ce WN, où $P est une pénalité qu'un fournisseur qui s'engage à fournir au temps T doit payer s'il ne le fait pas (voir aussi le "Scénario d'utilisation" plus bas). Dans la suite, le terme {H(S);$R;$P;T[;params]} est aussi appelé "éléments d'offre".

Voici en substance comment le procédé opère :
1. U1 rend disponible et diffuse un Wallet Program (WP1) permettant d'émettre trois types de messages (seuls les éléments essentiels ont été indiqués et de manière abstraite, on verra plus loin les composants précis d'un WM) :
   - WMBid : WM( Sig, #WP1), communiquant une déclaration d'offre de service pour un service "Sig" (correspondant à une signature d'éléments d'offre par un WN, comme décrit ci-dessus), message dont le destinataire est le signataire de Sig et qui, en cas d'acceptation par ce dernier, engage son émetteur (celui qui propose le service en question) à payer une pénalité d'un montant $P en cas de non fourniture dans un délai donné T;
   - WMAccept : WM( WMBid, #WP1), communiquant, en réponse à un message WMBid donné, l'acceptation de l'offre de service en question, et qui engage son émetteur à payer le montant $R (spécifié dans les éléments d'offre en question) sur réception d'un message WMS comprenant le secret dont le haché correspond à H(S) (spécifié dans les éléments d'offre en question); et
   - WMS : WM( WMAccept, S, #WP1), communiquant le secret S en réponse à un message WMAccept donné et déclenchant sur le WN récepteur sa vérification (par rapport au H(S) spécifié dans les éléments d'offre en question dans les messages précédents) et, en cas de succès de cette vérification, la génération sur le WN récepteur d'une transaction de paiement du montant $R (aussi spécifié dans les éléments d'offre) envoyée à l'émetteur de ce message WMS par un WM final du WN récepteur.
   WP1 est en outre apte, suite à réception d'un message WMAccept, à sous-traiter les traitements (ici de recherche par force brute du secret S) à un trusted computer apte à retourner une attestation d'authenticité et d'intégrité d'exécution, attestation qui sera automatiquement vérifiée par WP1 avant émission du message WMS.
2. U1 annonce son offre {H(S1);$R1;$P1;T1[;params1]} qu'il diffuse avec sa signature Sig1({H(S1);$R1;$P1;T1[;params1]}).
   *Voici le scénario d'utilisation:*
   Supposons que l'utilisateur U2 de WN2 ne connaisse pas déjà ce secret S, et supposons aussi que les paramètres params1 incluent l'indication du nombre maximum de caractères du secret recherché, nombre indiquant que le trusted computer pourra trouver le secret désiré par recherche force brute en un temps raisonnable. U2 décide alors de faire envoyer par son Wallet Node WN2, à destination du Wallet Node WN1 de U1, le message
      WMBid2 : WM( Sig1, #WP1)
   en guise d'offre de service, puis (comme U1 accepte cette offre de service) WN1 lui répond avec le message
      WMAccept1 : WM( WMBid2, #WP1)
   en guise d'acceptation, ce qui (soit automatiquement, soit sur commande de l'utilisateur U2 qui peut par exemple sélectionner le trusted computer auquel sous-traiter) déclenche la sous-traitance en question à un trusted computer. Plus tard, lorsque le résultat - le secret S1 recherché correspondant à H(S1) - est retourné par ce trusted computer, WN2 envoie automatiquement le message
      WMS2 : WM( WMAccept1, S1, #WP1) communiquant le secret désiré S1 à WN1, et dès réception de ce message et vérification de la correspondance du haché du secret reçu avec H(S1), WN1 génère la transaction de paiement de $R à WN2 et l'envoie (par WM) à WN2.

A noter que les éléments d'offre peuvent aussi représenter une offre de vente et l'approche de la méthode permet la négociation par itérations d'offres et contre-offres, les éléments d'offre pouvant évoluer dans ces itérations, les messages étant alors essentiellement comme suit (si l'on considère que le premier message, ici WMBid, est envoyé par le fournisseur) :
- WMBid : WM(Sig, {H(S);$R;$P;T[;params]}, WP1), communiquant une contre-offre {H(S);$R;$P;T[;params]} par rapport à "Sig", message dont le destinataire est le signataire de Sig et qui, en cas d'acceptation "à l'identique" par ce dernier, engage son émetteur (le WN qui propose le service en question) à payer une pénalité du montant donné $P en cas de non fourniture dans le délai donné T;
- WMAccept : WM( WMBid ou WMNewBid, {H(S);$R;$P;T[;params]}, #WP1), communiquant une contre-offre en réponse à un message WMBid ou WMNewBid donné; dans le cas où {H(S);$R;$P;T[;params]} est identique aux éléments d'offre de ce dernier, ce message WMAccept engage son émetteur à payer le montant donné $R sur réception d'un message WMS comprenant ledit secret dont le haché correspond à H(S); également, dans le cas où dans un délai (préconvenu) un message WMNewBid proposant des éléments d'offre identiques arrive, ce message WMAccept engage directement son émetteur à payer le montant donné $R sur réception d'un message WMS comprenant le secret dont le haché correspond à H(S);
- WMNewBid : WM(WMAccept, {H(S);$R;$P;T[;params]}, WP1), communiquant une contre-offre {H(S);$R;$P;T[;params]} par rapport à une offre WMAccept donnée et dont le destinataire est l'émetteur de ce message WMAccept; dans le cas où {H(S);$R;$P;T[;params]} est identique aux éléments d'offre de ce message WMAccept donné, ce message WMNewBid engage directement son émetteur (celui qui propose le service en question) à payer la pénalité d'un montant $P en cas de non fourniture dans le délai donné T (sans attendre un nouveau message WMAccept d'acceptation);
- WMS : WM( WMAccept, *S,* #WP1), communiquant le secret S en réponse à un message WMAccept donné et déclenchant sur le WN récepteur sa vérification et, en cas de succès de cette vérification, la génération d'une transaction de paiement du montant $R envoyée à l'émetteur de ce message WMS par un WM final de la part du WN récepteur.

Une variante de cette méthode consiste à déporter audit trusted computer, en plus, la tâche de vérification du résultat fourni, et ledit trusted computer en fournit une attestation (de l'authenticité et l'intégrité des traitements effectués pour cette vérification) qui sert de preuve.

Ainsi, lors de la fourniture du résultat S1, au lieu d'un simple message "WMS2 : WM( WMAccept1, S1, #WP1)", WN2 retourne un message
WMA2 : WM( WMAccept1, S1, A2, #WP1)
dans lequel A2 est ladite attestation de cette vérification successful effectuée dans ledit trusted computer, WN1 n'ayant alors pas à effectuer cette vérification avant de générer la transaction de règlement de $R à WN2.

En variante et dans un but de sécurité supplémentaire, l'attestation A2 est retournée sans fournir immédiatement le résultat S1, et ce résultat est fourni après que WN1 retourne (un WM comprenant) une transaction de paiement (au moins partiel, le paiement étant alors complété par l'envoi d'une transaction finale après réception du résultat S1 - à noter aussi que dans le cas où le résultat peut être partitionné, plusieurs itérations paiement-partition peuvent se succéder jusqu'à fourniture complète).

Le fait de communiquer une telle attestation (A2) couvre un champ d'application plus large, en effet ladite *vérification* peut parfois consister en des traitements longs et coûteux (contrairement à l'exemple ci dessus où il s'agissait seulement de vérifier que le haché du résultat S1 fourni correspond au H(S1) spécifié au départ) ou qui simplement ne doivent pas être effectués dans un Wallet Node, un Wallet Node étant destiné à ne gérer que des accords (agreements) entre noeuds et devant rester disponible (en performances) dans ce but.

Enfin, un marché aux enchères de résolution de problèmes peut être créé, assurant par exemple qu'un fournisseur proposant une meilleure offre (plus complète et/ou plus rapide et/ou...) scelle un deal. Une telle offre peut consister non seulement en l'apport d'une solution à un problème donné mais aussi en des traitements de vérification d'une solution proposée (dans le secteur du software testing par exemple).

La possibilité des WN de sous-traiter des traitements à des trusted computers étend ainsi la puissance du réseau de WN, le réseau de WN permettant de se passer de tiers neutres dans les échanges, chaque WN pouvant être fabriqué à bas coût, dans une technologie accessible et relativement répandue, par une pluralité de fabricants, justement grâce à cette possibilité de sous-traitance qui permet aux WN de ne prendre en charge que les traitement concernant les échanges (les conditions d'échange, les paiements, etc.).

### « Blind Proxy »

Les Wallet Nodes permettent de mettre en oeuvre des traitements *sans divulgation* des données traitées ni du code exécuté dans ces traitements.

On considère un dispositif "Client" et un dispositif "Blind Proxy" (ou "Proxy"), Client faisant tourner sur Proxy un code exécutable "*P*" (comme Program) sur des données "*I*" (comme Input) qu'il envoie à Proxy. Le modèle d'exécution adopté pour ce code exécutable P est une machine à états finis, dont l'exécution est déclenchée par la réception d'un message entrant et susceptible d'émettre des messages sortants. Ainsi, sa réception d'un message entrant entraîne la génération de 0 à n messages sortants et 0 à m changements d'états (persistent states).

A Proxy sont associées une paire de clés publique/privée, la clé publique ("*K2*") de Proxy ayant préalablement été certifiée, sous forme d'une signature décryptable avec une certaine clé publique "*K*" (au nom du fabricant du SoC, « on behalf of the SoC manufacturer »), pour garantir la propriété "blindness" de Proxy et incluant la garantie d'intégrité d'exécution (dite « hash-locked exécution », "hash" voulant dire "haché").

Considérons tout d'abord le procédé suivant pour réaliser un « Blind Proxy ». Dans la suite on utilise le symbole « *§* » pour un chiffrement, la lettre « P » qui peut être suivie d'un chiffre (*P1*) pour un programme, la lettre « *K »* qui peut être suivie d'un chiffre (*K1*) pour une clé, celle-ci étant clé publique lorsqu'il s'agit de générer un chiffrement (tel que dans *§_{K}P*) et clé privée lorsqu'il s'agit de la clé utilisée pour générer une signature, tel que dans *sign_{K}(X).* Ce procédé Blind Proxy est le suivant :

### Fourniture de Proxy à Client :

*1. Fournir (au nom du fabricant du Proxy) une clé publique de certification (K) (accessible par le Client)*
*2. Générer la clé publique (K2) de Proxy*
*3. K2 est certifiée avec sign_{K}(K2) (i.e. peut être décryptée en utilisant K)*
*4. Proxy envoie K2 à Client (et {K2, sign_{K}(K2)} est accessible par Client)*

### Client fournit un code exécutable (P) à Proxy:

*5. Client encrypte P en utilisant K2 (§*_{*K*2}*P)et envoie §_{K2}P à Proxy*
*6. Proxy décrypte §_{K2}P, génère le haché de P (#P) et mémorise §_{K2}P en association avec #P, dans une table PHT (« Program Hash Table »)*
7. *Client génère le haché de P (#P)*

### Pour chaque requête d'exécution:

*8. Client encrypte I+#P (§_{K2}input+#P) en utilisant K2 (ou §_{K2}input+#P+K1, K1 étant la clé publique de Client)*
*9. Client envoie à Proxy §_{K2}input+#P et K1 (ou §_{K2}input+#P+K1), ainsi qu'un nonce (nonce) ou envoie §_{K2}input+#P+K1+nonce)*
*10. Proxy décrypte (avec confidentialité étendue au hardware) §_{K2}(input+#P...) ainsi que §_{K2}P (§_{K2}P étant récupérée à partir de PHT en utilisant #P)*
*11. Proxy exécute (avec confidentialité étendue au hardware) P (décrypté à la volée) avec I (après décryptage), encrypte les résultats en utilisant K1 (§_{K1}output) et renvoie le nonce et §_{K1}output (ou le tout encrypté ensemble)ainsi que sign_{K2}(nonce,§_{K1}output...) à Client, sans que le propriétaire de Proxy soit capable de voir I, P ou ces résultats*
*12. Client décrypte les résultats et les vérifie en décryptant leur signature avec K2.*

Comme mentionné ci-dessus, avantageusement, à l'étape 8, au lieu de simplement chiffrer *I*+*#P* avec la clé *K2* de Proxy, Client chiffre *I*+*#P*+*K1* (*§_{K2}input*+*#P*+*K1*)*,* et à l'étape 9, Client communique sa clé publique *K1* en envoyant *§_{K2}input*+*#P*+*K1.* Proxy retourne alors les résultats à Client (à son adresse qui peut être *#K1*) sans que *K1* ne soit dévoilé. Selon une autre option, *nonce* peut faire aussi partie du corps du message chiffré (*§_{K2}input*+*#P*+*K1*+*nonce*) et dans le message retourné par Proxy à Client, il figure aussi de manière chiffrée (*§_{K1}output*+*nonce*)*.* Pour simplicité et clarté, ces options, que l'homme du métier saura mettre en oeuvre aisément, ne sont pas reprises dans la suite. L'important ici est le fait de ne pas dévoiler #*P* pour que l'utilisateur ou propriétaire de Proxy ne puisse pas en faire la relation avec Client.

Dans une implémentation possible (d'autres implémentations pouvant bien entendu être envisagées), le message de Client à Proxy comprend :
message: ***§_{K2}input*+#*P, K1, nonce***
et le retour (de Proxy à Client) comprend :
   message: ***nonce, §_{K1}output, [K2,] sign_{K2}(nonce,§_{K1}output),***
   (ou simplement message: ***sign_{K2}(nonce,§_{K1}output)***
   dans le cas où *nonce* et *§_{K1}output* peuvent être obtenus en décryptant *sign_{K2}(nonce,§_{K1}output)* au moyen de *K2,* mais on considère dans la suite que les signatures consistent en des chiffrements de hash)
*nonce* permettant avantageusement de faire correspondre un message sortant à un message entrant et *K2* et *sign_{K2}(nonce,§_{K1}output)* permettant à Client de vérifier que le traitement a bien été fait par Proxy ayant cette clé *K2* (certifiée).

Pour que Client puisse vérifier le certificat garantissant la propriété *"blindly"* (ainsi que d'intégrité d'exécution - il est entendu ici que *« blindness »* suppose (« subsumes » en anglais) l'intégrité d'exécution hash-locked exécution integrity) du traitement par Proxy (qui a signé le résultat de ce traitement par *sign_{K2}(nonce,§_{K1}output)*)*,*
- *sign_{K}(K2)* est communiqué à Client au préalable et Client le stocke, et/ou avantageusement
- *sign_{K}(K2)* est inclus dans chaque message de retour, comme suit:
   message: ***nonce, §_{K1}output, [K2,] sign_{K2}(nonce, §_{K1}output), sign_{K}(K2)***

Il y a des cas où l'on veut que même Client soit une entité ayant la propriété de blindness ou d'intégrité d'exécution et, pour le garantir l'on veut également que (i) le message de Client à Proxy soit signé par Client (*sign_{K1}(nonce,§_{K2}input+#P)* ) et (ii) que la clé *K1* de Client soit certifiée (*sign_{K}(K1)*) :
message: ***§_{K2}input*+*#P, nonce, K1, sign_{K1}(§_{K2}input+#P, nonce), sign_{K}(K1)***
(#*P* pouvant être le hash du code exécutable utilisé par Client ou Proxy).

L'utilité du cas où *P* est du code exécutable utilisé par Client est par exemple manifeste dans le cas de la vérification d'un passeport électronique, en référence à la Figure 6 de la demande PCT No. WO2016/120826 A2 : la garantie de l'intégrité d'exécution de Client - exécutant un programme de vérification du passeport, dont le hash du code exécutable est #*P1* - signifie garantir l'existence de ce passeport :
message: ***§_{K2}input*+*****#P1, nonce, K1, sign_{K1}(§_{K2}input+#P1, nonce), sign_{K}(K1)**.*

On peut alors concevoir un *schéma unifié* (présenté ici de façon non limitative, d'autres approches étant possibles) pour les messages de Client à Proxy et les retours de Proxy à Client, qui est le suivant: message: ***nonce1, §_{K2}(data+#P1+#P2), nonce2, K1, Sign_{K1}(nonce1, §_{K2}(data+#P1+#P2), nonce2), sign_{K}(K1)*** .

Dans un message *M* selon ce schéma unifié :
- *M* étant vu comme un message sortant (du point de vue de son émetteur), *nonce1* reproduit le cas échéant le *nonce2* reçu dans le message amont qui avait déclenché le traitement qui a donné lieu à ce message *M*;
- *M* étant vu comme message entrant (du point de vue de son destinataire), *nonce2* désigne le *nonce1* du (ou de chaque) message sortant qui sera émis par ledit destinataire au cours du traitement en réaction à la réception de ce message M;
- *#P1* est le hash du code exécutable exécuté par l'émetteur de ce message M;
- *#P2* est le hash du code exécutable requis pour effectuer le traitement en réception de ce message M.

On comprend donc que *nonce2* identifie le message en question (*M*), tandis que *nonce1* est l'identifiant du message entrant reçu qui avait déclenché le traitement qui a donné lieu à ce message *M*. Classiquement, un tel message comprend une entête (header) qui indique notamment le type du message, ceci est implicite dans la suite du texte.

Selon les cas, certains de ces arguments seront omis pour appliquer ce schéma aux différents cas d'usage. Par exemple, pour le procédé "blind proxy" présenté plus haut (où le message de Client à Proxy comprend :
message: ***§_{K2}input*+*#P, K1, nonce***
et le retour (de Proxy à Client) comprend
message: ***nonce, §_{K1}output, K2, sign_{K2}(nonce, §_{K1}output), sign_{K}(K2)*** ),
selon le schéma unifié, le message de Client à Proxy comprend les arguments suivants :
   message: _, ***§_{K2}(data+_+#P2), nonce2, K1, _* , _**
   et le retour comprend les arguments suivants:
      message: ***nonce1, §_{K2}(data+#P1+_) , _ , K1, Sign_{K1}(nonce1, §_{K2}(data+#P1+_),* _*)*, *sign_{K}(K1)*** .
      Avantageusement, un schéma de message plus complet comprend en plus un argument *#spec* contenant le cas échéant le hash d'une spécification des contraintes reliant #P1 et #P2, c'est-à-dire, restreignant l'ensemble des #P2 valides à la suite d'un #P1 :
      message: ***nonce1, §_{K2}(data+#P1+#P2), #spec, nonce2, K1, Sign_{K1}(nonce1, §_{K2}(data+#P1+#P2), #spec, nonce2), sign_{K}(K1)***

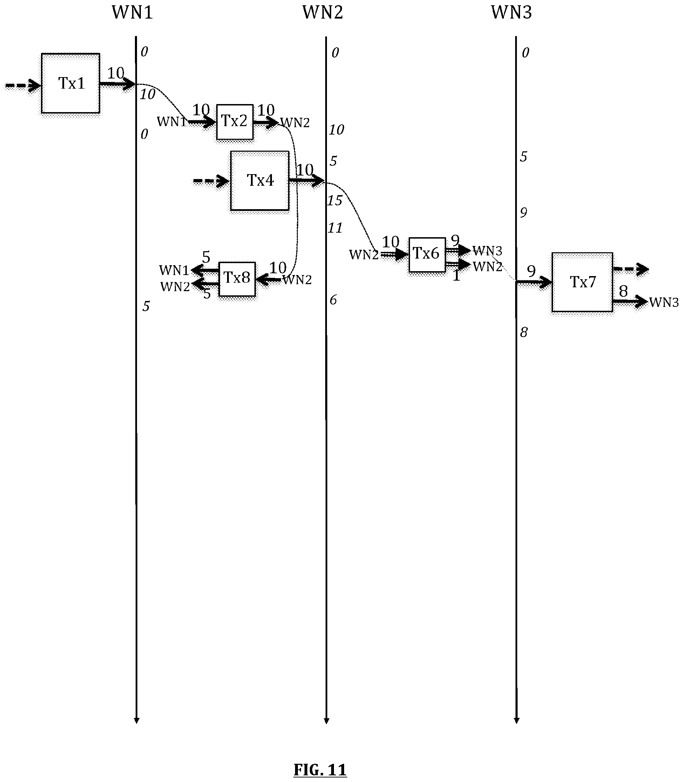

Dans une mise en oeuvre, cette spécification « spec » peut être l'ensemble des codes exécutables *[#P1,#P2,* etc.) valides. Dans une autre mise en oeuvre, en référence à la **Figure 11****,** pour chaque code exécutable dont le hash est donné (#*P1*) est fourni dans cette spécification l'ensemble des hash des codes exécutables (#*P2*...) valides (d'autres mises en oeuvre sont possibles).

Dans le cas où, pour un message donné, il est requis que le code exécutable (dans son intégralité) qui doit être exécuté par le récepteur du message soit le même que celui exécuté par l'émetteur du message, c'est-à-dire que le même #*P* soit propagé d'un message entrant reçu à un (ou à chaque) message sortant généré, il est préférable que le schéma des messages soit le suivant (et l'on pourra utiliser ou se référer à cette option particulière de schéma unifié dans la suite, sans que ce soit limitatif) :
message: ***nonce1, §_{K2}data+#P, nonce2, K1, Sign_{K1}(nonce1, §_{K2}data+#P, nonce2), sign_{K}(K1)***

### Rappel du principe de mise en oeuvre des Wallet Nodes

En référence à la Figure 5 de WO2016120826A2, au sein du SoC se trouve un microcontrôleur *(Microcontroller)* comprenant un processeur généraliste (« general-purpose processor », tel qu'un processeur implémentant l'architecture RISC-V) muni d'une mémoire interne. Seul ce processeur peut accéder à la partie « Sign » fournissant des fonctions cryptographiques, notamment la fonctionnalité de signature par le SoC, cette dernière étant à son tour la seule à pouvoir accéder à la partie contenant la clé secrète de la puce (Secret Key). La partie « (Secret Key) » est présentée entre parenthèses dans la figure puisque dans certaines options de mise en oeuvre la clé secrète n'est pas stockée mais régénérée dynamiquement. La partie Wallet Programs mémorise des codes exécutables chiffrés (*§P*) ainsi que leurs hachés respectifs. Le *Microcontroller* charge dans sa mémoire de manière sécurisée, en fonction du hash (#*P*) inclus dans le message entrant (ou de l'entrée via l'I/O) l'un ou l'autre de ces codes exécutables. Ces derniers sont aptes à manipuler, dans une mémoire non volatile, des variables d'état persistantes qui ne sont accessibles que par le *Microcontroller.* Dans WO2016120826A2, le sous-système Pers. State Variables ne rend accessible lesdites Pers. State Variables (PSV) que seulement pour l'exécution des WP respectifs spécifiques auxquels ces variables appartiennent. Ces variables d'état ne peuvent ainsi être accédées/manipulées que (exclusivement) par leurs WP respectifs. (Dans le présent texte, par PSV on entend Program State Variables - les variables persistantes appartenant au programme - par opposition aux tags et aux NSV signifiant Node State Variables, les variables propres au WN.) Au power-up et power-reset, le code exécutable stocké dans la partie « Check/Load » est le premier à être chargé et exécuté dans le *Microcontroller,* et des hachés peuvent alors être (re)associés aux WP disponibles dans la partie « Wallet Programs ». Lorsqu'un WM arrive (via l'I/O), le code de cette partie Check/Load en vérifie l'intégrité et l'authenticité (la clé publique du WN émetteur de ce WM est utilisée pour décrypter la signature par ce WN émetteur et vérifier l'intégrité du message; la clé de la signature de certification en représentation du fabricant est vérifiée et la clé publique qu'elle certifie est alors validée comme étant une clé de WN, ce qui permet de confirmer l'authenticité dudit WM), le WP correspondant audit haché est, le cas échéant, sélectionné dans la partie « Wallet programs » et chargé pour exécution. L'émission de WM, le cas échéant, par ledit Wallet program, se fait par l'intermédiaire de la partie Sign qui vérifie le haché inséré dans le WM en préparation avant de le signer. A noter que dans une variante de mise en oeuvre possible, pour émettre un WM vers un WN destinataire, le sous-système de signature du WN émetteur génère (ou vérifie) un chiffrement du WP en exécution (c'est-à-dire du WP couramment chargé) avec le cas échéant les données à transmettre, au moyen de la clé publique du WN destinataire, et l'inclut dans ledit WM à émettre avant signature dudit WM à émettre (et à réception le WN destinataire charge pour exécution ce WP une fois décrypté) garantissant ainsi que le même WP est re-exécuté dans le WN destinataire. Avantageusement, les WP peuvent être organisés en versions ; dans une forme de réalisation, les hachés des versions précédentes du WP fournit dans le WM accompagnent ce dernier et, pour chaque variable d'état stockée dans la puce, le haché de la version du WP qui l'a dernièrement manipulée lui est associé. Ainsi les variables d'états d'un WP peuvent être mises à jour par celui-ci même lorsque sa version évolue.

On considère dans la suite qu'un WP est transféré d'un WN à un autre au sein d'un WM au moyen d'un WP spécifique de transmission (voir dans la suite code exécutable « *PP* »).

Comme déjà évoqué, la clé publique correspondant à ladite clé privée secrète est « certifiée » par le fabricant dudit système-sur-puce WN. Ce certificat est une signature (c'est la signature, par une entité représentant le fabricant, de la clé publique correspondant à ladite clé secrète du WN) dont la clé de signature (c'est-à-dire clé publique représentant le fabricant) est partagée entre tous les (ou du moins une pluralité de) systèmes-sur-puce WN d'un même fabricant. Ledit certificat est produit automatiquement, quel que soit le mode de fabrication : mode où ladite clé secrète est gravée dans la puce comme dans les TPM ou les cartes à puce, mode où elle est stockée de manière sécurisée, mode où elle est automatiquement générée dans la puce selon la technologie « PUF » *(Physically Unclonable Function*) introduite dans [P. S. Ravikanth, « Physical one-way functions », PhD Thesis, MIT, 2001] et [Pappu& al., « Physical one-way fonctions », Science, 297(5589):2026-2030, 2002] (technologie mise en oeuvre notamment dans les SoC FPGA Smartfusion2 et d'autres puces du fabricant Microsemi), ou selon une technique analogue à ces dernières. L'authenticité de ladite clé publique d'un WN émetteur d'un WM (notamment l'authenticité des signatures effectuées au moyen de la clé secrète de ce WN) est automatiquement vérifiée par le WN récepteur de ce WM lors de sa réception par rapport audit certificat. Avantageusement le système inclut d'office ledit certificat dans les WM.

Classiquement, il existe une logique intégrée dans les SoC, appelée BIST (Built-In Self Test) qu'on utilise typiquement pour tester la clé secrète du SoC. Selon un aspect inventif, on utilisera cette même logique BIST pour générer la signature du fabricant (certificat) automatiquement au moment de ce test, c'est-à-dire au moment de sa fabrication, la clé privée du fabricant permettant cette signature étant elle-même secrète. Ainsi, au moment dudit test si la clé secrète (clé privée) est opérationnelle et permet d'en dériver la clé publique correspondante, une requête de certification de cette dernière est transmise à un dispositif de signature au moyen de la clé privée représentant le fabricant. La signature qui le cas échéant en résulte est avantageusement inscrite dans le SoC.

### CMMU - Crypto Memory Management Unit

On va maintenant décrire un système-sur-puce « *Blind SoC* » assurant la propriété de « blindness », apte à mettre en oeuvre le procédé présenté au début de la section « Blind Proxy » et les messages selon les schémas donnés, où essentiellement les fonctionnalités spécifiques de Wallet Node (telles que ceux de « Check/Load » et « Sign ») ont été encapsulées dans une unité spécifique pour offrir plus de sécurité.

Un *Blind SoC* possède une clé privée secrète. Un *Blind SoC* peut communiquer avec un autre équipement par des messages et est apte à exécuter des programmes en réponse à la réception de messages (comme présenté à la **Figure 23**). Un *Blind SoC* est par ailleurs apte à mémoriser un programme à exécuter reçu, reçu de manière chiffrée et/ou après chiffrement par le Blind SoC, et à générer un haché de chaque programme, ce haché permettant de retrouver le programme chiffré au moyen d'une table « Program Hash Table » (PHT). Un équipement (Client) peut adresser au *Blind SoC* un message contenant des données d'entrée *(data)* pour un certain programme à exécuter (*P2*), ainsi que le haché (#*P2*) dudit programme. En réponse à un tel message, le *Blind SoC* (i) accède au programme à exécuter à partir du haché du programme (#P2) reçu dans le message, (ii) décrypte à la volée le programme, et (iii) exécute à la volée les instructions décryptées.

Avantageusement, avant émission d'un message, un *Blind SoC* y insère le haché (*#P1*) du programme en cours d'exécution dans le corps du message à émettre, qu'il signe au moyen de sa clé secrète. Lorsqu'un message a un même haché pour le programme en cours d'exécution (*#P1*) que pour le programme à exécuter par le destinataire de ce message (*#P1* = *#P2),* ledit programme (*P1* = *P2)* est un « engagement exécutable » (smart contract) dans le cas où le destinataire dudit message offre la garantie d'intégrité d'exécution de ce programme P2. (Egalement, si le haché (*#P1*) émis pour le programme en cours d'exécution est différent de celui (*#P2*) pour le programme à exécuter par le destinataire offrant garantie d'intégrité d'exécution de ce programme (P2), mais la correspondance est garantie au moyen d'une spécification commune de ces programmes (*P1*, *P2...,* comme déjà décrit en référence à la **Figure 7****)** ces programmes représentent un « engagement exécutable » (smart contract)).

*Blind SoC* comprend une unité *CMMU* (Crypto Memory Management Unit) qui mémorise - ou qui est apte à dynamiquement régénérer (par technologie PUF, précédemment citée) - ladite clé secrète *du Blind SoC* (qui n'est accessible que par l'unité *CMMU* qui ne la dévoile jamais), et c'est par cette unité *CMMU* que sont effectués :
- ledit chiffrement du programme avant mémorisation,
- une allocation de place en mémoire (*addr1..addr2* range) où stocker le programme ainsi chiffré, cette place allouée permettant aussi de stocker des variables persistantes d'état liées à ce programme et assurant l'isolation des programmes les uns par rapport aux autres,

- ladite génération du haché du programme et
- ledit décryptage pour exécution à la volée par au moins une unité processeur comprise dans le *Blind SoC,*
- les autres traitements décrits plus bas dans la présente description.

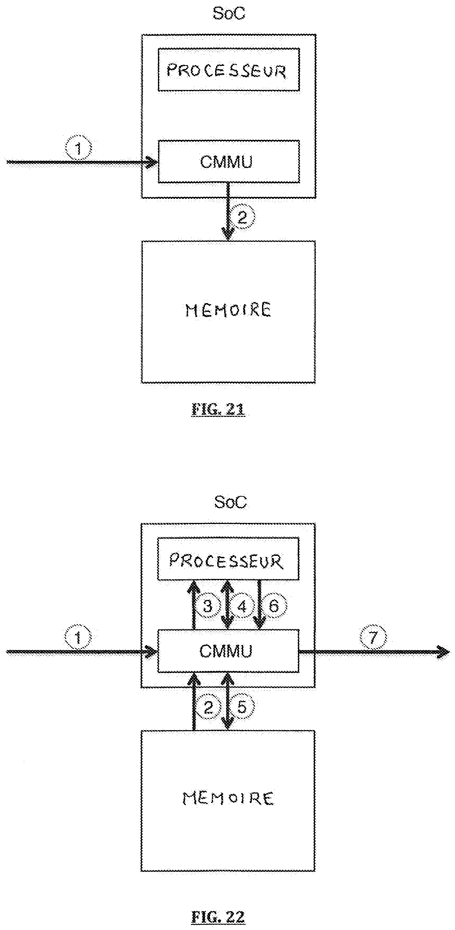

La **Figure 21** présente schématiquement les étapes de réception par CMMU d'un message contenant un programme à charger en mémoire (MEMORY). A noter que la mémoire (MEMORY) peut être externe au SoC ou pas, et qu'elle comprend des espaces réservés à des variables , telles que les tags décrits plus haut, qui n'appartiennent pas à un programme donné mais sont partagés. Les étapes numérotées représentent les étapes suivantes :
1) réception d'un message contenant un programme à charger en mémoire
2) ledit programme à charger étant chiffré et le haché dudit programme avant chiffrement étant déterminé, réservation d'un espace en mémoire pouvant contenir ce programme chiffré et ses variables persistantes d'état qui seront également chiffrées, et mémorisation dudit programme chiffré, ledit haché permettant par la suite de le retrouver via une table (PHT).

Avantageusement, l'unité *CMMU* effectue ladite mémorisation du programme chiffré *bloc d'instructions par bloc d'instructions* et fournit (audit processeur) un seul bloc d'instructions déchiffré à la fois (pour exécution par le processeur des instructions que le bloc comprend). A noter qu'une architecture de microservices [https://martinfowler.com/articles/microservices.html] ou serverless architecture [https://martinfowler.com/articles/serverless.html], dans la mesure où les fonctions ont une granularité fine, elle peuvent constituer des parties non-divisibles de bloc.

Ainsi le procédé pour charger des programmes (codes exécutables) dans *Blind SoC* comprend avantageusement les étapes suivantes. Sur réception par *Bind SoC* d'un message comprenant *P et #PP* (sous forme chiffrée *§_{K2}P+#PP...*)*, PP* étant le programme de chargement de programme et P étant le contenu du code exécutable à charger, l'unité *CMMU :*
1. décrypte *§_{K2}P...* et calcule le hash du programme à charger (#*P*) ;
2. crée une clé symétrique (*PK*) dérivée de {#P + la clé secrète du *Blind SoC* };
3. chiffre les blocs d'instructions de ce code exécutable avec cette clé symétrique (*§_{PK}Pᵢ*) ;
4. alloue de l'espace mémoire (*addr1..addr2*) dans la mémoire pour ces blocs *§_{PK}Pᵢ* ainsi que pour les futures variables persistantes d'état manipulées par ce programme, et y enregistre ces blocs *§_{PK}Pᵢ* ;
5. insère des informations comprenant *#P, addr1, addr2* dans une table *PHT* (Program Hash Table).

Lorsqu'un message, contenant des données d'entrée pour un certain programme à exécuter (*P*) et le haché (*#P*) de ce programme, est reçu par le *Blind SoC,* son unité *CMMU:*
1. accède à partir du haché du programme #P reçu dans le message et via la table *PHT,* aux blocs du programme chiffré à exécuter *§_{PK}P* stockés en mémoire dans l'espace qui lui est réservé (*addr1..addr2*) ;
2. décrypte les blocs d'instructions de *P* et les transmet à l'unité processeur à la volée;
3. l'unité processeur exécutant à la volée les instructions décryptées sur les données d'entrées, CMMU se charge de stocker les variables d'état persistantes liées à *P* en *isolation,* dans *addr1..addr2,* et les messages générés incluent *#P* et sont signés par *CMMU.*

Ainsi, avant émission d'un message par le *Blind SoC,* l'unité *CMMU* insère dans le message à émettre le haché (*#P*) du programme en cours d'exécution ainsi que la signature de ce haché par le *CMMU* au moyen de la clé secrète (ou insère ledit haché du programme dans le corps du message à émettre qu'elle signe avec la clé secrète), ce qui permet, dans le cas où *#P = #P1* = *#P2* (ou selon la description plus haut en référence à la **Figure 7****,** dans le cas où les programmes sont organisés selon une spécification) et si l'entité destinataire garantit aussi leur intégrité d'exécution, d'utiliser de tels programmes comme engagements exécutables (smart contract) au sens de la présente invention.

La **Figure 22** présente schématiquement les interactions que représentent ces étapes entre les différentes parties (PROCESSOR, CMMU, MEMORY) du système :
1) Réception par CMMU d'un message contenant des données d'entrée d'un programme à exécuter ainsi que le haché dudit programme ;
2) CMMU localise dans la table PHT, à partir dudit haché, ledit programme chiffré, le charge dans son cache et le décrypte (bloc par bloc) ;
3) CMMU transmet à la volée le (un bloc à la fois du) programme décrypté à PROCESSOR pour exécution ;
4) Le cas échéant, PROCESSOR requiert d'accéder à des variables persistantes d'état (PSV et/ou tags) déjà créées ou en crée/les met à jour et demande de les stocker, ou en supprime, et
5) CMMU accède et décrypte / chiffre et mémorise lesdites variables persistantes d'état ;
6) Le cas échéant, PROCESSOR prépare un message à émettre, et
7) CMMU y insère le haché dudit programme en exécution et sa signature au moyen la clé secrète et émet le message.

Avantageusement, le CMMU est apte à vérifier les intersections requises d'ensembles de noeuds miroirs décrits plus haut lors de la réception d'un WM et pour chaque transaction de transfert de tags reçue.

En référence à la **Figure 23****,** les WM peuvent être émis par un Blind SoC (générés par l'exécution d'un programme WP) ou reçus en tant qu'input de l'utilisateur ou par un autre dispositif (messages « Quasi-WM ») et comprennent le haché #WP de ce programme dans les deux cas.

La **Figure 23** présente un message WM de transfert de tags, en entrée, qui véhicule une transaction (tx1), cette transaction provoquant dans la mémoire (MEMORY) au niveau des Tags, l'insertion des tags amenés par cette nouvelle transaction, chaque tag comprenant les données représentatives de la succession (arbre) des transactions à l'amont, comme déjà décrit, à chacune étant associé l'adresse du WN amont l'ayant généré et les adresses de ses WN miroirs. Avec ces informations, pour valider ou non le message, le CMMU vérifie l'intersection requise entre ses propres noeuds miroirs et lesdites adresses de WN miroirs, ainsi que le fait qu'au moins un (ou certains, selon les paramètres de configuration) sont des hard WN. Cette figure présente également un message WM de transfert de tags en sortie qui véhicule une transaction (tx2) générée par le CMMU sur instruction d'un WP, le CMMU neutralisant (rendant inconsommable) les tags consommés par cette transaction générée (pour éviter un double-spend) et générant le ou les nouveaux tags qui en sont en output, des arbres respectifs des transactions à l'amont leur étant associés (à partir des arbres à leur amont).

Par ailleurs, le CMMU gère les simplifications de transactions décrites plus loin à la section « Transactions Bitcoin off-chain » : une simplification consiste à remplacer au moins deux transactions inter-WN antérieures qui ne sont pas encore insérées dans la blockchain, par une nouvelle (ou le moins possible de) transaction(s) de remplacement, le CMMU veillant à ce que le solde courant restant inchangé par ces remplacements (ce mécanisme est générique, les transactions de transfert de tags étant plus générales que les transactions Bitcoin).

La **Figure 23** montre également une requête https générée par le CMMU qui prend en charge les handshakes et les opérations cryptographiques, laissant au terminal auquel il est couplé le rôle d'interface d'entrée/sortie (au niveau TCP) afin d'assurer l'intégrité des données de bout en bout (le site accédé étant de confiance).

Le CMMU prend aussi en charge la gestion et la signature par le Blind SoC des messages Non-WM (en sortie, comme présenté à la **Figure 23** et décrit plus haut à la section « WN émettant un message au monde extérieur »).

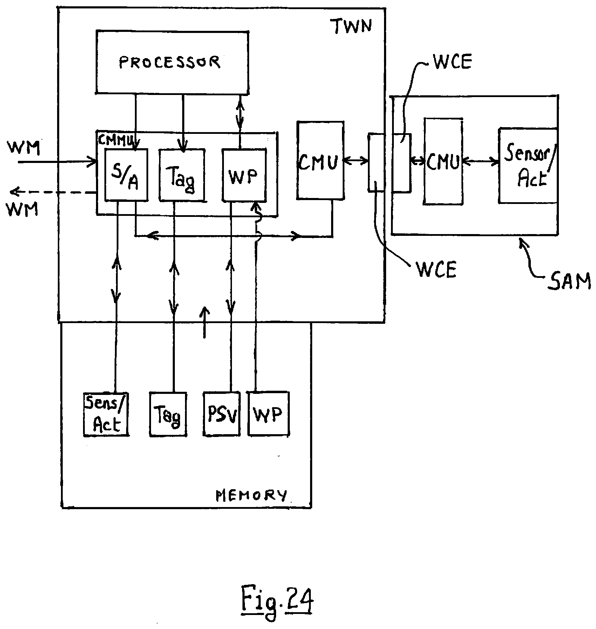

En référence à la **Figure24****,** le CMMU gère les données provenant du ou des capteurs d'un SAM partagée par les différents WP (ceci est décrit plus loin à la section « Interaction entre Wallets Nodes et le monde physique »).

### Contraintes sur les tags

Le CMMU inclut un mécanisme permettant de contraindre l'utilisation des tags par les programmes WP. Ainsi un tag peut être réservé pour usage par un WP ou des WP liés (cf. Figure 7), de manière à éviter que des unités de compte du tag ne puisse être dépensées par un WP qui n'est pas habilité à le faire.

Ainsi un WP est capable d'indiquer au CMMU qu'un tag est réservé à son usage, et le CMMU affecte à ce tag un marquage indiquant cette réservation au niveau de la mémoire MEMORY.

Ce marquage peut être levé à l'initiative du même programme, rendant ainsi le tag à nouveau utilisable par d'autres WP.

Dans le cas d'une tentative, par un WP, de génération de transaction alimentée par un tag pour lequel ce WP n'est pas habilité, le CMMU interdit l'opération, et les UA de ce tag ne pouvant donc pas être consommées (du fait qu'une telle transaction ne peut avoir lieu).Cette architecture permet aux WN de réserver des UA matérialisées par des tags à certains types d'opérations destinées à être exécutées par les WP qui les ont respectivement réservées, et donc de mettre en oeuvre des engagements sur la base d'UA qui sont bloquées à cet effet, tels que les CCC décrits dans WO2016/120826 A2.

### Perfectionnements aux CCC

### Rappel du cadre général

Le cadre général est ici un ensemble de noeuds qui sont bénéficiaires d'engagements CCC et peuvent eux-mêmes fournir un engagement CCC du même type à d'autres noeuds, ces derniers à encore d'autres, et ainsi de suite, les noeuds et les engagements CCC formant ainsi un réseau de "networked-insurance".

### Prime et Contribution potentielle maximum

Un premier nœud, ayant fournit à des seconds noeuds un engagement CCC d'un certain type, ajoute (typiquement de manière échelonnée dans le temps) sur son solde CCC (somme d'UA de tags réservés) et conformément à cet engagement, une "prime" (analogue à une prime d'assurance) pour couvrir l'ensemble de ces seconds noeuds, et spécifie pour chaque second noeud un seuil signifiant à quelle hauteur ce second noeud est couvert par lui, seuil appelé "contribution potentielle maximum". Suite à un sinistre sur l'un des seconds noeuds couverts par un premier noeud : le premier noeud transfère à ce second noeud, à partir de son solde CCC, un certain montant d'UA (voir "Transaction de transfert d'UA") en échange de "bons de prime" (voir la définition qui suit) émis par ce second noeud. Le montant de ce transfert est fonction du solde CCC du premier nœud et est à hauteur de la contribution potentielle maximum spécifiée pour ce second noeud particulier.

### Bons de prime

Un "bon de prime" émis par un second noeud est une reconnaissance de dette "au porteur" émise en contrepartie d'une contribution reçue par ce second noeud en exécution d'un engagement CCC, suite à un sinistre, contribution reçue de la part du premier noeud qui est le fournisseur de cet engagement CCC. Cette dette est remboursable par le second noeud conformément à cet engagement CCC (typiquement de manière échelonnée dans le temps) dans la limite du montant de la prime prévue pour le second noeud, et pro rata de cette contribution reçue (parmi le cas échéant une pluralité de contributions reçues). Les bons de prime sont "au porteur" en ce sens que, tant que leurs montants respectifs de dette ne sont pas encore épongés (c'est-à-dire qu'il reste encore des UA à recevoir), ils représentent un certain montant de valeur à terme, ont une certaine "valeur immédiate en UA", et peuvent être transférés (voir "Transaction de transfert d'UA") d'un noeud à un autre. La "valeur immédiate en UA" d'un bon de prime est défini comme étant la somme des montants qu'il représente à différents termes prévus moins la somme des intérêts respectifs pour les durées de ces termes. Le premier porteur d'un bon de prime est le premier noeud ayant contribué, en exécution d'un engagement CCC, au second noeud sinistré qui a émis ce bon de prime. A noter que ce dernier le lui a transféré en mode "à n'utiliser qu'en cas de sinistre" : la valeur immédiate du bon de prime ainsi reçu par le premier noeud s'ajoute au solde CCC (qui est réservé à payer des sinistres) et il ne peut être dépensé (ni même en partie) que pour dédommager un sinistre selon cet engagement CCC, par le ou les WP habilités.

### Bons de prime concurrents

Ledit second noeud sinistré transfère également, audit premier noeud, tous les bons de prime qu'il a lui même reçu à partir des noeuds à l'aval auxquels il a contribué dans le passé dans le cadre du même CCC, toujours dans un mode "à n'utiliser qu'en cas de sinistre", mais ici dans un mode "concurrent" (c'est-à-dire répliqué et synchronisé) et pour moitié (ou pour une proportion donnée dans le CCC) de leurs valeurs respectives. Chaque bon de prime peut ainsi être répliqué sur plusieurs noeuds à la fois, peut seulement être utilisé pour paiement (pour toute ou partie de sa valeur immédiate) en cas de sinistre et seulement dans le cadre du CCC en question, et un paiement par bon de prime le consomme en même temps (par synchronisation) sur tous les nœuds où il se trouve (y compris sur ledit premier noeud qui a contribué au sinistre qui en est à l'origine et vers lequel il a été transféré en premier). Pour ce faire, chaque paiement de sinistre par bon de prime est le cas échéant notifié par le noeud payeur aux autres noeuds concurrents où il a également été transféré et lorsque sa valeur tombe à zéro, il est supprimé sur l'ensemble de ces noeuds.

### Envoi de Message

On va maintenant décrire un mode de réalisation selon lequel un message émis comportant (et identifié par) un *nonce2* est considéré comme *"envoyé"* par son émetteur *sur réception* d'un *message d'accusé de réception (ack)* retourné par le destinataire de ce message et comportant ledit *nonce2* comme décrit ci-avant, c'est-à-dire en tant que valeur de l'argument *nonce1.*

Ledit message expire après un certain temps, fixé pour le code exécutable donné, temps après lequel il est typiquement re-émis un certain nombre de fois (voir plus loin la section « Garantie d'engagement en cas de *non-responsiveness* »).

L'accusé de réception a ainsi la forme suivante :
message: ***nonce1**:receivedNonce2,* ***§_{K2}*(*****data**:ack(receivedNonce2)****+#P*)***, **nonce2, K1, sign**_{K1}**(nonce1**:receivedNonce2, **§_{K2}(data**:ack(receivedNonce2)+**#P)**, **nonce2), signK(K1)***)

En outre, en référence à la **Figure 8****,** lorsque l'envoi
- d'un premier message (WM1) par un premier émetteur (WN1) à un destinataire WN2 est, dans un laps de temps donné à partir de l'envoi de WM1 (qui typiquement est fixé pour le code exécutable courant), suivi de *l'envoi*
- d'un deuxième message (WM2) par WN2 à un autre destinataire (WN3),
un message noté "(ack(WM2))" (entouré de parenthèses à la **Figure 8****),** propageant l'accusé de réception "ack(WM2)" reçu de WN3 par WN2, est envoyé par ce dernier au premier émetteur (WN1). Pour illustrer ce procédé, le message WM1 en référence à la **Figure 8** est de la forme suivante :
WM1 from WN1 to WN2: ***nonce1, §_{K2}data+#P, nonce2:N1, K1, sign_{K1}(nonce1, §_{K2}data+#P, nonce2**:N1), **sign_{K}(K1)***
et son accusé de réception (qui entérine cet envoi de WM1) est de la forme suivante :
   ack(WM1) from WN2 to WN1: ***nonce1**:N1, **§_{K2}data**:ack(N1)+#P, **nonce2, K1, sign**K1**(nonce1:**N1**, §_{K2}data**:ack(N1)**+#P, nonce2), sign_{K}(K1)***

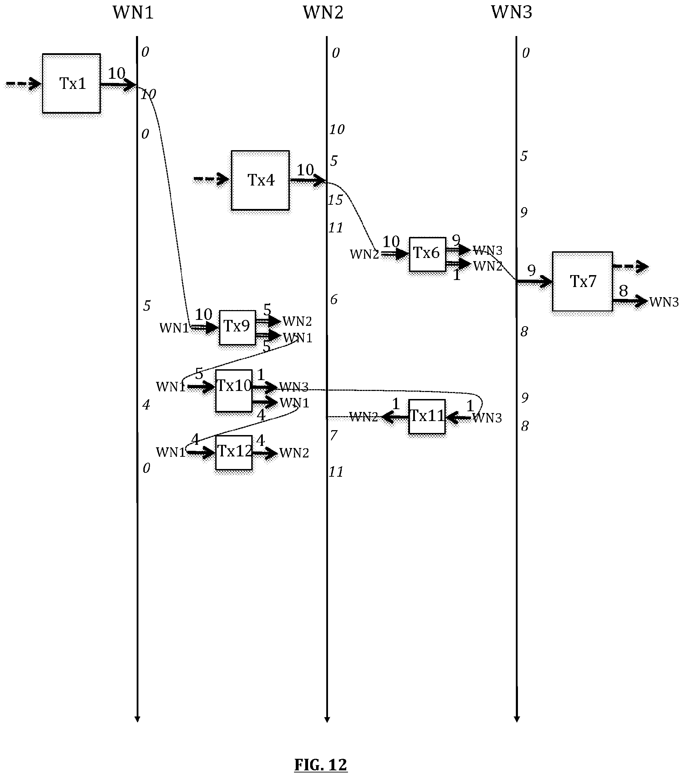

A la suite de ce premier message identifié par le *nonce2 "N1",* le message WM2 de la **Figure 12****,** envoyé de WN2 à WN3, est de la forme suivante:
WM2 from WN2 to WN3: ***nonce1**, **§_{K2}data+#P, nonce2:N2, K1**, sign_{K1}(nonce1, §_{K2}data+#P, **nonce2:**N2)**, sign_{K}(K1)***

Sur réception de l'accusé de réception entérinant WM2 retourné par WN3, qui est de la forme suivante :
ack(WM2) from WN3 to WN2: ***nonce1**:N2, **§_{K2}data**:ack(N2)+#**P**, **nonce2, K1**, **sign**_{K1}**(nonce1:**N2, **§_{K2}data**:ack(N2)+**#P**, **nonce2**), **sign_{K}(K1)***
pourvu que cet accusé de réception parvienne à WN2 dans le laps de temps donné à partir de l'envoi de WM1, comme le montre la **Figure 12****,** WN2 le propage à WN1 en un message « (ack(WM2)) » qui est de la forme suivante :
   (ack(WM2)) from WN2 to WN1: ***noncel**:N1, **§_{K2}data**:{(ack(N2),payload)}+#**P**, **nonce2**, **K1**, **sign_{K1}(nonce1**:N2, §_{K2}**data**:{(ack(N2),payload)}+#**P**, **nonce2), sign_{K}(K1)***
   *payload* étant un contenu dépendant du code exécutable en question, telle que par exemple le contenu de WM2.

Le même procédé se poursuit dans le cas d'une chaîne plus longue de messages jusqu'à une profondeur maximum donnée (typiquement cette profondeur étant fixée pour le code exécutable donné). Par exemple, et en référence à la **Figure 8****,** cette chaîne étant composée
- d'un premier message (WM1) d'un premier émetteur (WN1) à un deuxième (WN2),
- suivi (dans un laps de temps donné) d'un message (WM2) du deuxième à un troisième (WN3), puis
- suivi (dans le laps de temps donné à partir de l'envoi de WM1) d'un message (WM3) du troisième à un quatrième (WN4),
l'accusé de réception reçu du quatrième (WN4) est aussi propagé de proche en proche jusqu'au premier émetteur (WN1), pour aboutir au message "((ack(WM3))" envoyé par WN2 à WN1 et comportant une information « *:{(ack(N2),payload1), (ack(N3),payload2)}* » correspondant à la suite des messages échangés :
((ack(WM3))) from WN2 to WN1: ***nonce1**:N1, **§_{K2}data**:{(ack(N2),payload1), (ack(N3),payload2)}**+#P**, **nonce2, K1**, **sign_{K1}(nonce1**:N2, **§_{K2}data**:{(ack(N2),payload1), (ack(N3),payload2)}+**#P**, **nonce2), sign_{K}(K1)***
*payload1* et *payload2* dépendant du code exécutable en question et étant par exemple les contenus respectifs de WM2 et WM3. De préférence, dans un but de privacy, seule la partie qu'il est utile de communiquer l'est, éventuellement après transformation.

On verra l'intérêt de cette propagation d'accusés de réception dans le procédé suivant.

### Transactions Bitcoin off-chain

On va maintenant décrire un procédé à base de WN pour matérialiser (sérialiser) des transactions de transfert d'unités de valeur, de sorte à pouvoir les enregistrer par exemple dans une blockchain. Dans la mise en oeuvre décrite ci-après, les unités de valeur dont il est question sont des BTC, et des transactions Bitcoin (valides et directement insérables dans la Bitcoin Blockchain) sont générées - mais sans nécessairement devoir les insérer dans la Blockchain, tout en offrant les mêmes garanties que si elles l'étaient. (Le même procédé pouvant être transposé aux autres protocoles à base de blockchain).

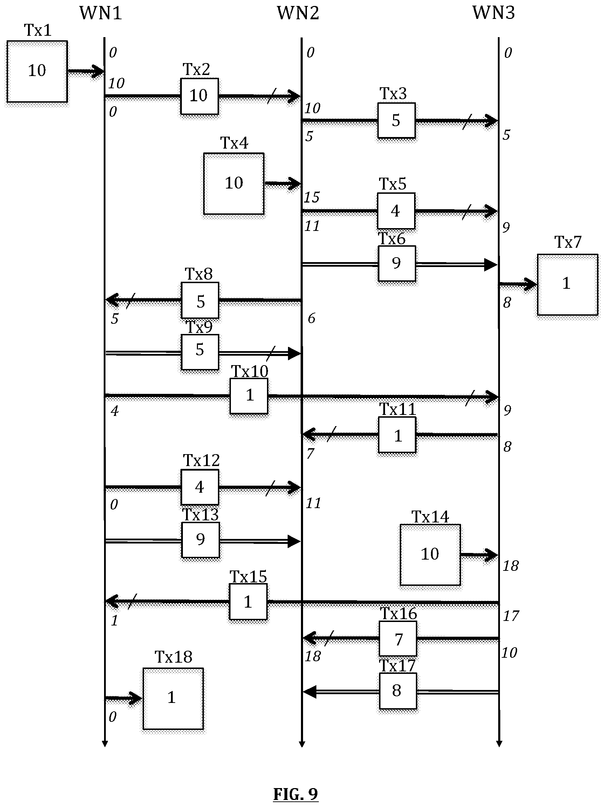

On considère ici le cas où la clé privée secrète d'une WN est une clé privée correspondant à une adresse Bitcoin (c'est-à-dire que le WN génère une adresse Bitcoin à partir de sa clé privée secrète). Un WN est ainsi apte à générer une transaction Bitcoin dont l'input (ou un des ses inputs) est connecté à un output (qui lui est destiné) d'une transaction amont (auquel, par exemple, l'utilisateur dudit WN a pu accéder du fait qu'elle est publiée dans la blockchain et qui l'a entrée audit WN en input dans son terminal), et (facultativement) à l'annoncer (broadcast) pour qu'elle soit insérée dans la blockchain. La **Figure 9** présente un exemple avec trois Wallet Nodes (« WN1 », « WN2 » et « WN3 ») où tout d'abord l'utilisateur de WN1 (ou un tiers) crée une transaction Bitcoin entrante (« Tx1 ») en faveur de WN1 (ayant un output donnant 10 BTC à WN1), et classiquement annonce (« *broadcast* ») cette transaction qui est alors insérée dans la blockchain, ceci ayant pour effet de garantir à l'utilisateur de WN1 que seul WN1 peut dépenser ces 10 BTC qui lui sont disponibles sur Tx1. (A noter que même dans le cas où Tx1 a été créée indépendamment de WN1, des moyens sont prévus pour que WN1 en soit notifié et/ou le vérifie/détecte après son insertion dans la blockchain, attende ou pas un certain nombre de confirmations de blocks, et mette à jour ses variables persistantes d'état par rapport à cette nouvelle entrée.)

Les trois grands traits verticaux représentent l'évolution de ces Wallet Nodes dans le temps (de haut en bas). Ainsi, à la suite de Tx1, on voit sur cette figure une séquence de plusieurs transactions entre WN (Tx2, Tx3, etc.), ainsi que d'autres transactions entrantes (à partir d'adresses non-WN, en faveur de WN1, WN2 ou WN3, telle que Tx4 qui est une transaction entrante en faveur de WN2) et des transactions sortantes (à partir de WN1, WN2 ou WN3 en faveur d'adresses non-WN, telle que Tx7), avec à chaque fois que c'est faisable, un *remplacement* d'au moins deux transactions inter-WN antérieures par une nouvelle, afin qu'il ne reste de préférence qu'une seule (ou le moins possible de) transaction non *broadcast* entre deux WN données, celles qui ont été remplacées étant *supprimées* (on entend par là qu'elles sont au moins marquées comme tel et considérées comme si elles l'étaient) et *le solde courant restant inchangé par ces remplacements.* D'une manière générale, le procédé consiste à simplifier un ensemble de transactions par mises à jour de ces derniers, tirant parti du fait qu'elles ne sont pas *broadcast* (ci après « *non-broadcast* »)*.*

Lorsqu'une transaction transférant des BTC de WN1 à WN2 est générée (telle que Tx2), elle est signée par WN1 (signature classique de transaction Bitcoin) et communiquée à WN2 par message. Une création (ou mise-à-jour ou annulation de transaction, pour autant qu'elle soit *non-broadcast)* est entérinée par *envoi* de message (au sens de la section précédente).

Sur la **Figure 9**, chaque transaction est représentée abstraitement par une boîte (un carré) placée sur une flèche. Le nombre à l'intérieur de cette boîte représente le montant transféré du point de vue de l'utilisateur. Lesdites transactions entrantes et sortantes (c'est-à-dire qui ne sont pas des transactions entre WN) sont représentées par des boîtes plus grandes que les transactions inter-WN. Lesdits soldes sont représentés en italique (le long des grands traits verticaux, à leur droite). Ladite suppression d'une transaction inter-WN est présentée par un petit trait oblique sur le bout de la flèche représentant cette transaction. Lesdites transactions de remplacement (tel que Tx6) sont représentées de manière distincte au moyen d'une flèche à double trait et lorsqu'elles sont elles-mêmes supprimées (comme dans le cas de Tx8) ceci est aussi présenté par un petit trait oblique.

Ainsi, la **Figure 9** montre en haut à gauche, une rentrée (Tx1) de 10 BTC sur WN1 dont le solde était juste avant à 0. Par cette transaction, son solde passe ainsi à 10 (montré en italique). Ces 10 BTC sont transférés (par Tx2) à WN2, le solde de WN1 repassant à 0 et le solde de WN2 passant de 0 à 10. Puis WN2 transfère (par Tx3) 5 BTC à WN3 (il lui en reste ainsi 5). Plus bas, 10 BTC sont transférés à WN2 à partir d'une adresse non-WN (par la transaction Tx4 qui a été insérée dans la blockchain), le solde de WN2 passant ainsi de 5 à 15. WN2 transfère 4 BTC à WN3 (Tx5), les soldes de part et d'autre passant ainsi respectivement à (15-4=) 11 et (5+4=) 9.

Il y a maintenant deux transactions *non-broadcast* de WN2 à WN3 (Tx3 et Tx5) et elles peuvent être *remplacées* par une transaction transférant leur somme (Tx6, transférant 5+4=9 BTC). Tx3 et Tx5 sont ainsi supprimées, ce qui est montré sur la **Figure 9** par les petits traits obliques sur les flèches représentant ces transactions.

WN3 transfère 1 BTC à un tiers non-WN par la transaction Tx7 qui est *broadcast.* Par conséquent, toute la chaîne des transactions qui l'alimentent (il s'agit ici de Tx6 et Tx4 seulement, comme montré à la **Figure 11** décrite plus loin) sont aussi *broadcast* (insérées dans la blockchain pour que que Tx7 puisse aussi l'être) et ne pourront donc pas être supprimées - elles cessent ainsi d'être remplaçables.

WN2 transfère 5 BTC à WN1 (Tx8). Alors, comme il y a aussi la transaction Tx2 entre ces WN, ces deux transactions (Tx2 et Tx8) sont *remplacées* avec Tx9 de WN1 à WN2, qui transfère leur différence (10-5=5 BTC) du fait qu'elles sont en sens inverse. Tx2 et Tx8 sont ainsi supprimées.

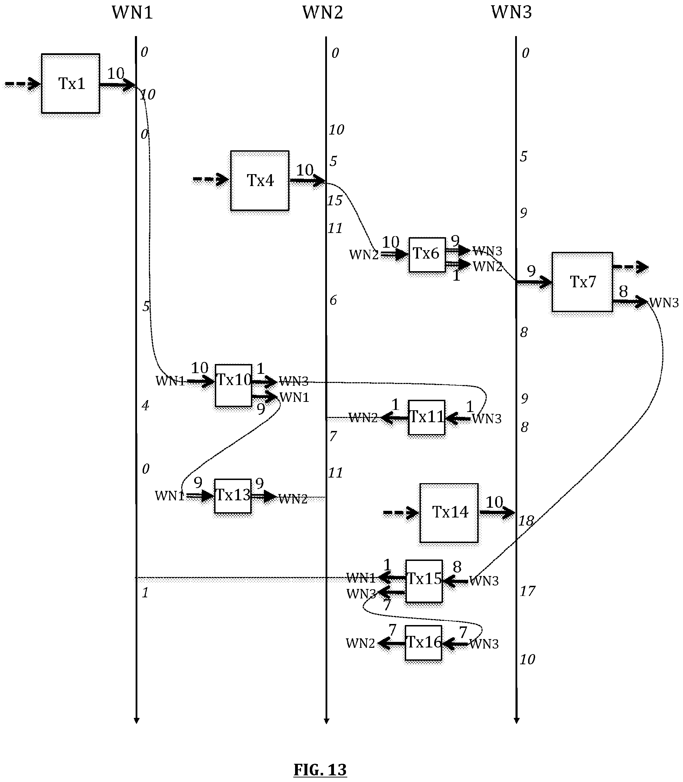

Cette transaction de remplacement Tx9 est elle-même supprimée suite à la génération de Tx12 (toutes deux étant *non-broadcast),* donnant lieu à la transaction de remplacement Tx13. (La **Figure** 9 montre ce remplacement tel qu'il est perçu par l'utilisateur, tandis que les **Figures 12** **et** **13** décrites plus loin en montrent les détails au niveau Bitcoin).

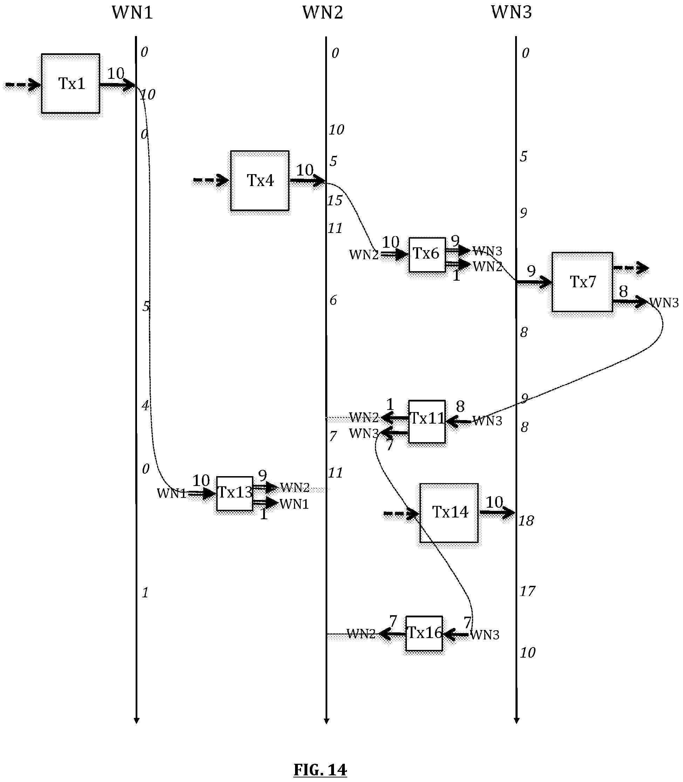

Tx10 et Tx15 sont générées entre WN1 et WN3, sont de même valeur, en sens inverse et *non-broadcast,* et peuvent donc simplement *s'annuler,* c'est-à-dire être supprimées sans donner lieu à une transaction de remplacement. (Ici encore, il est intéressant d'en voir aux **Figures 13** **et** **14** les détails au niveau Bitcoin).

Tx11 et Tx16 qui sont de même sens (de WN3 à WN2) et *non-broadcast,* donnent lieu à la transaction de remplacement Tx17 qui transfère leur somme et qui est elle-même remplaçable tant qu'elle reste *non-broadcast* (détails au niveau Bitcoin aux **Figures 14** **et** **13****).**

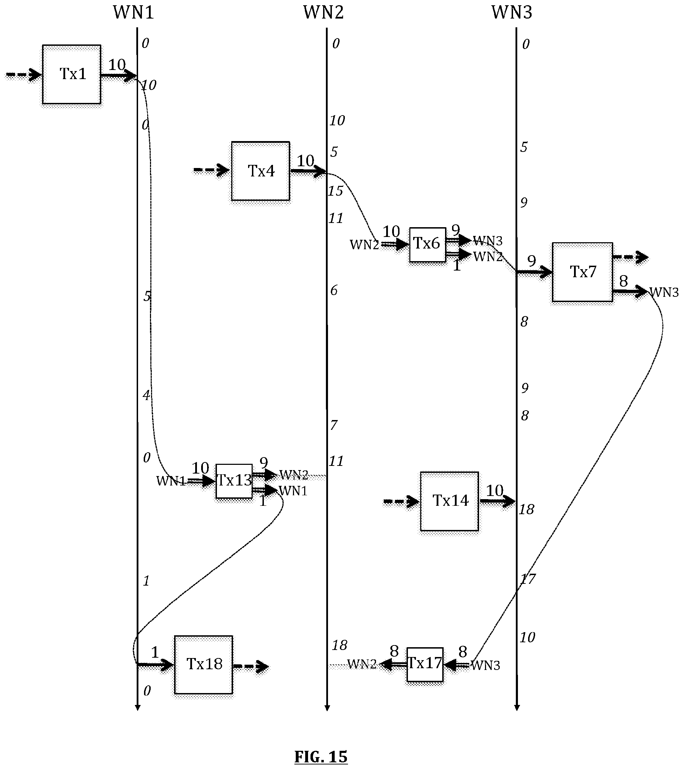

En revanche, la transaction sortante Tx18 (*broadcast*) provoque le *broadcast* de la chaîne des transactions qui l'alimentent et qui ne peuvent dès lors plus être supprimées, en l'occurrence il s'agit de Tx13 (voir la **Figure 15****).**

Les transactions Bitcoin présentées à la **Figure 9** sont « abstraites », en ce sens qu'elles présentent les montants transférés du point de vue de l'utilisateur mais ne montrent pas les inputs et outputs de ces transactions au sens de Bitcoin. Les **Figures 10 à 15** présentent les réelles transactions correspondant aux transactions abstraites de la **Figure 9** (en explicitant leurs inputs et outputs).

Le procédé de leur génération se base sur le fait qu'à un solde disponible dans une WN (le nombre en italique sur la figure) correspond toujours au moins (un montant disponible sur) un output en faveur de ce WN (le total de ces outputs étant égal à ce solde), que l'on peut combiner de tels outputs pour les connecter aux inputs d'une transaction générée par ledit WN, et dans le cas d'un dépassement, retourner le surplus (appelé « change ») audit WN par un output supplémentaire (ou comme transaction fees). Et en ce qui concerne la mise en oeuvre de remplacements/suppressions, même dans le cas où un output d'une transaction à supprimer (par exemple Tx10, voir **Figure 13****)** est connecté à un input d'une transaction qu'il n'est pas prévu de supprimer (Tx11) dans la même opération, ce dernier peut être automatiquement mis à jour pour être connecté à un output disponible d'une autre transaction (Tx13).

Sur les **Figures 10 à 15****,** les input(s) et output(s) des transactions sont montrés par des petites flèches horizontales et leurs connexions sont montrées par de fines lignes courbes pointillées (un output libellé « WN1 » d'une transaction est connecté à un input aussi libellé « WN1 » d'une transaction ultérieure, et ainsi de suite).

Il est implicite sur ces figures que la création d'une transaction comprend *l'envoi* de message(s) au sens de la section précédente. Par exemple, la génération de Tx3 par WN2 entraîne *l'envoi* par WN2 d'un message l'indiquant à WN3 et cette transaction n'est réellement créée que sur retour d'un accusé de réception par WN3 (voir aussi la section « Garantie d'engagement en cas de non-responsiveness »). La **Figure 10** montre les transactions réelles Tx1 à Tx5, qui correspondent aux transactions abstraites de même libellé de la **Figure 9****.** On y voit que, bien que, selon la **Figure 9****,** Tx3 ne transfère que 5 BTC à WN3, son input prend 10 BTC de Tx2 (du fait que Tx2 n'a qu'un output de 10 BTC en faveur de WN2) et retourne 5 BTC à WN2. Autrement dit, Tx3 a un output de 5 BTC en faveur de WN2, en plus de l'output de 5 BTC en faveur de WN3.

Les transactions Tx3 et Tx5 de la **Figure 10** sont *remplacées* à la **Figure 11** avec la transaction Tx6, générée par WN2 (et dont la notification de remplacement est *envoyée* à WN3). Pour effectuer ce remplacement, WN2 peut connecter Tx6 à Tx2 ou à la transaction entrante Tx4. Cette dernière est préférée du fait que la chaîne de transactions d'alimentation à l'amont est plus courte (ou par application d'heuristiques plus complexes). En effet, cette même figure présente la transaction sortante Tx7 qui est *broadcast* d'emblée et, si au contraire Tx6 était connectée à Tx2, Tx2 aurait aussi dû être *broadcast* et n'aurait pas pu être plus tard remplacé comme le présente la **Figure 12****.**

La **Figure 12** présente le résultat du remplacement de Tx2 et Tx8 avec Tx9, ainsi que la génération des transactions Tx10 par WN1 (vers WN3), Tx11 par WN3 (vers WN2) et Tx12 de nouveau par WN1 (mais vers WN2).

La **Figure 13** présente le remplacement par Tx13 de la transaction de remplacement Tx9, suite à la génération de Tx12. En effet, comme le montre la **Figure 9** (et la **Figure 12****),** l'effet cumulé de ces deux transactions est de fournir 5+4=9 BTC de WN1 à WN2. Ce remplacement a comme effet de mettre à jour l'input de Tx10, ainsi que son deuxième output qui est maintenant connectée à la nouvelle transaction Tx13. On voit aussi sur cette figure la génération des transactions Tx14 à Tx16.

La génération de Tx15 a pour effet d'annuler l'effet de Tx10, en effet elle transfère 1 BTC en sens inverse. La **Figure 14** présente le résultat de cette annulation qui entraîne la mise à jour de l'input et l'output de Tx11.

Enfin, à la **Figure 15****,** Tx11 et Tx16 sont remplacées par Tx17 qui connecte son input à l'output de Tx7. Cette Figure montre aussi que WN1 génère la transaction sortante Tx18 alimentée par Tx13, ce qui rend Tx13 broadcast et donc non supprimable.

On a déjà décrit plus haut (ainsi que dans la demande PCT WO2016/120826 A2) la propriété de *garantie d'intégrité d'exécution* et *blindness* des WN selon laquelle, sur réception d'un WM, le WN exécute nécessairement le WP spécifique indiqué dans ce WM, à l'exclusion de toutes autres instructions, sur les données d'entrée fournies, à l'exclusion de toutes autres données, et n'émet que les WM qui le cas échéant sont prévus dans ledit WP par rapport à ces données d'entrée et les variables persistantes d'état, en assurant *l'inaccessibilité* sans discontinuité à la fois des données d'entrée, de leur traitement, des variables d'état et du résultat du traitement.

Les opérations décrites ci-dessus de génération et manipulation de transactions Bitcoin (qui peuvent être insérées ou non dans la blockchain) tirent parti de ces propriétés pour sécuriser lesdits suppressions/remplacements. Ainsi, par exemple, la génération par WN1 de la transaction de remplacement Tx6 (en référence aux **Figures 9** **et** **11****)** ne présente pas le risque que WN2 (ou son utilisateur ou propriétaire) ne supprime pas la transaction Tx2 que Tx6 remplace. En effet :
- tant que WN2 ne *broadcaste* pas Tx2 pour insertion dans la blockchain (par exemple suite à une commande de l'utilisateur), *l'utilisateur ne peut pas voir le contenu de Tx2* (ce contenu comprenant la signature par WN1 de ce paiement et que l'utilisateur de WN2 aurait pu, *s'il n'y avait pas la propriété de blindness,* copier et *broadcaste* plus tard par d'autres moyens) ;
- une commande de *broadcast* n'est pas prise en compte par WN2 après que Tx2 est supprimée (ou lorsque Tx2 est marquée comme étant en mode « supprimée ») dans WN2 ;
- lorsque le contenu de Tx2 a été dévoilé à l'utilisateur (suite à son *broadcast),* il ne peut plus être supprimé/remplacé au sens du présent procédé de l'invention.

A noter que toutes les différentes sortes de transactions Bitcoin possibles peuvent être générées. Les transactions sont communiquées par WM aux WN ayant les adresses spécifiées sur ou pour les outputs de ces transactions. Des signatures requises peuvent être communiquées par WM. Par exemple, une transaction requérant n parmi m signatures (multisig) peut être générée par WN et communiquée par WM aux m signataires potentiels dont certains retourneront leur signature. Ainsi, des transactions de micro-paiements [https://en.bitcoin.it/wiki/Contract#Example_7:_Rapidly-adjusted_.28micro.29payments_to_a_pre-determined_party] et d'établissement de canaux de paiements et de paiements dans de tels canaux, notamment selon le protocole Lightning Network [https://lightning.network/lightning-network-paper.pdf] peuvent être générées par WN et simplifiés selon le procédé décrit ici.

Le fait de ne pas avoir à insérer une transaction dans la blockchain présente les avantages notamment de (1) confirmation instantanée, (2) non-paiement de fees et (3) volume théoriquement illimité des transactions possibles.

Dans quels cas a-t-on besoin d'insérer une transaction dans la blockchain ?
- Les transactions entrantes (à partir d'adresses non-WN) doivent nécessairement être insérées dans la blockchain au préalable afin de se prémunir d'un double spend. Ainsi, le WN ne prend en compte (ou n'entérine) une transaction entrante qu'une fois qu'elle est visible dans la blockchain.
- Les transactions sortantes ne sont *broadcast* que facultativement, dans la mesure où il n'y a (presque) aucun risque de *double spend* par le WN (le risque de violation (« *tampering »)* d'un système-sur-puce de l'état de l'art étant faible, d'autant plus en présence de WN miroirs - voir la description des WN miroirs plus haut). En pratique, une transaction sortante est insérée dans la blockchain au moment où au moins un output destiné à une adresse non-WN est prévu d'être dépensé. Son contenu devient alors accessible, ainsi que les transactions amont, et ces transactions cessent d'être supprimables.
- Les transactions inter-WN peuvent avantageusement ne pas être *broadcasté,* mais il n'est pas interdit de le faire (n'importe quand). Une transaction *broadcastée* (en vue de la faire insérer dans la blockchain) ne sera pas remplacée puisqu'elle ne peut être supprimée, mais les autres transactions continuent à présenter les avantages susmentionnées sauf lorsqu'elles l'alimentent (la perte d'avantage est locale à la transaction *broadcast* + la chaîne des transactions amont qui l'alimentent).

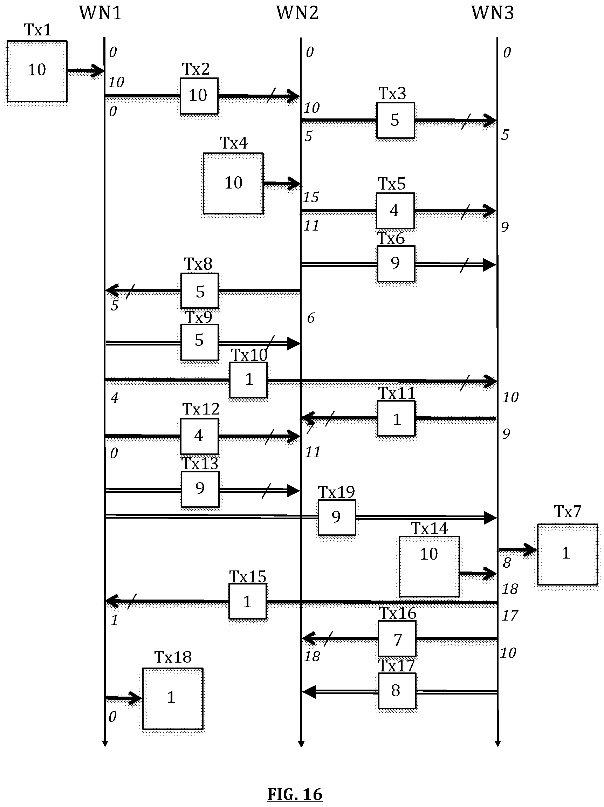

On a vu que les transactions Bitcoin inter-WN générées sont entérinées sur réception d'accusé de réception (de leurs bénéficiaires respectifs) et que deux transactions entre *deux* WN données sont, dans le cas où aucune n'est *broadcastée,* simplifiées (remplacées par une seule transaction ou simplement annulées) dans certains cas. On va maintenant décrire, en référence aux **Figures 16 à 19**, un procédé de simplification (aussi par remplacement ou simple annulation) d'une pluralité de transactions entre *plus de deux* WN. Ce procédé utilise le procédé de propagation d'accusés de réception décrit plus haut, leurs *payloads* (aussi décrit plus haut) propageant l'information des BTC transférés entre des WN non directement voisins.

Les **Figures 16 à 19** reprennent l'exemple des **Figures 9 à 15** mais à la différence près que sur les **Figures 16 à 19****,** la transaction Tx7 est générée (par WN3) *après* que la transaction Tx13 est entérinée (générée par WN1). (A noter que le même procédé aurait pu être décrit sur l'exemple présenté aux **Figures 9 à 15****,** mais en considérant que Tx7 n'est pas *broadcastée* avant que Tx13 ne soit entériné.)

Grâce à la propagation par WN2 vers WN1 de l'accusé de réception par WN3 de Tx6 pour 9 BTC, les transactions Tx9 et Tx12 pour un total aussi de 9 BTC étant entérinées (sur réception par WN1 d'accusés de réception de la part de WN2), WN1 remplace ces trois transactions par une seule transaction Tx19 qui transfère 9 BTC de WN1 à WN3 directement.

En variante de mise en oeuvre (et c'est cette variante qui est présenté dans les **Figures 16 à 19****),** tout d'abord Tx9 (5 BTC) et Tx12 (4 BTC), toutes deux de WN1 à WN2, sont remplacées par Tx13 (9 BTC, de WN1 à WN2), puis cette dernière et Tx6 (9 BTC, de WN2 à WN3) sont remplacées par Tx19 (9 BTC) de WN1 à WN3.

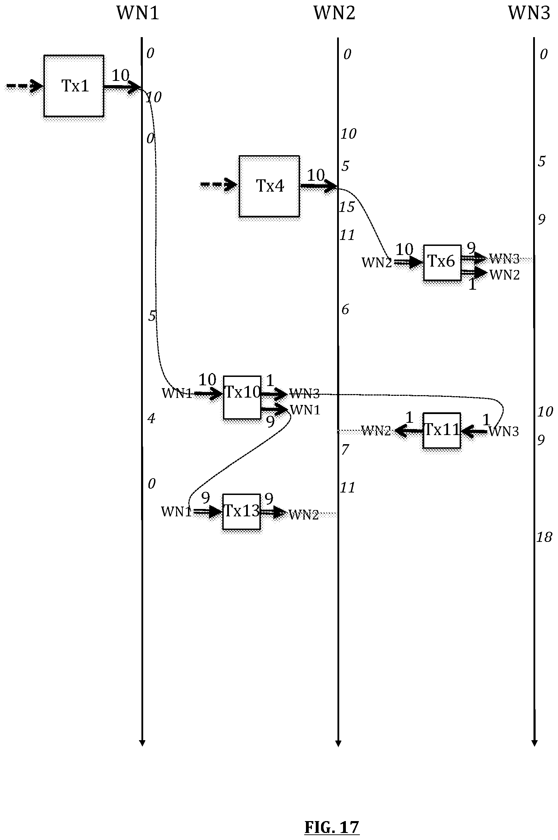

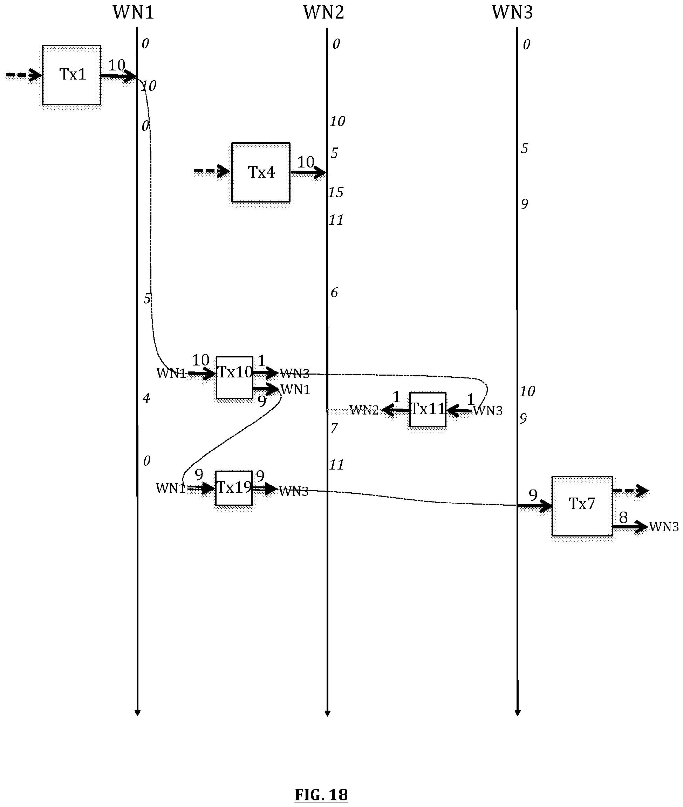

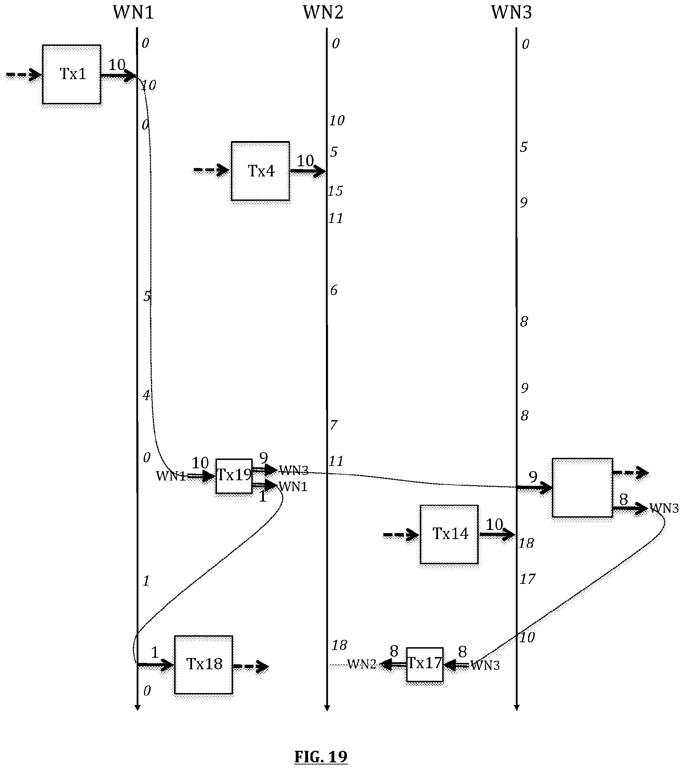

Pour présenter les transactions Bitcoin réelles générées, la **Figure 17** reprend la **Figure 13** mais sans que Tx7 et les suivantes ne soient encore générées. La **Figure 18** montre la transaction Tx19 (9 BTC de WN1 à WN3) qui remplace les transactions Tx13 (9 BTC de WN1 à WN2) et Tx6 (9 BTC de WN2 à WN3, en prenant 10 BTC de Tx4 et en se gardant un change de 1 BTC) montrés à la **Figure 17****.** Enfin, comme on le voit à la **Figure 19****,** l'ensemble des neuf transactions inter-WN de cet exemple ont été simplifiées en un ensemble de deux transactions seulement (Tx19 et Tx17).

On comprend que ce procédé peut aussi être appliqué pour simplifier des chemins de transactions inter-WN dans un réseau de plus de trois WN (sans limitation de ce nombre).

On notera aussi que des transactions peuvent être remplacées dans le but d'inclure des paiements de transaction fees lorsqu'elles sont broadcast.

Les unités de compte dont il a été question (BTC) sont avantageusement mises en oeuvre sous forme de tags et lesdites transactions Bitcoin sont des transactions de transfert de tags dont les UA sont des BTC (comme décrit plus haut).

Ainsi la possibilité de faire consommer des UA de tags par différents types de programmes WP (Smart Contracts), pour autant qu'ils soient habilités à le faire (cf. description des tags et CCC), permet de conférer à un système basé sur Bitcoin la puissance des smart contracts d'un système tel que Ethereum.

### Réseau mixte SoCs WN et Enclaves WN

Pour rappel, la demande PCT No. WO2016/120826 A2 décrit un système-sur-puce (SoC WN) dans lesquels, en réaction à la réception d'un message par un dispositif comprenant un processeur, un premier programme (appelé ici « WNRoT », comme « Wallet Node Root of Trust »), composé d'instructions non modifiables, charge dans ce système-sur-puce un code exécutable dont le hash correspond à un hash donné inclus dans ledit message reçu. L'exécution qui suit de ce code exécutable, dans ledit dispositif, est ainsi prédéterminée par rapport à ce message reçu. Ladite correspondance est garantie dans la mesure où des restrictions d'accès appropriées entre les différentes parties dudit système-sur-puce existent et ne peuvent pas être altérées. Le code exécutable ainsi imposé par l'émetteur du message est quelconque et apte à mettre à jour des variables d'état (pour certaines, seul le code exécutable les possédant étant apte à les modifier) et générer encore d'autres messages qui vont eux-mêmes propager ce même code de hachage vers encore d'autres tels dispositifs.

Le système permet ainsi de garantir les engagements exécutables (Wallet Programs, ou Smart Contracts) que représentent lesdits codes exécutables. Par exemple, la Figure 7 de cette demande PCT présente un paiement de 10 unités de compte (UA) d'un noeud "WN 1" à un noeud "WN 2", le même Wallet Program, exécuté séparément sur chacun de ces deux noeuds - avec des messages d'entrée différents et sur des variables persistantes d'état différentes, en l'occurrence ces variables sont des soldes d'UA -, retranchant 10 UA du solde (« balance ») de WN 1 et ajoutant 10 UA au solde de WN 2, un WM indiquant ce paiement ayant été envoyé de WN 1 vers WN 2.

Cette garantie n'existe cependant que dans la mesure où ledit dispositif reste responsif (actif, allumé) - limitation enlevée grâce aux WN miroirs décrits plus haut (voir aussi plus loin la section « Garantie d'engagement en cas de non-responsiveness ») - toutefois on peut noter que certains smart contracts, tels que le WP de paiement susmentionné, peuvent fonctionner même sans contrainte de responsiveness : même si le destinataire du paiement est non-responsive, dans une mise en oeuvre qui prévoie les renvois de WM, le WN (ici WN 2) censé être payé va recevoir le montant payé et augmenter son solde d'autant dès qu'il sera responsive à nouveau.

Cette garantie est due au fait que (i) le dispositif récepteur d'un message réagit selon le smart contract que ce message impose et (ii) que ce message a lui-même été généré dans le cadre exactement du même smart contract dans la mesure où il a été produit par le même code exécutable. Ce dispositif est mis en oeuvre en un système-sur-puce muni d'une clé privée secrète (accessible exclusivement par un sous-système de signature « Sign », cf. Figure 5 de cette demande PCT) et apte :
* en réaction à la réception d'un message (WM) contenant un hash (#WP), à charger pour exécution, à partir d'un sous-système de codes exécutables quelconques (« Wallet Programs »), le code exécutable quelconque WP dont le hash du contenu correspond audit hash (#WP) contenu dans ledit message (WM) ;
* avant la signature d'un message (WM) à émettre, à amener le sous-système de signature (Sign) à générer ou à vérifier le hash du code exécutable quelconque couramment chargé (#WP), pour inclusion dans ledit message (après éventuel chiffrement de ce hash avec d'autres données à transmettre), garantissant ainsi que le même hash est re-propagé d'un message reçu à un message émis (ou, avantageusement et comme déjà décrit, les WN s'échangent des WM incluant des hachés différents de WP différents à exécuter, mais dont la correspondance est garantie au moyen d'une spécification commune des WP à exécuter, incluse dans les WM).

Et on a vu ici, à la section « CMMU », une autre forme de réalisation d'un SoC WN, dans lequel essentiellement les fonctions propres aux WN (correspondant aux fonctionnalités des parties Check/Load, Sign, etc.) ont été encapsulées dans une unité dite « Cryptographie Memory Management Unit ».

On va maintenant décrire un procédé permettant de faire coopérer ensemble des entités de type SoC WN et des entités de type unité sécurisée nommées ici « enclave » reprenant les principes des WN énoncés ci-dessus, notamment le principe qu'au niveau de chaque noeud les programmes WP sont chiffrés et le nœud en question accède à ces programmes chiffrés de manière sécurisée sur la base de hachés de ces programmes (#WP) contenus dans les messages entrants (WM). Dans la suite du texte, le terme « enclave » est pris au sens général « TEE » (Trusted Execution Environment) et n'est pas restreint aux enclaves SGX des processeurs Intel.

Le terme « enclave » peut donc indifféremment désigner soit l'enclave elle-même, soit l'environnement sécurisé apte à générer une telle enclave.

Ainsi, un WM peut être envoyé par un système-sur-puce WN ou une enclave et reçu par un système-sur-puce WN ou une enclave. On va maintenant décrire les protocoles utilisés pour ces échanges.

Pour rappel, selon des options de schéma présentés plus haut, un message quelconque provenant d'un SoC WN a la forme suivante :
message: ***nonce1, §_{PK2}data..., nonce2, PK1, Sign_{SK1}(nonce1**, **§_{PK2}data..., nonce2), sign_{SK}(PK1)*** où
- SK1/PK1 est la paire de clés privée/publique de l'émetteur du message,
- SK2/PK2 est la paire de clés privée/publique du destinataire du message et
- SK est la clé privée de l'autorité de confiance représentant ou agréant le fabricant, certifiant la clé publique PK1 de l'émetteur,
- ***§_{PK2}data...*** est le contenu (payload) du message, ce contenu étant chiffré avec PK2,
- *nonce2* identifie le message en question et *nonce1* est l'identifiant du message entrant reçu qui avait déclenché le traitement qui a donné lieu à ce message, et
- la signature ***sign_{SK}(PK1)*** (appellée « certificat ») est censée être vérifiée par le récepteur du message en la décryptant avec la clé publique PK de l'autorité de confiance représentant ou agréant le fabricant, cette vérification ayant pour but de s'assurer que le message provient d'un SoC WN.

On considère ici que dans le cas de réception d'un message quelconque provenant d'une enclave :
- le certificat (la signature ***sign_{SK}(PK1)*** de l'autorité de confiance) indique qu'il s'agit d'une enclave et
- ***§_{PK2}data...*** inclut une attestation de l'authenticité du programme exécuté et de l'intégrité de cette exécution.

Une enclave est ici caractérisée en ce qu'elle a les propriétés suivantes :
- « isolation » : l'enclave isole ses données et traitements et à aucun moment son état d'exécution (ou pile d'exécution) n'est visible du système d'exploitation ;
- « secret key » : l'enclave possède une clé privée secrète accessible seulement par elle ;
- « remote attestation » : l'enclave est apte à fournir une attestation d'authenticité et d'intégrité d'exécution d'un programme qu'elle exécute (en particulier dudit premier programme WNRoT ou du Wallet Program exécuté) ;
- « certified » : l'enclave ou le processeur qui contient l'enclave est certifiée par une autorité de confiance représentant ou agréant le fabricant du processeur (autorité qui fournit sa signature de la clé publique ou de l'adresse de l'enclave) ; et
- « general-purpose » : ledit premier programme composé d'instructions non modifiables chargées en premier dans l'enclave - tel que WNRoT dans le cas du protocole WN - peut être *sélectionné parmi une pluralité de premiers programmes* (correspondant au protocole utilisé).

En ce qui concerne la dernière propriété ci-dessus (« general-purpose »), comme ledit premier programme peut être sélectionné parmi une pluralité, l'adresse (ou la clé publique) de l'enclave certifiée ne suffit pas à garantir qu'il se comporte comme un WN (comme c'était le cas jusqu'ici pour le SoC WN), il faut en plus s'assurer que ledit premier programme sélectionné est « WNRoT ».

Ainsi, le protocole (protocole WN) de communication entre wallet nodes, pour un WM à envoyer d'un noeud WN1 à un noeud WN2, *WN2 étant ici une enclave* (dont WN1 a vérifié le certificat), comprend les étapes suivantes :
1. WN1 annonce à WN2 par un pré-message l'existence d'un WM à lui envoyer ;
2. WN2 génère une attestation (d'authenticité du programme et d'intégrité de son exécution courante) pour WNRoT, le retourne à WN1 ;
3. WN1 vérifie l'attestation reçue et (en cas de vérification réussie) envoie WM à WN2.

Ici, dans la mesure où ces trois étapes se déroulent dans une même enclave qui reste dédiée à cette instance de l'exécution du protocole et qui soit apte à recevoir le message attendu en exclusivité, l'enclave garantit l'authenticité et l'intégrité de WNRoT, c'est-à-dire que l'on est assuré que l'enclave se comporte comme un WN.

Dans le cas où ce comportement en exclusivité n'est pas garanti, (voire même pour accroître la sécurité au cas où ce comportement est assuré), alors à l'étape 2, WN2 génère un Nonce (nombre aléatoire nouvellement généré qui n'est utilisé qu'une seule fois) et l'envoie en plus de l'attestation, et à l'étape 3, WN1 chiffre avec ce Nonce reçu le contenu du WM qu'il envoie à WN2. Plus précisément, les étapes comprennent alors les suivantes :
1. WN1 annonce à WN2 par un pré-message l'existence d'un WM à lui envoyer ;
2. WN2 génère une attestation (d'authenticité du programme et d'intégrité de son exécution courante) pour WNRoT, ainsi qu'un Nonce, et retourne à WN1 l'attestation et le Nonce ;
3. WN1 vérifie l'attestation reçue, chiffre avec le Nonce reçu le contenu du WM et l'envoie à WN2.

Dans une certaine mise en oeuvre, le WM envoyé à l'étape 3 comprend le haché #WP (comme décrit plus haut dans la présentation des WM), et WN2 peut alors ensuite :
- charger le WP correspondant (via une table de hachage "Program Hash Table" PHT) et
- l'exécuter sur les données contenues dans le message WM reçu à l'étape 3 (et que, le cas échéant, WN2 a décryptées avec la clé Nonce).

En variante, avantageusement, à l'étape 1, WN1 envoie #WP et, à l'étape 2, WN2 charge WP (exploitant ainsi le temps d'attente du WM qui sera reçu à l'étape 3). Plus précisément, les étapes comprennent alors les suivantes :
1. WN1 transmet #WP à WN2 ;
2. WN2 génère une attestation pour WNRoT (et un Nonce), retourne à WN1 l'attestation (et le Nonce) et charge WP ;
3. WN1 vérifie l'attestation reçue, puis (chiffre avec le Nonce reçu le contenu du WM et) envoie le WM à WN2 ;
4. WN2 (décrypte les données contenues dans WM et) exécute WP sur les données (décryptées) du WM.

Dans le cas où WN1 est une enclave - c'est-à-dire que le certificat de la clé ***PK1*** de l'émetteur d'un message reçu (i.e. la signature ***sign_{SK}(PK1)*** de l'autorité de confiance, qui peut être inclus dans le message reçu ou accessible par ailleurs) indique que WN1 est une enclave - après avoir vérifié ce certificat, WN2 vérifie que le message reçu à l'étape 1 ou 3 inclut (dans ***§_{PK2}data...***) une attestation de l'authenticité du programme exécuté et de l'intégrité de cette exécution.

Comme déjà décrit, dans le cas où le destinataire d'un WM est un SoC WN, le WM peut directement être de la forme ci-dessous :
message: ***nonce1, §_{PK2}data+#WP, nonce2, PK1, Sign_{SK1}(nonce1, §_{PK2}data+#WP, nonce2), signsx(PK1)***
ce qui, comparé au protocole pour envoyer un WM à une enclave, présente *l'avantage d'une seule étape au lieu de trois,* ainsi que d'une surface de vulnérabilité réduite.

Avantageusement, dans le cas où, suite à un message reçu, une enclave est apte à dynamiquement (re)générer des clés dérivées « ***SKd,PKd*** » (privée/publique, la clé privée n'étant accessible que par l'enclave) à partir d'une clé secrète principale (seal key) et du haché ***#WP*** d'un programme ***WP*** donné,

les données **(*data*** ou « payload ») d'un message WM autres que ***#WP*** sont chiffrées au moyen de la clé dérivée secrète ***SKd*** et ne peuvent ainsi être décryptées que par une enclave spécialisée (initialisée) pour le ***WP*** donné.

En reprenant le schéma unifié, le chiffrement avec ***PK2*** est ici remplacé par un chiffrement avec ***PKd2,*** sauf pour ***#WP*** qui reste chiffré avec ***PK2.***
message: ***nonce1, [§_{PKd2}data,] §_{PK2}#WP, nonce2, PK1, Sign_{SK1}(nonce1, [§_{PKd2}data,] §_{PK2}#WP, nonce2), sign_{SK}(PK1)***

A réception d'un message, le WN destinataire peut dans un premier temps au moins décrypter ***#WP*** avec sa clé privée ***SK2,*** en dériver une paire de clés ***SKd2,PKd2*** si ce n'est pas déjà fait, et communiquer ***PKd2*** à l'émetteur s'il ne l'a pas déjà.

Dans le cas où le destinataire d'un tel message est un SoC WN, l'échange se fait en un seul message dans le cas où l'émetteur connaît ***PKd2,*** et avec une interaction supplémentaire pour communiquer ***PKd2*** à l'émetteur sinon.

Comme déjà évoqué plus haut, dans le cas où le destinataire d'un tel message est une enclave, le protocole WN (détaillé ci-dessous) prévoit l'envoi par WN2 à WN1 d'une *attestation d'exécution et d'intégrité de **WNRoT*** (c'est une condition automatiquement requise par WN1) avant que WN1 ne transmette à WN2 le contenu ***data*** du message. Ainsi, l'approche est la suivante : lors de la réception d'un message (WM1) comprenant ***#WP,*** l'enclave retourne *l'attestation pour **WNRot*** et attend un message complémentaire (WM2) pour connaître ***data,*** et charge (via une table de hachage "Program Hash Table", PHT) un programme ***WP*** correspondant à ***#WP*** puis l'exécute dès que possible sur ***data;*** enfin, avantageusement une clé aléatoire de chiffrement peut être envoyée de WN2 à WN1 pour renforcer la sécurité du fait que WN1 chiffre ***data*** avec cette clé.

L'invention tire parti du fait que les enclaves impliquent un protocole en deux temps (car WN1 doit vérifier ***WNRoT*** avant de communiquer le contenu ***data*** du message) et que les clés dérivées nécessitent aussi un protocole en deux temps (car l'enclave doit au préalable être dynamiquement reconfiguré en fonction d'un message entrant comprenant un ***#WP*),** et combine ces deux temps respectifs dans les quatre étapes suivantes :
1. WN1 transmet ***#WP*** à WN2 (dans un message WM1) :
   message: ***nonce1, §_{PK2}#WP, nonce2, PK1, Sign_{SK1}(nonce1, §_{PK2}#WP, nonce2), sign_{SK}(PK1)***
2. WN2 génère une *attestation pour **WNRoT*** (et optionnellement un Nonce, non montré ci-dessous), retourne à WN1 l'attestation et la clé dérivée ***PKd2*** (ainsi que le cas échéant ledit Nonce) et charge ***WP*** :
   message: ***nonce2, §_{PK1}PKd2+WNRoT, nonce3, PK1, Sign_{SK1}(nonce2, §_{PK1}PKd2+WNRoT, nonce3), sign_{SK}(PK2)***
3. WN1 vérifie l'attestation reçue, puis envoie un message (WM2) à WN2 (après avoir, le cas échéant, chiffré avec ledit Nonce reçu le contenu de ce message) ;
   message: ***nonce3, §_{PKd2}data, nonce4, PK1, Sign_{SK1}(nonce3, §_{PKd2}data, nonce4), sign_{SK}(PK1)***
4. WN2 décrypte les données ***§_{PKd2}data*** contenues dans WM2 avec ***SKd2*** (et le cas échéant ledit Nonce) et exécute ***WP*** sur les données décryptées ***data.***

Avantageusement et comme déjà dit plus haut, à l'étape 2, la paire de clés ***SKd2,PKd2*** est (re)dérivée *dynamiquement* (dès la réception de ***#WP*** depuis WN1 à l'étape 1) et l'on peut alors éviter d'utiliser la clé SK principale de l'enclave.

### Enclaves miroirs

En ce qui concerne les contraintes sur les noeuds miroirs décrites notamment aux sections « WN Miroirs » et « Tags », les « hard WN » peuvent être constitués soit par des SoC, soit par des enclaves.

### Interaction entre Wallets Nodes et le monde physique

On rappelle que dans la demande WO2016120826A2, on avait décrit la notion de « tags » associés à des instances de produits susceptibles d'être *transférés* d'une entité à laquelle associée un « Owner Wallet Node » OWN vers une autre entité à laquelle est associé un autre OWN, le Tag ayant dans ce cas été créé par un OWN initial.

Ainsi lorsque le tag est transféré d'un nième OWN à un n+1ième OWN, il est garanti (par conception des WN) que le nième OWN ne le détient plus.

Les transactions de tels transfert de « tags » entre un OWN et le suivant sont décrites en détail ci-dessus aux sections « Tags » et « CMMU ».

Concrètement, un OWN initial attribue à un nouveau Tag un numéro de tag aléatoirement généré et dans la mesure où aucun autre OWN initial ne va jamais donner ce même numéro à un autre tag, les numéros des tags sont uniques.

Pour illustrer l'utilisation d'un tag, supposons tout d'abord qu'un tag donné représente une chaise, avec les caractéristiques suivantes :
- un numéro de série (donné par le fabricant de la chaise) a été apposé en dessous de la chaise lors de sa fabrication, de manière pratiquement inaltérable, du moins inaltérable sans que l'altération soit visible (si on regarde en dessous de la chaise),
- le OWN initial est associé au fabricant de la chaise,
- le OWN initial associe au numéro de tag le numéro de série de la chaise.

Dans cet exemple, le tag peut avantageusement être matérialisé par un tag RFID (collé sous la chaise) dans lequel sont par exemple stockés le numéro de tag, le numéro de série associé, et un identifiant du OWN initial (et par la suite un identifiant du OWN courant).

A noter que le tag pourrait en variante être matérialisé par une étiquette en papier où sont inscrites ces mêmes informations, ou encore le tag pourrait ne pas être matérialisé spécifiquement mais être identifiable par le numéro de série marqué sous la chaise ; en effet il est pas nécessaire de matérialiser le tag puisque les données d'un tag sont transmises d'un OWN au suivant.

On va maintenant décrire une forme de réalisation où, à un objet identifié par un tag (instance de produit), on associe un WN capable d'interagir, via un ou plusieurs capteurs et/ou un ou plusieurs actionneurs, avec le monde physique de l'extérieur de l'objet en question. Dans la suite, un tel WN est appelé « Body SoC » ou « BS » - en réalité, le WN en question est « hébergé » par ledit Body SoC (ou par un « Body Enclave »), comme on le décrit plus loin, mais dans un but de simplicité on considère ici le cas particulier où un BS n'héberge qu'un seul WN et, et par abus de langage dans le présent chapitre, on amalgame ces deux entités distinctes que sont le Body SoC (qui est une entité hardware et software) et le WN (qui est une entité software).

Prenons ainsi un exemple d'un tag représentant une serrure de porte d'accès à un logement.

Ici encore, le fabricant génère un numéro de série, bien visiblement gravé sur la serrure et pratiquement inaltérable, et l'associe au numéro de tag (généré par son OWN initial représentant le fabricant).

Dans cet exemple, le fabricant va avantageusement associer à cette serrure un BS, qui sera enfoui de façon inaltérable dans la serrure et connecté avec un capteur d'état apte à fournir l'état courant de la serrure (ici « ouvert » ou « fermé » dans une réalisation basique), ainsi qu'avec un actionneur tel qu'un contacteur électrique alimentant un électroaimant, pour sélectivement verrouiller ou déverrouiller la porte.

Le BS de la serrure est apte à transmettre (par un WM) l'état courant de la serrure à son OWN (typiquement associé au gestionnaire du logement), et ce dernier peut, à l'aide d'un WM envoyé au BS, agir sur le contacteur électrique pour changer cet état (i.e. ouvrir ou fermer la porte).

Dans le cas où un locataire, auquel est associé un autre OWN, loue ce logement, le contrôle du BS est transféré (par une transaction de transfert de tag - voir plus haut) du OWN du gestionnaire au OWN du locataire, puis automatiquement retransféré (par une transaction inverse) au OWN du gestionnaire en fin de location.

Avantageusement, le OWN du gestionnaire pourra vérifier lors d'une procédure proposée au gestionnaire (par exemple par un moyen automatique de lecture/reconnaissance de caractères) que le numéro de série de l'objet serrure dans le BS associé à cette serrure correspond effectivement au numéro de série gravé sur la serrure.

Un objet d'un BS est de fournir aux OWN concernés un état courant de l'objet associé de façon à pouvoir s'y fier, et de pouvoir agir sur cet objet de façon fiable.

A cet effet, selon une architecture possible, un BS tel que décrit ici est physiquement distinct d'un module de capteur et/ou d'actionneur (ou d'un module de plusieurs capteurs et/ou actionneurs), et des moyens de communication sécurisés sont prévus entre les deux.

En référence à la **Figure 24****,** on a représenté l'architecture d'un SoC associé à un module capteur/actionneur SAM (pour « Sensor/Actuator Module »).

La connexion entre le BS et le module SAM s'effectue à l'aide d'une liaison sans fil dédiée. De préférence, ce canal est doté de moyens permettant de détecter la rupture ou l'altération de la communication entre le WN et le ou les détecteurs ou capteurs, susceptible de révéler que le ou les capteurs ou détecteurs ont été fraudés, remplacés, altérés, etc.

Les capteurs peuvent être de toute nature : aptes à effectuer une mesure physique et/ou chimique, aptes à révéler un état binaire d'une élément du monde physique (ouvert/fermé, etc).

La liaison sans fil dédiée peut incorporer côté BS et côté SAM une unité de gestion de communication (CMU pour « Communications Management Unit ») associée à un élément de communication sans fil (WCE pour « Wireless Communications Elément »).

La sécurité de la liaison entre le BS et le circuit du ou des capteurs peut comprendre plusieurs aspects.

### a) Sécurisation couche physique

Elle peut se fonder sur une mise en contact électrique entre le BS et le circuit, ou sur une liaison sans fil. Dans le premier, cas la sécurisation de la couche physique peut être mise en oeuvre en déterminant au niveau du BS les caractéristiques d'impédance, statiques ou dynamiques, du circuit de capteur/actionneur. Les caractéristiques d'impédance du circuit, matérialisées par exemple par la forme d'onde obtenue en appliquant une impulsion électrique, sont mémorisées à la première connexion, et vérifiées régulièrement. Une modification de la réponse implique que le circuit a été déplacé, altéré, voire remplacé.

Dans le cas d'une liaison sans fil (radioélectrique, optique, acoustique, ...), l'analyse du comportement de la liaison dans le domaine temporel (« time-domain ») ou dans le domaine fréquentiel « frequency-domain » peut également être mémorisé à la première connexion et permet de vérifier que le circuit n'a pas été déplacé, altéré ou remplacé.

On comprend que ces vérifications sont effectuées indépendamment du contenu des messages échangés entre le BS et le circuit.

On réalise ainsi un apprentissage de la liaison physique entre le BS et le circuit.

### b) Sécurisation des échanges

Cette sécurisation peut être réalisée selon différentes approches selon que le circuit capteur/actionneur possède ou non un moyen de traitement.

Dans le premier cas, les valeurs (en général analogiques) fournies par le ou les capteurs peuvent faire l'objet d'un test de vraisemblance (gamme de valeurs possibles), ou les signaux de commande envoyés par le BS vers un actionneur peuvent être mis à profit (d'une manière analogue au test de la couche physique) pour vérifier l'impédance caractéristique du circuit.

Dans le second cas, on peut sécuriser les échanges par exemple en émettant de façon périodique ou continue à partir du BS un signal vers ce circuit et en vérifiant si la réponse est conforme à une réponse attendue. La détection d'une altération peut être une détection d'une substitution, d'un déplacement ou d'un changement des conditions opératoires du module de capteurs et/ou de détecteur, par exemple par une variation du signal attendu, dans la communication entre le WN et le circuit du ou des capteurs ou détecteurs.

En sus de l'apprentissage décrit plus haut, ou en remplacement, l'association entre un BS et un SAM s'effectue par une procédure initiale d'appariement entre le BS et le SAM, puis une procédure de vérification de la persistance de l'association est réalisée.

Dans une forme possible d'appariement, l'unité de gestion de communication CMU prévue dans le BS provoque l'envoi vers le SAM, via l'élément WCE associé, soit automatiquement, soit dans le cadre de l'exécution d'un WP incluant une fonction d'appariement, d'un signal d'appariement, et la réponse après traitement spécifique de ce signal par le SAM est mémorisée. Il peut s'agir d'une réponse contenant un ID unique du SAM, et/ou un ID résultant de la transformation d'un ID envoyé par le BS, d'un ID dérivé d'une fonction non clonable PUF (voir plus haut), etc.

La persistance de l'association entre le BS et le module peut être mise en oeuvre par exemple par envoi périodique du BS vers le module, via l'unité CMU et l'élément WCE, d'un signal encodant une information déterminée (périodicité largement variable selon l'application, qui peut aller par exemple de la microseconde à la journée) et par la vérification d'une réponse reçue (qui peut avantageusement comporter une composante variable de manière à éviter la fraude par écoute).

Le BS et le SAM étant appariés, les signaux délivrés par le ou les capteurs du SAM et à transmettre vers le BS, et/ou les signaux de commande engendrés au sein du BS et à transmettre au SAM, peuvent être transmis d'un élément à l'autre par un protocole approprié, pouvant mettre en oeuvre toute solution de sécurisation appropriée (encodage ou cryptage des données, mécanisme d'adressage permettant notamment de traiter le cas où un même BS possède des liaisons avec plusieurs modules SAM, etc.). Par ailleurs, cette même transmission peut être mise à profit pour vérifier que le SAM occupe une position fixe par rapport au BS (par exemple par un processus de « distance bounding » utilisant les temps de trajets).

Selon l'architecture retenue, les traitements liés à l'appariement, à la persistance de la liaison et au transfert de données peuvent être mis en oeuvre soit dans un processeur dédié appartenant à l'unité CMU, soit dans un autre moyen de traitement du BS.

Par ailleurs, les données provenant du ou des capteurs d'un SAM sont stockées dans une mémoire de variables d'état Sens/Act partagée par les différents WP et gérée par une unité de gestion de mémoire appropriée, associée ou non à la CMMU (ici associée à la CMMU et désignée par CMMU-S/A).

On comprend que, selon la nature de la couche physique et la nature du protocole d'échange entre le BS et le circuit, les unités CMU peuvent prendre des formes très différentes. Dans le cas de la vérification d'une couche physique, le CMU côté BS peut comprendre un circuit simple en électronique analogique, délivrant un signal logique révélant si la liaison a été altérée par rapport à celle établie lors de la première connexion.

A l'opposé, dans des modes de réalisation plus sophistiqués, le CMU côté BS et côté circuit peuvent comprendre des microcontrôleurs dédiés en liaison avec des circuits de pilotage de la liaison sans fil (modulation, amplification, antenne ou autre émetteur, ...).

De préférence, un protocole standard est mis en oeuvre de façon que différents types de SAMs répondant à ce standard puissent être connectés à un même BS.

On prévoit aussi qu'un BS puisse communiquer, via le même élément WCE ou par plusieurs WCE, avec plusieurs SAMs ayant chacun leur fonction.

De préférence, la partie émission/réception sans fil d'un SAM est physiquement intégré de façon sécurisée (noyé dans résine, etc.) avec la fonction physique à remplir (capteur, actionneur) de manière à limiter le risque de fraude au niveau du monde physique.

La communication sans fil entre le BS et le SAM peut être mise en oeuvre par l'une quelconques des technologies connues, et notamment capacitive magnétique, électromagnétique (y compris optique), acoustique (ultrasons), etc.

Selon les cas, l'élément WCE sera une plaque, bobine ou antenne, une source de rayonnement électromagnétique, un élément piézoélectrique ou équivalent, etc.

Selon la technologie retenue, la CMU comportera les circuits de modulation et d'amplification adaptés. Dans le cas d'une communication par technologie en champ proche NFC, on peut, dans une forme de réalisation particulière, réaliser un SAM en se basant sur un capteur ou un actionneur du commerce, auquel on adjoint une étiquette NFC (ou autre tag RFID) du commerce, le protocole d'échange avec l'étiquette NFC permettant de réaliser l'appariement et la persistance tels que décrits plus haut. La transmission des signaux d'actionnement ou des signaux captés, qui dans ce cas particulier n'est pas assurée par l'étiquette NFC, est gérée dans ce cas par une interface supplémentaire spécifique, filaire ou sans fil.

Selon une autre forme, on utilise un module NFC programmable dotée de broches d'entrée sortie filaires pour le ou les capteurs et le ou les actionneurs. L'ensemble est encapsulé, avec le cas échéant une batterie, pour réaliser l'intégrité physique.

Dans ces deux dernières formes de réalisation, un aspect important de la sécurité est que l'ensemble capteur/étiquette NFC ne soit pas déplacé par rapport au BS. Cette sécurisation peut être mise en oeuvre de façon particulièrement avantageuse en analysant un ou plusieurs paramètres du domaine temporel de la transmission sans fil entre le BS et l'étiquette (durée des impulsions, retard des impulsions, amplitude de la composante ondulatoire des impulsions, temps de décroissance des impulsions, etc.).

Cette sécurité peut encore être renforcée en analysant un ou plusieurs paramètres du domaine fréquentiel de la transmission (valeurs de spectre).

### Réseau mixte Body Enclave et SoC WN

On va maintenant décrire un procédé permettant de faire coopérer ensemble :
- des entités de type Système-sur-puce WN (comme décrit la demande PCT No. WO2016/120826 A2 et plus haut dans ce texte) et
- des enclaves dites « body enclave », aptes à exécuter des WP et ayant accès à des moyens d'entrée/sortie et de mémoire, comme les enclaves WN décrits plus haut, mais en plus :
   o pouvant héberger chacun une pluralité de WN (WN réel ou WN contresignataire) qui sont dynamiquement initialisés sur réception de messages,
   o étant apte à partager des WP entre différents WN hébergés,
   o étant apte à manipuler
      ▪ non seulement des données au niveau de chaque WN hébergé (telles que les tags) et des données (PSV) au niveau de chaque WP d'un WN hébergé,
      ▪ mais aussi des données au niveau du body enclave,
   o étant susceptibles d'être connectés au monde réel par des capteurs et actionneurs (SAM), et
   o étant apte à stocker des données de capteurs et actionneurs et à les partager entre différents WN hébergés et différents WP d'un WN hébergé, sélectivement.

La paire de clés (SK/PK) privée/publique de chaque WN hébergé par une *body enclave* est générée (blindly, sans la dévoiler) par le premier *body enclave* qui l'héberge puis, avantageusement, transmise aux *body enclaves* qui hébergent ses contresignataires (aussi blindly, la clé privée SK restant secrète), cette génération permettant aux WN hébergés de recevoir des contenus (payload) de message chiffrés au moyen de leurs clés publiques PK (alternativement, un WN hébergé peut recevoir des contenus chiffrés avec une clé dérivée - voir plus loin le procédé utilisant une paire de clés dérivées *« **SKd,PKd** »).*

Les *enclaves WN* décrites plus haut à la section « Réseau mixte *SoCs WN* et *Enclaves* WN » sont considérés ici comme cas particulier de *body enclave* incluant un seul WN.

L'approche décrite à la section « Réseau mixte *SoCs WN* et *Enclaves WN »* est ici reprise, toutefois, dans le protocole WN (pour envoyer un WM d'un noeud WN1 à un noeud WN2), dans le cas où le noeud destinataire WN2 est hébergé dans une *body enclave* (ci-dessous nommée « Body2 »), l'adresse de WN2 (dérivée de sa clé publique) est transmise en plus, de manière à permettre à Body2 de s'initialiser par rapport à WN2 (et non seulement par rapport au #WP). Ainsi, par exemple la première variante décrite à la section « Réseau mixte SoCs WN et Enclaves WN » est modifiée comme suit (les messages sont ici présentés schématiquement pour indiquer l'approche, sans que ce soit limitatif) :
1. WN1 transmet #WP ainsi que l'adresse de WN2 à une body enclave Body2 hébergeant WN2 message: ***nonce1, §_{PKBody2}WN2+#WP, nonce2, PK1, Sign_{SK1}(nonce1**, **§_{PKBody2}WN2+#WP, nonce2), sign_{SK}(PK1)***
2. Body2 génère l'attestation par rapport l'exécution de WNRoT, retourne à WN1 cette attestation, s'initialise pour WN2 et charge WP ;
   message: ***nonce2, §_{PK1}att(WNRoT), nonce3, PK2, Sign_{SKBody2}(nonce2, §_{PK1}att(WNRoT), nonce3), sign_{SK}(PK1)***
3. WN1 vérifie l'attestation reçue, puis envoie à Body2 un contenu *data* chiffré avec la clé publique PK2 de WN2 ;
   message: ***nonce3, §_{PKBody2}§_{PK2}data, nonce4, PK1, Sign_{SK1}(nonce3, §_{PKBody2}§_{PK2}data, nonce4), sign_{SK}(PK1)***
4. WN2 décrypte *data* et exécute WP sur *data.*

Aussi dans la même approche que celle décrite à la section « Réseau mixte *SoCs WN* et *Enclaves WN* », avantageusement, dans le cas où, suite à un message reçu, une enclave est apte à dynamiquement générer des clés dérivées *« **SKd,PKd** »* (privée/publique, la clé privée n'étant accessible que par l'enclave) à partir d'une clé secrète principale (seal key) et d'une adresse ***WN2*** du wallet node destinataire du message (et optionnellement du haché ***#WP*** si l'on veut l'avantage de ne pas utiliser la clé secrète du WN) spécifié(s) dans le message,

les données ***data*** (ou payload) du message, c'est-à-dire les données autres que l'adresse ***WN2*** du noeud destinataire (et l'identification ***#WP*** du programme ***WP*** à exécuter) sont chiffrées au moyen de la clé dérivée secrète ***SKd*** et ne peuvent ainsi être décryptées que par une enclave spécialisée pour le wallet node ***WN2*** donné (et le programme ***WP*** donné).

En reprenant le schéma unifié, le chiffrement avec ***PK2*** est ainsi remplacé par un chiffrement avec ***PKd2,*** sauf pour ***WN2*** (et ***#WP*)** qui restent chiffrés avec ***PK2.***
message: ***nonce1, [§_{PKd2}data+#WP,] §_{PK2}WN2, nonce2, PK1, Sign_{SK1}(nonce1, [§_{PKd2}data+#WP,] §_{PK2}WN2, nonce2), sign_{SK}(PK1)***
   (ou
message: ***nonce1, [§_{PKd2}data,] §_{PK2}WN2+#WP, nonce2, PK1, Sign_{SK1}(nonce1, [§_{PKd2}data,] §_{PK2}WN2+#WP, nonce2), sign_{SK}(PK1)*)**

A réception d'un message, le WN destinataire peut dans un premier temps au moins décrypter ***WN2*** (ou ***WN2+#WP*)** avec sa clé privée ***SK2,*** en dériver une paire de clés ***SKd2,PKd2*** si ce n'est pas déjà fait, et communiquer ***PKd2*** à l'émetteur s'il ne l'a pas déjà.

Dans le cas où le destinataire d'un tel message est un SoC WN, l'échange se fait en un seul message dans le cas où l'émetteur connaît ***PKd2,*** et avec une interaction supplémentaire pour communiquer ***PKd2*** à l'émetteur sinon.

Comme déjà évoqué plus haut, dans le cas où le destinataire d'un tel message est une *body enclave,* le protocole (détaillé ci-dessous) prévoit l'envoi par WN2 à WN1 d'une *attestation d'exécution et d'intégrité de **WNRoT*** (c'est une condition automatiquement requise par WN1) avant que WN1 ne transmette à WN2 le contenu ***data*** du message. L'approche est ainsi la suivante : lors de la réception d'un message (WM1) comprenant ***WN2* (*+#WP*)*,*** l'enclave s'initialise pour ***WN2,*** retourne *l'attestation pour **WNRot*** et attend un message complémentaire (WM2) pour connaître ***data**,* et charge (via une table de hachage "Program Hash Table", PHT) un programme ***WP*** correspondant à ***#WP*** puis l'exécute dès que possible sur ***data.***

L'invention tire parti du fait que les enclaves impliquent un protocole en deux temps (car WN1 doit vérifier ***WNRoT*** avant de communiquer le contenu ***data*** du message) et que les clés dérivées nécessitent aussi un protocole en deux temps, car le body enclave doit au préalable être reconfiguré en fonction d'un message entrant comprenant un ***WN2* (*+#WP*),** et combine ces deux temps respectifs dans les quatre étapes suivantes :
1. WN1 transmet ***WN2+#WP*** à ***Body2*** (dans un message WM1) :
   message: ***nonce1, §_{PKBody2}WN2+#WP, nonce2, PK1, Sign_{SK1}(nonce1, §_{PKBody2}WN2+#WP, nonce2), sign_{SK}(PK1)***
2. **Body2** vérifie les signatures, décrypte ***§_{PKBody2}WN2+#WP,*** retrouve ***PKd2*** à partir de ***WN2**,* génère une *attestation pour **WNRoT,*** retourne à WN1 l'attestation et la clé dérivée ***PKd2**,* initialise WN2 et charge ***WP*** :
   message: ***nonce2, §_{PK1}PKd2+att(WNRoT), nonce3, PK1, Sign_{SK1}(nonce2, §_{PK1}PKd2+att(WNRoT), nonce3), sign_{SK}(PK2)***
3. WN1 vérifie les signatures et l'attestation reçue, puis envoie un message (WM2) à ***WN2*** transmettant ***data*** :
   message: ***nonce3, §_{PKd2}data, nonce4, PK1, Sign_{SK1}(nonce3, §_{PKd2}data, nonce4), sign_{SK}(PK1)***
4. WN2 décrypte les données ***§_{PKd2}data*** contenues dans WM2 avec ***SKd2*** et exécute ***WP*** sur les données décryptées ***data.***

Avantageusement et comme déjà dit plus haut, à l'étape 2, la paire de clés ***SKd2,PKd2*** est (re)dérivée *dynamiquement* (dès la réception de ***WN2* (+*#WP*)** depuis WN1 à l'étape 1) et l'on peut alors éviter d'utiliser la clé SK principale de l'enclave.

### Body SoC

A la différence des body enclaves, les body SoC sont dédiés (aux traitements des WN, avec tags et capteurs) : ils ne sont pas general-purpose.

La section « CMMU - Crypto Memory Management Unit » décrit le CMMU. Ici, à réception d'un message destiné à un WN donné (spécifié dans le message - cf. plus haut la description des messages transmettant ***§_{PKBody2}WN2+#WP*)*****,*** le CMMU s'initialise par rapport aux NSV et Tags, propres aux WN destinataire, ainsi que par rapport aux PSV pour le #WP indiqué dans le message. La **Figure** 22 présente schématiquement les interactions entre les différentes parties (PROCESSOR, CMMU, MEMORY) du système :
1) Réception par CMMU d'un message contenant des données d'entrée d'un programme à exécuter ainsi que l'adresse du WN destinataire et le haché dudit programme ;
2) CMMU localise dans la table PHT, à partir dudit haché, ledit programme chiffré, le charge dans son cache et le décrypte (bloc par bloc) ; également, le CMMU s'initialise par rapport aux données susceptibles d'être accédées dans MEMORY (à savoir : NSV, Tags, PSV, etc.) ;
3) CMMU transmet à la volée le (un bloc à la fois du) programme décrypté à PROCESSOR pour exécution ;
4) Le cas échéant, PROCESSOR requiert d'accéder auxdites données déjà créées ou en crée/les met à jour et demande de les stocker, ou en supprime, et
5) CMMU accède et décrypte / chiffre et mémorise lesdites données ;
6) Le cas échéant, PROCESSOR prépare un message à émettre, et
7) CMMU y insère le haché dudit programme en exécution et sa signature au moyen la clé secrète et émet le message.

En référence à la **Figure 23****,** l'unité CMMU d'un body SoC est apte à recevoir des WM émis
- par exécution d'un programme WP, ou
- par l'utilisateur sur un terminal auquel le body SoC est couplé, ou encore par un autre dispositif (messages « Quasi-WM »),
messages qui dans les deux cas comprennent l'adresse du WN destinataire et le haché #WP du programme à exécuter dans le cadre de ce WN.

Lors de la réception d'un WM et pour chaque transaction de transfert de tags reçue (cf. plus bas la section « GuardWN, GuardTx et GuardedTx »), l'unité CMMU du body SoC est avantageusement apte à vérifier les intersections requises d'ensembles de noeuds miroirs décrits plus haut.

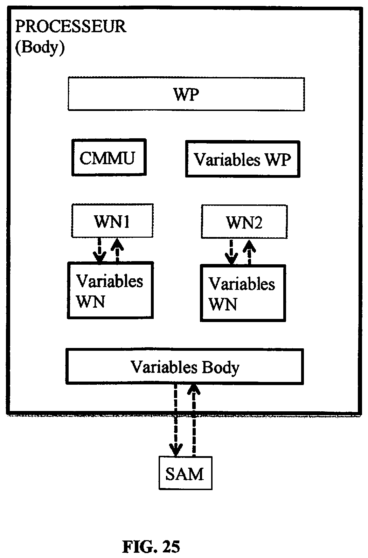

Enfin, en référence à la **Figure 25****,** le CMMU gère les données provenant du ou des capteurs d'un SAM, ces données pouvant être partagées par différents WN et par différents WP d'un WN. La figure ci-dessous présente schématiquement un hard WN (Body Enclave ou SoC) et met en évidence le fait qu'il gère ses données de capteurs/actionneurs indépendamment, ces données étant partagées par les différents WN réels hébergés (et ces données étant transmises à ses miroirs).

### Body SoC et Body enclaves miroirs

En ce qui concerne les contraintes sur les noeuds miroirs décrites notamment aux sections « WN Miroirs » et « Tags », les « hard WN » peuvent maintenant être constitués
- soit par des body SoC,
- soit par des body enclaves,
et, conformément à ce qui a été décrit plus haut, la sécurisation d'un réseau de noeuds aptes à exécuter des programmes WP en réponse à la réception de messages WM comprend, avantageusement, les deux architectures suivantes en combinaison :
- au niveau de chaque noeud body SoC ou enclave, les WP sont chiffrés et le noeud en question (respectivement son unité CMMU ou son programme racine WNRoT) accède à ces programmes chiffrés sur la base de hachés de ces programmes (#WP), contenus dans les messages entrants,
- au niveau de chaque noeud body SoC ou enclave, une architecture de détermination de noeuds contresignataires (body SoC ou enclave), de duplication des messages de/vers les noeuds contresignataires, et de détermination du caractère identique des messages reçus.

Plus précisément, en ce qui concerne la deuxième architecture, dans le réseau de noeuds body SoC et body enclaves, les noeuds étant susceptibles d'affecter les uns pour les autres des poids de connexion différents, au niveau de chaque noeud :
- est affecté au noeud en question, sur la base des valeurs de poids de connexion, au moins un noeud contresignataire ayant vis-à-vis de lui un poids de connexion supérieur à un seuil,
- est maintenue une liste de noeuds contresignataires de noeuds susceptibles de recevoir des messages à partir du noeud en question, chaque noeud et ses noeuds contresignataires formant un ensemble de noeuds miroirs et
lorsqu'un message doit être envoyé par un noeud émetteur à un noeud destinataire, ce message est envoyé (en redondance) par au moins certains des noeuds miroirs du noeud émetteur vers au moins certains des noeuds miroirs du noeud destinataire, et le noeud destinataire ne valide le message que seulement si :
- les ensembles respectifs de noeuds miroirs des noeuds émetteur et destinataire ont une intersection dont le nombre d'éléments est supérieur à un seuil donné et si
- le noeud destinataire a reçu ce même message (en redondance) de la part d'au moins une fraction donnée desdits noeuds miroirs appartenant à cette intersection.

En outre, lorsque le message en question comporte une transaction de transfert de tag (d'unités de valeur) le noeud destinataire ne valide le message que (comme décrit ci-après) seulement si les ensembles respectifs de noeuds miroirs d'au moins certains des guardWN des tags en questions et du noeud destinataire ont une intersection dont le nombre d'éléments (étant Body SoC ou enclave) est supérieur à un seuil donné.

On va maintenant décrire le procédé de sécurisation de noeuds body SoC et body enclave par des guardWN.

### GuardWN, GuardTx et GuardedTx

Cet aspect de l'invention vise à ce que, pour une transaction (transaction de transfert de tags tels que des BTC) transmise dans un message WM à un noeud WN destinataire, il suffise que certaines *feuilles* de l'arbre amont de cette transaction (uptree) aient un certain nombre de noeuds miroirs en commun avec ledit noeud WN destinataire pour que ce dernier accepte ce WM.

### Définitions (certaines sont des rappels ou des compléments de définitions) :

*Value tag* (ou « tag ») : Donnée (telle qu'un certain montant de BTC) représentant un certain montant d'unités de compte d'un certain type. A un tag est associé un « uptree ». *Transaction* (ou « tx ») : Transfert de tags à partir d'au moins un WN amont vers au moins un WN aval (sauf pour les « génération tx » qui sont créées ex-nihilo et n'ont pas d'amont). Les tags en entrée proviennent de tx amonts (sauf pour les génération tx) et les tags en sortie sont destinés à des WN bénéficiaires (ou autres types de signataires), qui peuvent notamment être en multi-signatures (« n-of-m multisig »). Une tx a ainsi des tags associés respectivement à ses entrées (input) et à ses sorties (output), le total des montants des tags associés aux inputs étant égal au total des montants des tags associés aux outputs (sauf pour les génération tx). On considère ici que, comme dans Bitcoin, chaque input se réfère à un et un seul output d'une tx amont.
*Génération tx :* Tx n'ayant aucun input.

*Uptree* (ou « upstream tree », ou encore « provenance tree ») : Ensemble (structuré en arbre) composé d'une tx donnée considérée et des tx alimentant cette dernière ; arbre dont le noeud racine est ladite tx donnée considérée et dans lequel, pour chaque noeud de l'arbre, les tx amonts d'un noeud (c'est-à-dire les tx dont des outputs alimentent les inputs de ce noeud) sont ses noeuds enfants. Les feuilles (transactions les plus amont) d'un uptree sont appelés « guardTx ».

*Dtree* (ou « downstream tree », ou encore « distribution tree ») : Ensemble (structuré en arbre) composé d'une tx donnée considérée et des tx alimentées par cette dernière ; arbre dont le noeud racine est ladite tx donnée considérée et dans lequel, pour chaque noeud de l'arbre, les tx avals d'un noeud (c'est-à-dire les tx dont des inputs sont alimentés par les outputs de ce noeud) sont ses noeuds enfants.

*GuardTx* (ou « tx entrante ») : Tx alimentée par une tx considérée (par son bénéficiaire et par les bénéficiaires à l'aval) comme étant insérée/confirmée dans une blockchain ou générée ex-nihilo (génération tx). Le WN générant une guardTx est appelé « guardWN ». Le dtree d'un guardTx est composé de tx appelées « guardedTx ».

*GuardWN* : WN ayant généré un guardTx considéré (dont chaque tx du dtree, y compris la guardTx elle-même, l'ont comme signataire associé à tous les outputs - d'où le nom de « guardedTx » qui leur sont donné). On dit que le guardWN « garde » un guardTx et les guardedTx de la dtree de cette guardTx.

*Tx gardée par un guardWN donné* : Tx dont ledit guardWN donné est un signataire sur tous les outputs. *GuardedTx* : Tx dont :
- au moins l'un des signataires (sur un input) est un guardWN ;
- à chacun des outputs (il peut y avoir un ou plusieurs outputs) est associé :
   o soit seul ledit guardWN,
   o soit un multisig dont l'un des signataires est ledit guardWN,
- ledit guardWN garantissant que les tx à l'aval (qui sont alimentées par ces outputs) sont elles aussi des guardedTx gardées par ledit guardWN.

On comprend que ce modèle implique que si un guardWN est de confiance, toutes les tx de sa dtree sont de confiance.

On propose ainsi que le WN destinataire d'un WM transmettant une tx donnée ne l'accepte directement qu'à la condition qu'il ait des noeuds miroirs (body SoC ou enclaves) en commun avec les guardWN gardant cette tx. Dans le cas contraire le WN destinataire a l'option de provoquer l'insertion des tx de la uptree dans la blockchain (après leurs remplacements pour simplification et ajouts de transaction fees, comme décrit plus haut) ou d'utiliser un canal de paiement (sur un protocole tel que Lightning Network).

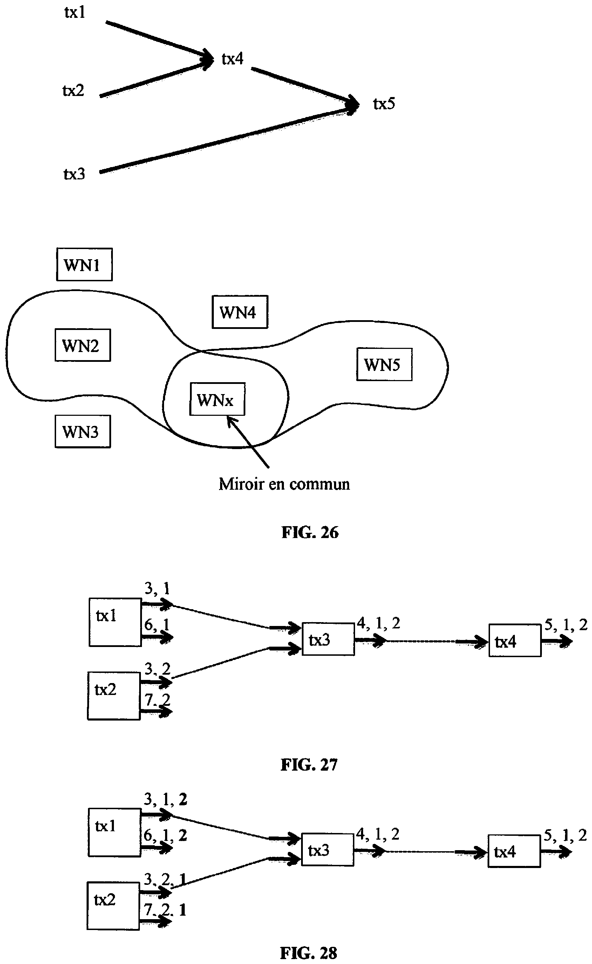

La **Figure 26** illustre un exemple simplifié avec un arbre *uptree* de cinq transactions tx1 à tx5, et l'existence d'un miroir (WNx) en commun entre un GuardWN - WN2 - ayant généré la transaction tx2 et le WN - WN5 - générant la transaction la plus en aval tx5. Dans cet exemple, WN5 peut accepter tx4 dans la mesure où il a un certain nombre (selon des paramètres de configuration) de miroirs WNx (Body SoC ou enclave) en commun avec les GuardWN WN1, WN2 et WN3 (ou avec seulement certains d'entre eux, dans la mesure des ajouts de signataires collatéraux effectués, voir la description ci-après).

La **Figure 27** montre des transactions tx1, tx2, tx3 et tx4 qui sont respectivement générés par des WN « 1 », « 2 », « 3 » et « 4 ». Ici tx1 et tx2 sont des guardWN. Les chiffres sur leurs outputs représentent les WN dont les signatures respectives sont requises sur les inputs que ces outputs alimentent. Ainsi, le premier output de Tx1 requiert une signature du WN 3 ainsi que la signature du guardWN 1, et ainsi de suite.

Ici, tx3 et tx4, en tant que guardedTx, doivent reproduire sur leurs outputs respectifs le fait de requérir les signatures 1 et 2 sur les inputs des transactions subséquentes qu'elles alimentent. C'est ainsi que les signatures requises de guardWN se propagent de proche en proche vers l'aval - par exemple, tx3 exige que tx4 soit signée par les guardWN 1 et 2, et ces derniers (ainsi que leurs miroirs « hard WN », en redondance pour plus de fiabilité) ne vont signer tx4 que si cette exigence est repropagée vers les transactions subséquentes, et ainsi de suite de proche en proche. Toute la dtree à partir de chaque guardWN est ainsi sécurisé.

### Procédé d'ajout des signataires collatéraux

Selon le procédé de cet aspect de l'invention, lors de la génération d'une guardedTx dont des inputs sont alimentés par des tx amonts gardées par des guardWN différents, tous les outputs de cette guardedTx sont générés comme étant des multisigs dont les signataires incluent ces guardWN différents (WN colatéraux).

Dans ce cas de figure, il est avantageux de combiner des branches de la uptree pour offrir aux WN à l'aval des options en « OU » plutôt que des conditions en « ET » de guardWN (avec lesquels il est nécessaire d'avoir des noeuds miroirs en commun).

Définition de « guardWN collatéraux » : ce sont des noeuds étant des guardWN signataires respectifs requis par des outputs de transactions alimentant en commun une même transaction aval.

Il est ainsi avantageux d'ajouter aux signataires requis les guardWN collatéraux. Plus précisément : Lors de la génération d'un guardedTx dont des inputs sont alimentés par des tx amonts gardées par des guardWN différents (collatéraux), lesdites tx sont *remplacées* par des tx gardées (sur tous leurs outputs) par l'ensemble de ces guardWN différents (en les complétant de part et d'autre), et ce procédé se poursuit de proche en proche vers l'amont, jusqu'aux feuilles de la uptree (les guardTx).

En référence à la figure précédente, les guardWN 1 et 2 sont (par définition) collatéraux du fait qu'ils alimentent une même transaction (tx3).

La **Figure 28** montre le résultat de l'application du procédé (d'ajout des signataires collatéraux en remplaçant les transactions amont en question) pour l'exemple de la figure précédente. On voit que la signature du guardWN 2 (en gras) est maintenant également requise sur l'input alimenté par tx1 et la signature du GuardWN 1 est maintenant également requise sur l'input alimenté par tx2.

Comme le remplacement en question revient à ajouter lesdites requêtes de signatures de guardWN collatéraux sur *tous* les outputs des transactions en question (tx1 et tx2), le deuxième output de tx1 requiert maintenant la signature du guardWN 2 également, et dans la mesure où maintenant 1 et 2 *conjointement* contrôlent la dtree de tx1, les WN à l'aval n'auront pas à avoir des miroirs communs avec 1 *et* avec 2, mais avec 1 *ou* avec 2. (Evidemment, ce procédé ne peut être appliqué un trop grand nombre de fois, mais sert à *réduire* le nombre de guardWN qui doivent être en miroir.)

### Plafonds variables de canaux de paiement

On connaît les canaux de paiement « multi-hop Layer 2 Network (on Bitcoin, Ethereum, etc.) » dont le plus abouti est aujourd'hui Lightning Network [https://lightning.network/lightning-network-paper.pdf] mis en oeuvre au moyen d'usage d'opérateurs multisig, « CheckLockTimeVerify », « CheckSequenceVerify » et d'un procédé très ingénieux d'échange de secrets pour de facto invalider une version précédente d'un ensemble de transactions. Comme déjà décrit à la section « *Transactions Bitcoin off-chain* » de telles transactions off-chain peuvent être générées par WN, avec l'avantage qu'elles ne seront pas dévoilées (blindness), l'ensemble du procédé présentant une confiance accrue, la blockchain servant de dernier recours en cas de tampering de WN.

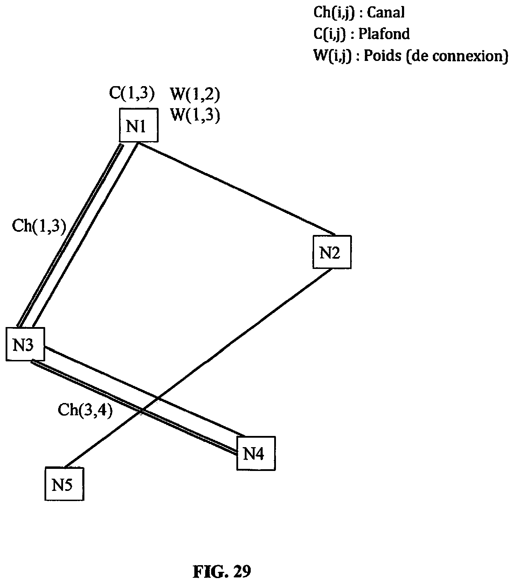

La **Figure 29** présente schématiquement des noeuds s'échangeant des unités de comptes par des transactions sans broadcast obligatoire via des canaux de paiement entre nœuds, chaque noeud disposant d'un canal (Ch(i,j)) avec un autre noeud possédant un *plafond* (C(i,j)) d'unités de compte transférables par ce canal sans nécessiter de broadcast. Un transfert d'unités de compte entre deux noeuds peut être effectué via une chaîne de noeuds ayant deux à deux un canal de paiement. Les noeuds possèdent des poids de connexion (W(i,j)) vis-à-vis d'autres noeuds, représentatifs d'un degré de confiance ou de proximité entre les noeuds ou des utilisateurs associés aux noeuds. Les plafonds d'unités de compte d'un nœud donné sur un canal donné (dépôts effectués lors de l'établissement du canal) sont ici ajustés (augmentés) en fonction d'un poids de connexion dudit noeud vis-à-vis du noeud avec lequel il possède ledit canal donné. Le poids d'un noeud vis-à-vis d'un autre noeud est typiquement déterminé en fonction de l'existence de connexions réelles (IRL Connections) ou quasiréelles dans l'entourage de ce dernier.

Bien entendu la présente invention n'est pas limitée aux formes réalisations et aspects sus-décrits. En outre il saura à l'aide de ses connaissances générales combiner toutes formes de réalisations et autres aspects susceptibles de donner lieu à des avantages particuliers.

## Revendications

1. Processeur sécurisé (SoC ; enclave), **caractérisé en ce qu'**il est apte à héberger une pluralité de noeuds de portefeuille, WN, d'un réseau, et **en ce qu'**il comprend une unité de gestion cryptographique de mémoire avec chiffrement (CMMU) apte à assurer une exécution sécurisée de programmes, dans lequel :
• dans l'unité CMMU est mémorisée (ou dynamiquement régénérée) de façon inaccessible autrement que par l'unité CMMU une clé secrète de chiffrement de programmes,
• l'unité CMMU est apte à mémoriser au moins un programme à exécuter après chiffrement par l'unité CMMU à l'aide de ladite clé secrète et à générer un haché du ou de chaque programme permettant de retrouver le programme chiffré,
• ledit processeur n'est apte à exécuter des programmes que sur commande de l'unité CMMU,
• les interactions entre noeuds du réseau s'effectuent exclusivement par messages et les messages sont reçus/émis par l'unité CMMU exclusivement,
• les messages comprennent l'identification d'un WN destinataire hébergé dans le processeur et l'identification d'un certain programme de portefeuille, WP, à exécuter par le WN destinataire, identifié par son haché,
• en réponse à la réception d'un message par le processeur sécurisé :
le processeur s'initialise en tant que WN destinataire et l'unité CMMU (i) accède au programme chiffré à exécuter par ce WN à partir du haché du programme reçu dans le message, (ii) déchiffre les instructions du programme, et (iii) transmet au processeur pour exécuter les instructions déchiffrées sur lesdites données reçues,
• préalablement à l'émission d'un message par le processeur sécurisé, l'unité CMMU insère dans celui-ci le haché du programme en cours d'exécution,
le processeur mémorisant pour chaque WN hébergé une paire de clés destinées à la signature de contenus de messages générés par ledit WN à l'aide de la clé privée de ladite paire, et
lors de sa mémorisation, chaque programme est chiffré avec une clé spécifique (§_{PK}Pᵢ) dérivée de ladite clé secrète et dudit haché du programme.

2. Processeur selon la revendication 1, dans lequel au moins un noeud WN hébergé dans ledit processeur constitue un noeud WN contresignataire d'un autre noeud WN au sein d'un groupe de noeuds WN miroirs, la paire de clés de ce noeud WN contresignataire étant identique aux paires de clés des autres noeuds WN dudit groupe.

3. Processeur selon l'une des revendications 1 et 2, **caractérisé en ce qu'**il est apte à mémoriser des variables de processeur, des variables de noeud WN et des variables de programme WP de façon séparée les unes des autres.

4. Processeur selon l'une des revendications 1 à 3, **caractérisé en ce qu'**il est associé à un module de capteurs et/ou d'actionneurs (SAM), et **en ce que** les variables de processeur comprennent des données d'actionnement ou de capteur associées audit module, accessibles par au moins deux noeuds WN.

5. Processeur selon l'une des revendications 1 à 4, **caractérisé en ce que** l'unité CMMU accède audit programme chiffré(WP) à exécuter par le processeur sécurisé et le fournit audit processeur sécurisé bloc d'instructions par bloc d'instructions.

## Patentansprüche

1. Gesicherter Prozessor (SoC; Enklave), **dadurch gekennzeichnet, dass** er geeignet ist, eine Vielzahl von Wallet-Knoten, WN, eines Netzwerks aufzunehmen, und dass er eine Einheit zum kryptographischen Verwalten eines Speichers mit Verschlüsselung (CMMU) umfasst, die geeignet ist, eine gesicherte Ausführung von Programmen zu gewährleisten, wobei:
• in der CMMU-Einheit ein geheimer Schlüssel zum Verschlüsseln von Programmen so gespeichert (oder dynamisch regeneriert) ist, dass er außer durch die CMMU-Einheit nicht zugänglich ist,
• die CMMU-Einheit geeignet ist, mindestens ein Programm zu speichern, das nach der Verschlüsselung durch die CMMU-Einheit mittels des geheimen Schlüssels ausgeführt werden soll, und einen Hash des oder jedes Programms zu erzeugen, der es ermöglicht, das verschlüsselte Programm wiederzufinden,
• der Prozessor geeignet ist, Programme nur auf Befehl der CMMU-Einheit auszuführen,
• die Interaktionen zwischen Knoten des Netzwerks ausschließlich über Nachrichten erfolgen und die Nachrichten ausschließlich durch die CMMU-Einheit empfangen/gesendet werden,
• die Nachrichten die Identifikation eines Ziel-WNs, der in dem Prozessor aufgenommen ist, und die Identifikation eines bestimmten Wallet-Programms, WP, umfasst, das durch den Ziel-WN ausgeführt werden soll, das durch seinen Hash identifiziert wird,
• als Reaktion auf das Empfangen einer Nachricht durch den gesicherten Prozessor:
sich der Prozessor als Ziel-WN initialisiert und die CMMU-Einheit (i) auf das verschlüsselte Programm, das durch diesen WN ausgeführt werden soll, aus dem Hash des Programms zugreift, der in der Nachricht empfangen wird, (ii) die Programmanweisungen entschlüsselt und (iii) dem Prozessor zum Ausführen der entschlüsselten Anweisungen zu den empfangenen Daten überträgt,
• vor dem Senden einer Nachricht durch den gesicherten Prozessor, die CMMU-Einheit in diese den Hash des Programms im Laufe der Ausführung eingibt,
wobei der Prozessor für jeden aufgenommenen WN ein Paar von Schlüsseln speichert, die für die Signatur von Inhalten von Nachrichten bestimmt sind, die durch den WN mittels des privaten Schlüssels des Paars erzeugt werden, und bei seiner Speicherung jedes Programm mit einem spezifischen Schlüssel (§_{PK}Pᵢ) verschlüsselt wird, der aus dem geheimen Schlüssel und dem Hash des Programms abgeleitet wird.

2. Prozessor nach Anspruch 1, wobei mindestens ein WN-Knoten, der in dem Prozessor aufgenommen ist, einen Gegenzeichner-WN-Knoten eines anderen WN-Knotens innerhalb einer Gruppe von Spiegel-WN-Knoten bildet, wobei das Paar von Schlüsseln dieses Gegenzeichner-WN-Knotens identisch mit den Paaren von Schlüsseln der anderen WN-Knoten der Gruppe ist.

3. Prozessor nach einem der Ansprüche 1 bis 2,
**dadurch gekennzeichnet, dass** er geeignet ist, Variablen des Prozessors, Variablen des WN-Knotens und Variablen des WP-Programms voneinander getrennt zu speichern.

4. Prozessor nach einem der Ansprüche 1 bis 3,
**dadurch gekennzeichnet, dass** er einem Modul von Sensoren und/oder Aktoren (SAM) zugeordnet ist, und dass die Variablen des Prozessors Aktivierungs- oder Sensordaten umfassen, die dem Modul zugeordnet sind, die über mindestens zwei WN-Knoten zugänglich sind.

5. Prozessor nach einem der Ansprüche 1 bis 4,
**dadurch gekennzeichnet, dass** die CMMU-Einheit auf das verschlüsselte Programm (WP) zugreift, das durch den Prozessor ausgeführt werden soll, und dem gesicherten Prozessor Anweisungsblock für Anweisungsblock bereitstellt.

## Claims

1. Secure processor (SoC ; enclave), **characterized in that** it is capable of hosting a plurality of wallet nodes, WN, of a network, and **in that** it comprises a cryptographic memory management unit (CMMU) with encryption, which is capable of ensuring a secure execution of programs:
• a secret program encryption key being stored (or dynamically regenerated) in the CMMU unit inaccessibly other than by the CMMU unit,
• the CMMU unit being capable of storing at least one program to be executed after encryption by the CMMU unit using the secret key and of generating a hash of the or each program, making it possible to retrieve the encrypted program,
• the processor being capable of executing programs only on the command of the CMMU unit,
• the interactions between nodes of the network being carried out exclusively by messages and the messages being received/transmitted by the CMMU unit exclusively,
• the messages comprising the identification of a receiving WN which is hosted in the processor and the identification of a particular wallet program, WP, which is to be executed by the receiving WN and is identified by its hash,
• in response to receiving a message by the secure processor:
the processor initializing as the receiving WN and the CMMU unit (i) accessing the encrypted program to be executed by this WN from the hash of the program received in the message, (ii) decrypting the program instructions, and (iii) transmitting to the processor to execute the decrypted instructions on the received data,
• prior to sending a message by the secure processor, the CMMU unit inserting into it the hash of the program being executed,
the processor storing for each hosted WN a pair of keys for signing content of messages generated by the WN using the private key of the pair, and during its storage, each program being encrypted with a specific key (§_{PK}Pᵢ) derived from the secret key and the hash of the program.

2. Processor according to claim 1, wherein at least one WN node which is hosted in the processor constitutes a countersign WN node of another WN node within a group of mirror WN nodes, the pair of keys of this countersign WN node being identical to the pairs of keys of the other WN nodes of the group.

3. Processor according to either of claims 1 and 2, **characterized in that** it is capable of storing processor variables, WN node variables and WP program variables separately from one another.

4. Processor according to any of claims 1 to 3, **characterized in that** it is associated with a sensor and/or actuator module (SAM), and **in that** the processor variables comprise actuation or sensor data which are associated with the module and are accessible by at least two WN nodes.

5. Processor according to any of claims 1 to 4, **characterized in that** the CMMU unit accesses the encrypted program (WP) to be executed by the secure processor and provides it to the secure processor instruction block by instruction block.
